(19)

**Europäisches Patentamt**
**European Patent Office**
**Office européen des brevets**

(11) **EP 3 644 608 B1**

(12) **EUROPEAN PATENT SPECIFICATION**

(45) Date of publication and mention
of the grant of the patent:
**18.09.2024 Bulletin 2024/38**

(21) Application number: **17917349.7**

(22) Date of filing: **11.07.2017**

(51) International Patent Classification (IPC):
*H04N 19/44* (2014.01)       *H04N 19/52* (2014.01)
*H04N 19/159* (2014.01)      *H04N 19/109* (2014.01)
*H04N 19/573* (2014.01)      *H04N 19/577* (2014.01)

(52) Cooperative Patent Classification (CPC):
**H04N 19/44; H04N 19/109; H04N 19/159;**
**H04N 19/52; H04N 19/573; H04N 19/577**

(86) International application number:
**PCT/CN2017/092514**

(87) International publication number:
**WO 2019/010634 (17.01.2019 Gazette 2019/03)**

(54) **ENCODING AND DECODING METHODS AND APPARATUS BASED ON TEMPLATE MATCHING**

VERFAHREN UND VORRICHTUNGEN ZUR ENCODIERUNG UND DECODIERUNG BASIEREND
AUF VORLAGENABGLEICH

PROCÉDÉS ET APPAREILS D'ENCODAGE ET DE DÉCODAGE BASÉS SUR LA MISE EN
CORRESPONDANCE DE MODÈLES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**29.04.2020 Bulletin 2020/18**

(73) Proprietor: **Huawei Technologies Co., Ltd.**
**Shenzhen, Guangdong 518129 (CN)**

(72) Inventors:
• **ZHU, Ce**
**Chengdu**
**Sichuan 611731 (CN)**
• **SONG, Shichang**
**Chengdu**
**Sichuan 611731 (CN)**
• **LIN, Yongbing**
**Shenzhen**
**Guangdong 518129 (CN)**
• **MAO, Min**
**Chengdu**
**Sichuan 611731 (CN)**
• **ZHENG, Jianhua**
**Shenzhen**
**Guangdong 518129 (CN)**

• **CAO, Xiaoqiang**
**Chengdu**
**Sichuan 611731 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2017/036414      CN-A- 102 067 601**
**CN-A- 102 668 562      US-A1- 2012 201 295**
**US-A1- 2016 286 229      US-B2- 8 995 527**

• **CHEN X ET AL: "EE3: Decoder-Side Motion**
**Vector Refinement Based on Bilateral Template**
**Matching", 5. JVET MEETING; 12-1-2017 -**
**20-1-2017; GENEVA; (THE JOINT VIDEO**
**EXPLORATION TEAM OF ISO/IEC**
**JTC1/SC29/WG11 AND ITU-T SG.16 ); URL:**
**HTTP://PHENIX.INT-EVRY.FR/JVET/,, no.**
**JVET-E0052, 3 January 2017 (2017-01-03),**
**XP030150528**

EP 3 644 608 B1

**Description**

**TECHNICAL FIELD**

The present invention relates to the field of video picture technologies, and in particular, to a decoding method and apparatus based on template matching and an encoding method and apparatus based on template matching.

**BACKGROUND**

Statistically, videos are media whose data volume is largest currently on the Internet. Video encoding technologies greatly improve a speed and quality of video transmission. The video encoding technologies are key technologies in applications such as a digital television, a digital live system, a wireless broadcast system, a personal digital assistant (PDA), a laptop or desktop computer, a tablet computer, an ebook reader, a digital camera, a digital recording apparatus, a digital media player, a video game apparatus, a video game console, a cellular or satellite radio telephone, a video conferencing apparatus, and a video flow apparatus. The video encoding technologies may be, for example, video encoding technologies that are described in standards defined by the MPEG-2 standard, the MPEG-4 standard, the ITU-T H.263 standard, the ITU-T H.264/MPEG-4 part 10 advanced video coding (AVC) standard, the ITU-T H.265 high efficiency video coding (HEVC) standard, and the H.266 standard, and in extension parts of the foregoing standards.

Inter-frame template matching (Template Matching, TM) is an important inter-frame prediction technology in the field of video encoding. Because the technology does not need to transmit additional motion information (which includes a motion vector, a reference frame index and the like, and usually includes two groups of motion information for bidirectional prediction), to bring about relatively large encoding performance to an encoder, the technology is a widely researched prediction technology. In a template matching technology, a motion information list is first established (two motion information lists are established for bidirectional prediction), motion information in the motion information list is used as initial motion information of a current block, and the motion information in the list is separately used as candidate motion information of the current picture block, a template distortion of the current picture block corresponding to the candidate motion information is calculated, then candidate motion information for which a template distortion is minimum is selected as initial motion information of the current picture block, and then refined search for a motion vector is performed based on the initial motion information. The process includes: performing search matching between a template of the current picture block and a template of a surrounding picture block of a picture block in a reference frame to which the initial motion information points, where the surrounding picture block may intersect, be neighboring to, or be not neighboring to the picture block in the reference frame to which the initial motion information points; and finding a picture block, where a template distortion between the picture block and the current picture block is minimum, and a motion vector between the picture block and the current picture block is a motion vector of the current picture block. In bidirectional prediction, a template distortion is a template distortion between a template of a current picture block and a weighted sum template, and the weighted sum template is a weighted sum of templates of two picture blocks obtained based on two motion information lists. In unidirectional prediction, a template distortion is a template distortion between a template of a current picture block and a template of a picture block obtained based on a motion information list.

In some inter-frame prediction technologies, one template distortion is obtained by performing refined search based on bidirectional prediction, two template distortions are obtained by respectively performing refined search based on two motion information lists corresponding to the bidirectional prediction, and then the three template distortions are compared, thereby determining whether to perform encoding and decoding based on the bidirectional prediction or perform encoding and decoding based on one of the two motion information lists. However, in the inter-frame prediction technologies, when a prediction direction is determined, a template distortion cannot accurately reflect an actual distortion of a current picture block sometimes. Moreover, steps performed on an encoder side are the same as those performed on a decoder side. Consequently, computational complexity is relatively high for the decoder side.

CHEN X ET AL: "EE3: Decoder-Side Motion Vector Refinement Based on Bilateral Template Matching", 5. JVET MEETING; 12-1-2017 - 20-1-2017; GENEVA; (THE JOINT VIDEO EXPLORATION TEAM OF ISO/IEC JTC1/SC29/WG11 AND ITU-T SG. 16 ); URL: HTTP://PHENIX.INT-EVRY.FR/JVET/,, no. JVET-E0052, 3 January 2017 discloses that the two motion vectors of the bi-prediction are further refined by a bilateral template matching process. The bilateral template matching performs a distortion-based search between a bilateral template and the reconstruction samples in the past decoded reference pictures in order to obtain a refined MV without the transmission of additional syntax element.

WO 2017/036414 A1 discloses a method and apparatus of video coding using decoder derived motion information based on bilateral matching or template matching. According to one method, an initial motion vector (MV) index is signalled in a video bitstream at an encoder side or determined from the video bitstream at a decoder side. A selected MV is then derived using bilateral matching, template matching or both to refine an initial MV associated with the initial MV index. In another method, when both MVs for list 0 and list 1 exist in template matching, the smallest-cost MV between the two MVs may be used for uni-prediction template matching if the cost is lower than the bi-prediction template matching. According to yet another method, the refinement of the MV search is dependent on the block size. According to yet another method, merge candidate MV pair is always used for bilateral matching or template matching.

US 8 995 527 B2 discloses video encoding and decoding techniques applicable to bi-directional prediction. For signaling from an encoder to a decoder a block type for a video block, an encoder can transmit to the decoder two or more separate syntax elements, where one of the two or more separate syntax elements identifies a partition size for the video block and another of the two or more separate syntax elements identifies a prediction direction for a partition of the video block. The separate syntax elements can be individually encoded and transmitted from the encoder to the decoder.

## SUMMARY

Embodiments of the present invention provide a decoding method and apparatus according to claims 1 and 3 and an encoding method and apparatus according to claims 2 and 4 to reduce computational complexity on a decoder side while improving decoding accuracy.

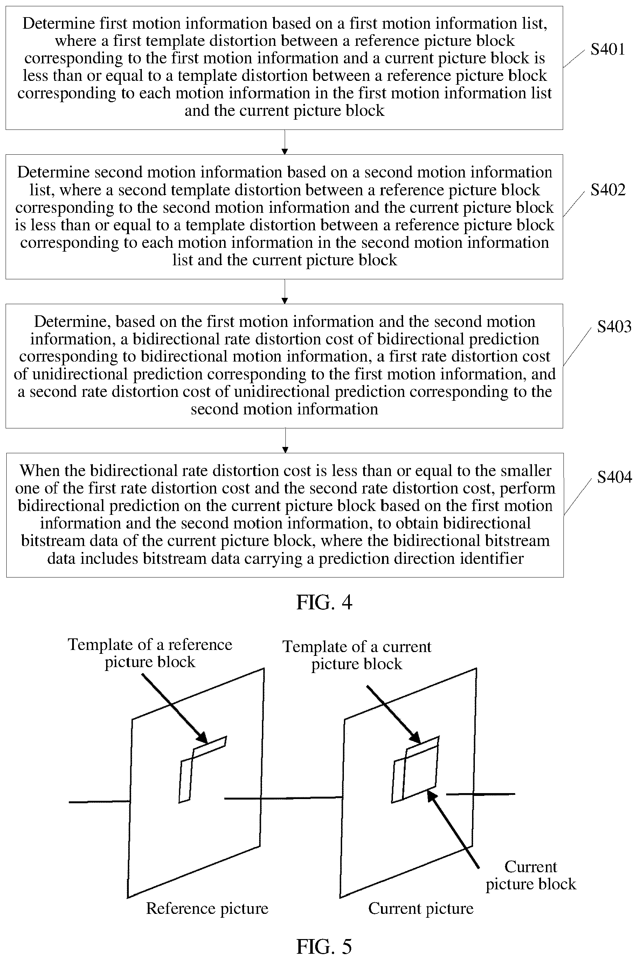

The present invention is defined in the independent claims. Enabling disclosure for the invention is found in the embodiment of Figures 4, 6 and 14. In the following, embodiments not covered by the claims shall be considered as examples helpful for understanding the invention.

The foregoing objective and other objectives are achieved according to characteristics in independent claims. Further implementations are embodied in dependent claims, the specification, and accompanying drawings.

1. Introduction of video encoding and decoding technologies

In the field of video encoding and decoding, a concept of a frame means an entire picture. After being formed into a video format frame by frame based on a particular sequence and frame rate, pictures may be played. When the frame rate reaches a particular rate, a time interval between two frames is less than a resolution limit of human eyes, a transient visual retention occurs, and therefore the pictures seem to be dynamically displayed on a screen. The basis on which a video file can be compressed is compression coding of a single-frame digital picture. A digitized picture has lots of repeatedly indicated information that is referred to as redundant information. An objective of video compression coding (or referred to as video coding) is to remove redundant information in a video sequence by using various technologies and methods, so as to reduce storage space and save transmission bandwidth.

As far as a current situation of current technical development is concerned, the video compression coding may mainly include intra-frame prediction, inter-frame prediction, transform quantization, entropy encoding, deblocking filtering processing, and the like. Within an international general range, existing video compression coding standards mainly include four compression coding manners: chrominance sampling, predictive coding, transform coding, and quantization coding.

Predictive coding: a currently to-be-encoded frame is predicted by using data information of a previously encoded frame. A predictor is obtained by performing prediction, the predictor is not completely equivalent to an actual value, and a residual exists between the predictor and the actual value. If the prediction is more appropriate, the predictor is closer to the actual value, and the residual is smaller. In this way, a data volume can be greatly reduced by encoding the residual. When decoding is performed on a decoder side, an initial picture is reconstructed by using the residual plus the predictor. This is a basic thinking method of the predictive coding. The predictive coding is divided into two basic types: intra-frame prediction and inter-frame prediction.

A first aspect of the present invention provides a decoding method based on template matching, including:

obtaining a prediction direction identifier and encoded data of a current picture block;
when a value of the prediction direction identifier indicates that the encoded data of the current picture block is obtained by performing bidirectional prediction on the current picture block based on a first motion information list of the current picture block and a second motion information list of the current picture block, determining first motion information based on the first motion information list, where a first template distortion between a reference picture block corresponding to the first motion information and the current picture block is less than or equal to a template distortion between a reference picture block corresponding to each motion information in the first motion information list and the current picture block; and determining second motion information based on the second motion information list, where a second template distortion between a reference picture block corresponding to the second motion information and the current picture block is less than or equal to a template distortion between a reference picture block corresponding to each motion information in the second motion information list and the current picture block; and obtaining a reconstructed picture block of the current picture block based on the first motion information, the second motion information, and the encoded data of the current picture block. Computational complexity of decoding can be reduced by adding an identifier to a bitstream.

The method may further include: determining the first motion information list and the second motion information list. Alternatively, the method may further include: when a value of the prediction direction identifier indicates that the encoded data of the current picture block is obtained by performing bidirectional prediction on the current picture block based on a first motion information list of the current picture block and a second motion information list of the current picture block, determining the first motion information list and the second motion information list.

A template distortion between a reference picture block and the current picture block indicates a difference between a template of the reference picture block and a template of the current picture block, so as to estimate a difference between the reference picture block and the current picture block.

With reference to the first aspect, in a first possible implementation of the first aspect, the method further includes:

when a value of the prediction direction identifier indicates that the encoded data of the current picture block is obtained by performing unidirectional prediction on the current picture block based on the first motion information list of the current picture block, obtaining a reconstructed picture block of the current picture block based on the first motion information list and the encoded data of the current picture block; or
when a value of the prediction direction identifier indicates that the encoded data of the current picture block is obtained by performing unidirectional prediction on the current picture block based on the second motion information list of the current picture block, obtaining a reconstructed picture block of the current picture block based on the second motion information list and the encoded data of the current picture block.

The method may further include: determining the first motion information list. Alternatively, the method may further include: when a value of the prediction direction identifier indicates that the encoded data of the current picture block is obtained by performing unidirectional prediction on the current picture block based on the first motion information list of the current picture block, determining the first motion information list.

The method may further include: determining the second motion information list. Alternatively, the method may further include: when a value of the prediction direction identifier indicates that the encoded data of the current picture block is obtained by performing unidirectional prediction on the current picture block based on the second motion information list of the current picture block, determining the second motion information list.

With reference to the first aspect, in a second possible implementation of the first aspect, the method further includes:

when a value of the prediction direction identifier indicates that the encoded data of the current picture block is obtained by performing unidirectional prediction on the current picture block based on the first motion information list of the current picture block or the second motion information list of the current picture block, determining first motion information based on the first motion information list, where a first template distortion between a reference picture block corresponding to the first motion information and the current picture block is less than or equal to a template distortion between a reference picture block corresponding to each motion information in the first motion information list and the current picture block;
determining second motion information based on the second motion information list, where a second template distortion between a reference picture block corresponding to the second motion information and the current picture block is less than or equal to a template distortion between a reference picture block corresponding to each motion information in the second motion information list and the current picture block; and
when the first template distortion is less than or equal to the second template distortion, obtaining a reconstructed picture block of the current picture block based on the first motion information and the encoded data of the current picture block; or when the first template distortion is greater than the second template distortion, obtaining a reconstructed picture block of the current picture block based on the second motion information and the encoded data of the current picture block. In this implementation, a quantity of bits occupied by an identifier is reduced compared with the first implementation, and computational complexity of decoding is reduced compared with the prior art.

The method may further include: determining the first motion information list and the second motion information list. Alternatively, the method may further include: when a value of the prediction direction identifier indicates that the encoded data of the current picture block is obtained by performing unidirectional prediction on the current picture block based on the first motion information list of the current picture block or the second motion information list of the current picture block, determining the first motion information list and the second motion information list.

With reference to any one of the first aspect or the foregoing implementations of the first aspect, in a third possible implementation of the first aspect, the prediction direction identifier is obtained only when a reference structure of a frame in which the current picture block is located is a non-low-delay reference structure. In this implementation, an implementation scenario is specified. In the implementation scenario, an implementation provided in the first aspect is used. Therefore, decoding efficiency can be increased and computational complexity of decoding can be reduced.

With reference to the third implementation of the first aspect, in a fourth possible implementation of the first aspect, the method further includes:

when the reference structure of the frame in which the current picture block is located is a low-delay reference structure,

determining first motion information based on the first motion information list of the current picture block, where a first template distortion between a reference picture block corresponding to the first motion information and the current picture block is less than or equal to a template distortion between a reference picture block corresponding to each motion information in the first motion information list and the current picture block;

determining second motion information based on the second motion information list, where a second template distortion between a reference picture block corresponding to the second motion information and the current picture block is less than or equal to a template distortion between a reference picture block corresponding to each motion information in the second motion information list and the current picture block;

determining, based on the first template distortion and the second template distortion, a bidirectional template distortion caused when bidirectional prediction is performed on the current picture block; and

when the bidirectional template distortion is less than or equal to a template distortion threshold, obtaining a reconstructed picture block of the current picture block based on the first motion information, the second motion information, and the encoded data of the current picture block, where the template distortion threshold is obtained based on the first template distortion and the second template distortion.

The method may further include: determining the first motion information list of the current picture block and the second motion information list of the current picture block.

The method may further include: when the bidirectional template distortion is greater than the template distortion threshold, and the first template distortion is less than or equal to the second template distortion, obtaining a reconstructed picture block of the current picture block based on the first motion information and the encoded data of the current picture block.

The method may further include: when the bidirectional template distortion is greater than the template distortion threshold, and the first template distortion is greater than the second template distortion, obtaining a reconstructed picture block of the current picture block based on the second motion information and the encoded data of the current picture block.

A second aspect of the present invention provides an encoding method, including:

determining first motion information based on a first motion information list of a current picture block, where a first template distortion between a reference picture block corresponding to the first motion information and the current picture block is less than or equal to a template distortion between a reference picture block corresponding to each motion information in the first motion information list and the current picture block;

determining second motion information based on a second motion information list of the current picture block, where a second template distortion between a reference picture block corresponding to the second motion information and the current picture block is less than or equal to a template distortion between a reference picture block corresponding to each motion information in the second motion information list and the current picture block;

determining, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information; and

when the bidirectional rate distortion cost is less than or equal to the smaller one of the first rate distortion cost and the second rate distortion cost, performing bidirectional prediction on the current picture block based on the first motion information and the second motion information, to obtain bidirectional bitstream data of the current picture block, where the bidirectional bitstream data includes bitstream data carrying a prediction direction identifier, and a value of the prediction direction identifier indicates that encoded data of the current picture block is obtained by performing bidirectional prediction on the current picture block based on the first motion information list and the second motion information list. Determining a prediction direction by comparing rate distortion costs is better than determining a prediction direction by comparing template distortions. Therefore, encoding efficiency is improved by using the method of the second aspect. Computational complexity of decoding can be reduced by adding an identifier to a bitstream, and decoding efficiency can be improved likewise.

The method may further include: determining the first motion information list of the current picture block and the second motion information list of the current picture block.

With reference to the second aspect, in a first possible implementation of the second aspect, the method further includes:

when the bidirectional rate distortion cost is greater than the smaller one of the first rate distortion cost and the second rate distortion cost and the first rate distortion cost is less than or equal to the second rate distortion cost, performing unidirectional prediction on the current picture block based on the first motion information, to obtain first bitstream data of the current picture block, where the first bitstream data includes bitstream data carrying a prediction direction identifier, and a value of the prediction direction identifier indicates that encoded data of the current picture block is obtained by performing unidirectional prediction on the current picture block based on the first motion information list; or

when the bidirectional rate distortion cost is greater than the smaller one of the first rate distortion cost and the second rate distortion cost and the first rate distortion cost is greater than the second rate distortion cost, performing unidirectional prediction on the current picture block based on the second motion information, to obtain second bitstream data of the current picture block, where the second bitstream data includes bitstream data carrying a prediction direction identifier, and a value of the prediction direction identifier indicates that encoded data of the current picture block is obtained by performing unidirectional prediction on the current picture block based on the second motion information list.

With reference to the second aspect or the first implementation of the second aspect, in a second possible implementation of the second aspect, the bidirectional rate distortion cost of bidirectional prediction corresponding to the bidirectional motion information, the first rate distortion cost of unidirectional prediction corresponding to the first motion information, and the second rate distortion cost of unidirectional prediction corresponding to the second motion information are determined based on the first motion information and the second motion information only when a reference structure of a frame in which the current picture block is located is a non-low-delay reference structure. In this implementation, an implementation scenario is specified. In the implementation scenario, an implementation provided in the second aspect is used. Therefore, decoding efficiency can be increased and computational complexity of decoding can be reduced.

With reference to the second implementation of the second aspect, in a third possible implementation of the second aspect, the method further includes:

when the bidirectional rate distortion cost is greater than the smaller one of the first rate distortion cost and the second rate distortion cost and the first template distortion is less than or equal to the second template distortion, performing unidirectional prediction on the current picture block based on the first motion information, to obtain first unidirectional bitstream data of the current picture block, where the first unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list; or

when the bidirectional rate distortion cost is greater than the smaller one of the first rate distortion cost and the second rate distortion cost and the first template distortion is greater than the second template distortion, performing unidirectional prediction on the current picture block based on the second motion information, to obtain second unidirectional bitstream data of the current picture block, where the second unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list. In this implementation, a quantity of bits is reduced compared with the first implementation, and encoding efficiency is improved compared with the prior art. Computational complexity of decoding is reduced by adding an identifier to a bitstream.

With reference to the second implementation of the second aspect or the third implementation of the second aspect, in a fourth possible implementation of the second aspect, the method further includes:

when the reference structure of the frame in which the current picture block is located is a low-delay reference structure, determining, based on the first template distortion and the second template distortion, a bidirectional template distortion caused when bidirectional prediction is performed on the current picture block; and

when the bidirectional template distortion is less than or equal to a template distortion threshold, performing bidirectional prediction on the current picture block based on the first motion information and the second motion information, to obtain the encoded data of the current picture block, where the template distortion threshold is obtained based on the first template distortion and the second template distortion. The method may further include: when the reference structure of the frame in which the current picture block is located is a low-delay reference structure, the bidirectional template distortion is greater than the template distortion threshold, and the first template distortion is less than or equal to the second template distortion, encoding the current picture block based on the first motion information, to obtain the encoded data of the current picture block.

The method may further include: when the reference structure of the frame in which the current picture block is located is a low-delay reference structure, the bidirectional template distortion is greater than the template distortion threshold, and the first template distortion is greater than the second template distortion, encoding the current picture block based on the second motion information, to obtain the encoded data of the current picture block.

With reference to any one of the second aspect or the foregoing implementations of the second aspect, in a fifth possible implementation of the second aspect, the determining first motion information based on the first motion information list includes: using motion information corresponding to a minimum one of template distortions between reference picture blocks corresponding to all motion information in the first motion information list and the current picture block as first initial motion information; and performing motion search in an area in which a reference picture block corresponding to the first initial motion information is located, to obtain the first motion information; and correspondingly, the determining second motion information based on the second motion information list includes: using motion information corresponding to a minimum one of template distortions between reference picture blocks corresponding to all motion information in the second motion information list and the current picture block as second initial motion information; and performing motion search in an area in which a reference picture block corresponding to the second initial motion information is located, to obtain the second motion information.

A third aspect of the present invention provides a decoding apparatus. The apparatus includes:

an obtaining unit, configured to obtain a prediction direction identifier and encoded data of a current picture block; and
a reconstruction unit, configured to: when a value of the prediction direction identifier indicates that the encoded data of the current picture block is obtained by performing bidirectional prediction on the current picture block based on a first motion information list of the current picture block and a second motion information list of the current picture block, determine first motion information based on the first motion information list, where a first template distortion between a reference picture block corresponding to the first motion information and the current picture block is less than or equal to a template distortion between a reference picture block corresponding to each motion information in the first motion information list and the current picture block; determine second motion information based on the second motion information list, where a second template distortion between a reference picture block corresponding to the second motion information and the current picture block is less than or equal to a template distortion between a reference picture block corresponding to each motion information in the second motion information list and the current picture block; and obtain a reconstructed picture block of the current picture block based on the first motion information, the second motion information, and the encoded data of the current picture block.

The reconstruction unit may be further configured to: determine the first motion information list of the current picture block and the second motion information list of the current picture block. Alternatively, the reconstruction unit may be further configured to: when a value of the prediction direction identifier indicates that the encoded data of the current picture block is obtained by performing bidirectional prediction on the current picture block based on a first motion information list of the current picture block and a second motion information list of the current picture block, determine the first motion information list of the current picture block and the second motion information list of the current picture block.

With reference to the third aspect, in a first possible implementation of the third aspect, the reconstruction unit is further configured to:

when a value of the prediction direction identifier indicates that the encoded data of the current picture block is obtained by performing unidirectional prediction on the current picture block based on the first motion information list of the current picture block, obtain a reconstructed picture block of the current picture block based on the first motion information list and the encoded data of the current picture block; or
the reconstruction unit is further configured to: when a value of the prediction direction identifier indicates that the encoded data of the current picture block is obtained by performing unidirectional prediction on the current picture block based on the second motion information list of the current picture block, obtain a reconstructed picture block of the current picture block based on the second motion information list and the encoded data of the current picture block.

The reconstruction unit may be further configured to: determine the first motion information list. Alternatively, the reconstruction unit may be further configured to: when a value of the prediction direction identifier indicates that the encoded data of the current picture block is obtained by performing unidirectional prediction on the current picture block based on the first motion information list of the current picture block, determine the first motion information list.

The reconstruction unit may be further configured to: determine the second motion information list. Alternatively, the reconstruction unit may be further configured to: when a value of the prediction direction identifier indicates that the encoded data of the current picture block is obtained by performing unidirectional prediction on the current picture block based on the second motion information list of the current picture block, determine the second motion information list.

With reference to the third aspect, in a second possible implementation of the third aspect, the reconstruction unit is further configured to:

when a value of the prediction direction identifier indicates that the encoded data of the current picture block is obtained by performing unidirectional prediction on the current picture block based on the first motion information list of the current picture block or the second motion information list of the current picture block, determine first motion information based on the first motion information list, where a first template distortion between a reference picture block corresponding to the first motion information and the current picture block is less than or equal to a template distortion between a reference picture block corresponding to each motion information in the first motion information list and the current picture block;

determine second motion information based on the second motion information list, where a second template distortion between a reference picture block corresponding to the second motion information and the current picture block is less than or equal to a template distortion between a reference picture block corresponding to each motion information in the second motion information list and the current picture block; and

when the first template distortion is less than or equal to the second template distortion, obtaining a reconstructed picture block of the current picture block based on the first motion information and the encoded data of the current picture block; or when the first template distortion is greater than the second template distortion, obtain a reconstructed picture block of the current picture block based on the second motion information and the encoded data of the current picture block. The reconstruction unit may be further configured to: determine the first motion information list of the current picture block and the second motion information list of the current picture block. Alternatively, the reconstruction unit may be further configured to: when a value of the prediction direction identifier indicates that the encoded data of the current picture block is obtained by performing unidirectional prediction on the current picture block based on the first motion information list of the current picture block or the second motion information list of the current picture block, determine the first motion information list of the current picture block and the second motion information list of the current picture block.

With reference to any one of the third aspect or the foregoing implementations of the third aspect, in a third possible implementation of the third aspect, the obtaining unit is configured to:

obtain the prediction direction identifier only when a reference structure of a frame in which the current picture block is located is a non-low-delay reference structure.

With reference to the third implementation of the third aspect, in a fourth possible implementation of the third aspect,

the reconstruction unit is further configured to:

when the reference structure of the frame in which the current picture block is located is a low-delay reference structure, determine first motion information based on the first motion information list of the current picture block, where a first template distortion between a reference picture block corresponding to the first motion information and the current picture block is less than or equal to a template distortion between a reference picture block corresponding to each motion information in the first motion information list and the current picture block;

determine second motion information based on the second motion information list of the current picture block, where a second template distortion between a reference picture block corresponding to the second motion information and the current picture block is less than or equal to a template distortion between a reference picture block corresponding to each motion information in the second motion information list and the current picture block;

determine, based on the first template distortion and the second template distortion, a bidirectional template distortion caused when bidirectional prediction is performed on the current picture block; and

when the bidirectional template distortion is less than or equal to a template distortion threshold, obtain a reconstructed picture block of the current picture block based on the first motion information, the second motion information, and the encoded data of the current picture block, where the template distortion threshold is obtained based on the first template distortion and the second template distortion.

The reconstruction unit may be further configured to: determine the first motion information list of the current picture block and the second motion information list of the current picture block.

The reconstruction unit may be further configured to: when the bidirectional template distortion is greater than the template distortion threshold, and the first template distortion is less than or equal to the second template distortion, obtain a reconstructed picture block of the current picture block based on the first motion information and the encoded data of the current picture block; or

when the bidirectional template distortion is greater than the template distortion threshold, and the first template distortion is greater than the second template distortion, obtain a reconstructed picture block of the current picture block based on the second motion information and the encoded data of the current picture block.

A fourth aspect of the present invention provides an encoding apparatus. The apparatus includes:

a matching unit, configured to determine first motion information based on a first motion information list of a current picture block, where a first template distortion between a reference picture block corresponding to the first motion information and the current picture block is less than or equal to a template distortion between a reference picture block corresponding to each motion information in the first motion information list and the current picture block; and determine second motion information based on a second motion information list of the current picture block, where a second template distortion between a reference picture block corresponding to the second motion information and the current picture block is less than or equal to a template distortion between a reference picture block corresponding to each motion information in the second motion information list and the current picture block;

a determining unit, configured to determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information; and

a prediction unit, configured to: when the bidirectional rate distortion cost is less than or equal to the smaller one of the first rate distortion cost and the second rate distortion cost, perform bidirectional prediction on the current picture block based on the first motion information and the second motion information, to obtain bidirectional bitstream data of the current picture block, where the bidirectional bitstream data includes bitstream data carrying a prediction direction identifier, and a value of the prediction direction identifier indicates that encoded data of the current picture block is obtained by performing bidirectional prediction on the current picture block based on the first motion information list and the second motion information list.

The determining unit may be further configured to: determine the first motion information list of the current picture block and the second motion information list of the current picture block.

With reference to the fourth aspect, in a first possible implementation of the fourth aspect, the prediction unit is further configured to:

when the bidirectional rate distortion cost is greater than the smaller one of the first rate distortion cost and the second rate distortion cost and the first rate distortion cost is less than or equal to the second rate distortion cost, perform unidirectional prediction on the current picture block based on the first motion information, to obtain first bitstream data of the current picture block, where the first bitstream data includes bitstream data carrying a prediction direction identifier, and a value of the prediction direction identifier indicates that encoded data of the current picture block is obtained by performing unidirectional prediction on the current picture block based on the first motion information list; or

when the bidirectional rate distortion cost is greater than the smaller one of the first rate distortion cost and the second rate distortion cost and the first rate distortion cost is greater than the second rate distortion cost, perform unidirectional prediction on the current picture block based on the second motion information, to obtain second bitstream data of the current picture block, where the second bitstream data includes bitstream data carrying a prediction direction identifier, and a value of the prediction direction identifier indicates that encoded data of the current picture block is obtained by performing unidirectional prediction on the current picture block based on the second motion information list.

With reference to the fourth aspect or the first implementation of the fourth aspect, in a second possible implementation of the fourth aspect, the determining unit is configured to:

determine the bidirectional rate distortion cost, the first rate distortion cost, and the second rate distortion cost based on the first motion information and the second motion information only when a reference structure of a frame in which the current picture block is located is a non-low-delay reference structure.

With reference to the second implementation of the fourth aspect, in a third possible implementation of the fourth aspect, the prediction unit is further configured to:

when the bidirectional rate distortion cost is greater than the smaller one of the first rate distortion cost and the second rate distortion cost and the first template distortion is less than or equal to the second template distortion, perform unidirectional prediction on the current picture block based on the first motion information, to obtain first unidirectional bitstream data of the current picture block, where the first unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list; or

when the bidirectional rate distortion cost is greater than the smaller one of the first rate distortion cost and the second rate distortion cost and the first template distortion is greater than the second template distortion, perform unidirectional prediction on the current picture block based on the second motion information, to obtain second unidirectional bitstream data of the current picture block, where the second unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list.

With reference to the second implementation of the fourth aspect or the third implementation of the fourth aspect, in a fourth possible implementation of the fourth aspect, the prediction unit is further configured to:

when the reference structure of the frame in which the current picture block is located is a low-delay reference structure, determine, based on the first template distortion and the second template distortion, a bidirectional template distortion caused when bidirectional prediction is performed on the current picture block; and

when the bidirectional template distortion is less than or equal to a template distortion threshold, perform bidirectional prediction on the current picture block based on the first motion information and the second motion information, to obtain the encoded data of the current picture block, where the template distortion threshold is obtained based on the first template distortion and the second template distortion.

The prediction unit may be further configured to: when the reference structure of the frame in which the current picture block is located is a low-delay reference structure, the bidirectional template distortion is greater than the template distortion threshold, and the first template distortion is less than or equal to the second template distortion, encode the current picture block based on the first motion information, to obtain the encoded data of the current picture block.

The prediction unit may be further configured to: when the reference structure of the frame in which the current picture block is located is a low-delay reference structure, the bidirectional template distortion is greater than the template distortion threshold, and the first template distortion is greater than the second template distortion, encode the current picture block based on the second motion information, to obtain the encoded data of the current picture block.

With reference to any one of the fourth aspect or the foregoing implementations of the fourth aspect, in a fifth possible implementation of the fourth aspect, the matching unit is configured to: use motion information corresponding to a minimum one of template distortions between reference picture blocks corresponding to all motion information in the first motion information list and the current picture block as first initial motion information; and perform motion search in an area in which a reference picture block corresponding to the first initial motion information is located, to obtain the first motion information; and

use motion information corresponding to a minimum one of template distortions between reference picture blocks corresponding to all motion information in the second motion information list and the current picture block as second initial motion information; and perform motion search in an area in which a reference picture block corresponding to the second initial motion information is located, to obtain the second motion information.

A fifth aspect of the present invention provides a decoding apparatus based on template matching, including: a memory and a processor, where

the memory is configured to store a set of executable code; and

the processor is configured to execute the executable code stored in the memory to perform any one of the first aspect or the first implementation to the fourth implementation of the first aspect.

A sixth aspect of the present invention provides an encoding apparatus based on template matching, including: a memory and a processor, where

the memory is configured to store a set of executable code; and

the processor is configured to execute the executable code stored in the memory to perform any one of the second aspect or the first implementation to the fifth implementation of the second aspect.

A seventh aspect of the present invention provides a storage medium. The storage medium stores executable code, and when the executable code is executed, any one of the first aspect or the first implementation to the fourth implementation of the first aspect may be performed.

An eighth aspect of the present invention provides a storage medium. The storage medium stores executable code, and when the executable code is executed, any one of the second aspect or the first implementation to the fifth implementation of the second aspect may be performed.

A ninth aspect of the present invention provides a computer program. The computer program may perform any one of the first aspect or the first implementation to the fourth implementation of the first aspect.

A tenth aspect of the present invention provides a computer program. The computer program may perform any one of the second aspect or the first implementation to the fifth implementation of the second aspect.

An eleventh aspect of the present invention provides a decoding method based on template matching, including:

> obtaining a prediction direction identifier of a current picture block and encoded data of the current picture block; and when a value of the prediction direction identifier indicates that the encoded data of the current picture block is obtained by performing bidirectional prediction on the current picture block based on reference pictures in a first reference picture list and reference pictures in a second reference picture list, performing template matching on the current picture block in the reference pictures in the first reference picture list, to obtain first motion information, and performing template matching on the current picture block in the reference pictures in the second reference picture list, to obtain second motion information; and obtaining a reconstructed picture block of the current picture block based on the first motion information, the second motion information, and the encoded data of the current picture block. Computational complexity of decoding can be reduced by adding an identifier to a bitstream.

With reference to the eleventh aspect, in a first possible implementation of the eleventh aspect, the method further includes:

> when a value of the prediction direction identifier indicates that the encoded data of the current picture block is obtained by performing unidirectional prediction on the current picture block based on the reference pictures in the first reference picture list, performing template matching on the current picture block in the reference pictures in the first reference picture list, to obtain first motion information, and obtaining a reconstructed picture block of the current picture block based on the first motion information and the encoded data of the current picture block; or
> when a value of the prediction direction identifier indicates that the encoded data of the current picture block is obtained by performing unidirectional prediction on the current picture block based on the reference pictures in the second reference picture list, performing template matching on the current picture block in the reference pictures in the second reference picture list, to obtain second motion information, and obtaining a reconstructed picture block of the current picture block based on the second motion information and the encoded data of the current picture block.

With reference to the eleventh aspect, in a second possible implementation of the eleventh aspect, the method further includes: when a value of the prediction direction identifier indicates that the encoded data of the current picture block is obtained by performing unidirectional prediction on the current picture block based on the reference pictures in the first reference picture list or the reference pictures in the second reference picture list, performing template matching on the current picture block in the reference pictures in the first reference picture list, to obtain first motion information, and performing template matching on the current picture block in the reference pictures in the second reference picture list, to obtain second motion information; and when a first template distortion between a reference picture block corresponding to the first motion information and the current picture block and a second template distortion between a reference picture block corresponding to the second motion information and the current picture block satisfy a first unidirectional template distortion condition, obtaining a reconstructed picture block of the current picture block based on the first motion information and the encoded data of the current picture block; or when the first template distortion and the second template distortion satisfy a second unidirectional template distortion condition, obtaining a reconstructed picture block of the current picture block based on the second motion information and the encoded data of the current picture block. In this implementation, a quantity of bits occupied by an identifier is reduced compared with the first implementation, and computational complexity of decoding is reduced compared with the prior art.

With reference to the second implementation of the eleventh aspect, in a third possible implementation of the eleventh aspect, the first unidirectional template distortion condition includes that the first template distortion is less than or equal to the second template distortion, and the second unidirectional template distortion condition includes that the first template distortion is greater than the second template distortion.

With reference to any one of the eleventh aspect and the foregoing implementations of the eleventh aspect, in a fourth possible implementation of the eleventh aspect, the prediction direction identifier is obtained only when a reference structure of a frame in which the current picture block is located is a non-low-delay reference structure. In this implementation, an implementation scenario is specified. In the implementation scenario, an implementation provided in the eleventh aspect is used. Therefore, decoding efficiency can be increased and computational complexity of decoding can be reduced.

With reference to the fourth implementation of the eleventh aspect, in a fifth possible implementation of the eleventh aspect, the method further includes: when the reference structure of the frame in which the current picture block is located is a low-delay reference structure, performing template matching on the current picture block in the reference pictures in the first reference picture list, to obtain first motion information, a template of a reference picture block corresponding to the first motion information, and a first template distortion between the reference picture block corresponding to the first motion information and the current picture block; and performing template matching on the current picture block in the reference pictures in the second reference picture list, to obtain second motion information, a template of a reference picture block corresponding to the second motion information, and a second template distortion between the reference picture block corresponding to the second motion information and the current picture block;

determining, based on the template of the reference picture block corresponding to the first motion information and the template of the reference picture block corresponding to the second motion information, a bidirectional template distortion caused when bidirectional prediction is performed on the current picture block; and
when the bidirectional template distortion, the first template distortion, and the second template distortion satisfy a bidirectional template distortion condition, obtaining a reconstructed picture block of the current picture block based on the first motion information, the second motion information, and the encoded data of the current picture block.

With reference to the fifth implementation of the eleventh aspect, in a sixth possible implementation of the eleventh aspect, the bidirectional template distortion condition includes that the bidirectional template distortion is less than or equal to a template distortion threshold, and the template distortion threshold may be obtained based on the first template distortion and the second template distortion.

A twelfth aspect of the present invention provides an encoding method based on template matching, including:

performing template matching on a current picture block in reference pictures in a first reference picture list, to obtain first motion information, and performing template matching on the current picture block in reference pictures in a second reference picture list, to obtain second motion information;
determining, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information; and
when the bidirectional rate distortion cost, the first rate distortion cost, and the second rate distortion cost satisfy a bidirectional rate distortion condition, performing bidirectional prediction on the current picture block based on the first motion information and the second motion information, to obtain bidirectional bitstream data of the current picture block, where the bidirectional bitstream data includes bitstream data carrying a prediction direction identifier, a value of the prediction direction identifier indicates that encoded data of the current picture block is obtained by performing bidirectional prediction based on the first reference picture list and the second reference picture list, and the bidirectional bitstream data includes the encoded data of the current picture block. Determining a prediction direction by comparing rate distortion costs is better than determining a prediction direction by comparing template distortions. Therefore, encoding efficiency is improved by using the method of the second aspect. Computational complexity of decoding can be reduced by adding an identifier to a bitstream, and decoding efficiency can be improved likewise.

With reference to the twelfth aspect, in a first possible implementation of the twelfth aspect, the method further includes:

when the bidirectional rate distortion cost, the first rate distortion cost, and the second rate distortion cost do not satisfy the bidirectional rate distortion condition, and the first rate distortion cost and the second rate distortion cost satisfy a first unidirectional rate distortion condition, performing unidirectional prediction on the current picture block based on the first motion information, to obtain first bitstream data of the current picture block, where the first bitstream data includes bitstream data carrying a prediction direction identifier, a value of the prediction direction identifier indicates that encoded data of the current picture block is obtained by performing unidirectional prediction on the current picture block based on the first reference picture list, and the first bitstream data includes the encoded data of the current picture block; or

when the bidirectional rate distortion cost, the first rate distortion cost, and the second rate distortion cost do not satisfy the bidirectional rate distortion condition, and the first rate distortion cost and the second rate distortion cost satisfy a second unidirectional rate distortion condition, performing unidirectional prediction on the current picture block based on the second motion information, to obtain second bitstream data of the current picture block, where the second bitstream data includes bitstream data carrying a prediction direction identifier, a value of the prediction direction identifier indicates that the current picture block is obtained by performing unidirectional prediction on the current picture block based on the second reference picture list, and the second bitstream data includes the encoded data of the current picture block.

With reference to the twelfth aspect or the first implementation of the twelfth aspect, in a second possible implementation of the twelfth aspect, the bidirectional rate distortion cost, the first rate distortion cost, and the second rate distortion cost are determined based on the first motion information and the second motion information only when a reference structure of a frame in which the current picture block is located is a non-low-delay reference structure. In this implementation, an implementation scenario is specified. In the implementation scenario, an implementation provided in the twelfth aspect is used. Therefore, decoding efficiency can be increased and computational complexity of decoding can be reduced.

With reference to the second implementation of the twelfth aspect, in a third possible implementation of the twelfth aspect, the method further includes:

when the bidirectional rate distortion cost, the first rate distortion cost, and the second rate distortion cost do not satisfy the bidirectional rate distortion condition, and the first template distortion and the second template distortion satisfy a first unidirectional template distortion condition, performing unidirectional prediction on the current picture block based on the first motion information, to obtain first unidirectional bitstream data of the current picture block, where the first unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the first unidirectional bitstream data includes the encoded data of the current picture block; or

when the bidirectional rate distortion cost, the first rate distortion cost, and the second rate distortion cost do not satisfy the bidirectional rate distortion condition, and the first template distortion and the second template distortion satisfy a second unidirectional template distortion condition, performing unidirectional prediction on the current picture block based on the second motion information, to obtain second unidirectional bitstream data of the current picture block, where the second unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the second unidirectional bitstream data includes the encoded data of the current picture block. In this implementation, a quantity of bits is reduced compared with the first implementation, and encoding efficiency is improved compared with the prior art. Computational complexity of decoding is reduced by adding an identifier to a bitstream.

With reference to the second implementation of the twelfth aspect or the third implementation of the twelfth aspect, in a fourth possible implementation of the twelfth aspect, the method further includes:

when the reference structure of the frame in which the current picture block is located is a low-delay reference structure, determining, based on the template of the reference picture block corresponding to the first motion information and the template of the reference picture block corresponding to the second motion information, a bidirectional template distortion caused when bidirectional prediction is performed on the current picture block; and

when the bidirectional template distortion, the first template distortion, and the second template distortion satisfy a bidirectional template distortion condition, performing bidirectional prediction on the current picture block based on the first motion information and the second motion information, to obtain the encoded data of the current picture block.

A thirteenth aspect of the present invention provides a decoding apparatus based on template matching. The apparatus includes:

an obtaining unit, configured to obtain a prediction direction identifier of a current picture block and encoded data of the current picture block; and

a reconstruction unit, configured to: when a value of the prediction direction identifier indicates that the encoded data of the current picture block is obtained by performing bidirectional prediction on the current picture block based on reference pictures in a first reference picture list and reference pictures in a second reference picture list, perform template matching on the current picture block in the reference pictures in the first reference picture list, to obtain first motion information, and perform template matching on the current picture block in the reference pictures in the second reference picture list, to obtain second motion information; and obtain a reconstructed picture block of the current picture block based on the first motion information, the second motion information, and the encoded data of the current picture block.

With reference to the thirteenth aspect, in a first possible implementation of the thirteenth aspect, the reconstruction unit is further configured to:

when a value of the prediction direction identifier indicates that the encoded data of the current picture block is obtained by performing unidirectional prediction on the current picture block based on the reference pictures in the first reference picture list, perform template matching on the current picture block in the reference pictures in the first reference picture list, to obtain first motion information, and obtain a reconstructed picture block of the current picture block based on the first motion information and the encoded data of the current picture block; or

when a value of the prediction direction identifier indicates that the encoded data of the current picture block is obtained by performing unidirectional prediction on the current picture block based on the reference pictures in the second reference picture list, perform template matching on the current picture block in the reference pictures in the second reference picture list, to obtain second motion information, and obtain a reconstructed picture block of the current picture block based on the second motion information and the encoded data of the current picture block.

With reference to the thirteenth aspect, in a second possible implementation of the thirteenth aspect, the reconstruction unit is further configured to:

when a value of the prediction direction identifier indicates that the encoded data of the current picture block is obtained by performing unidirectional prediction on the current picture block based on the reference pictures in the first reference picture list or the reference pictures in the second reference picture list, perform template matching on the current picture block in the reference pictures in the first reference picture list, to obtain first motion information, and perform template matching on the current picture block in the reference pictures in the second reference picture list, to obtain second motion information; and

when a first template distortion between a reference picture block corresponding to the first motion information and the current picture block and a second template distortion between a reference picture block corresponding to the second motion information and the current picture block satisfy a first unidirectional template distortion condition, obtain a reconstructed picture block of the current picture block based on the first motion information and the encoded data of the current picture block; or when the first template distortion and the second template distortion satisfy a second unidirectional template distortion condition, obtain a reconstructed picture block of the current picture block based on the second motion information and the encoded data of the current picture block.

With reference to the second implementation of the thirteenth aspect, in a third possible implementation of the thirteenth aspect, the first unidirectional template distortion condition includes that the first template distortion is less than or equal to the second template distortion, and the second unidirectional template distortion condition includes that the first template distortion is greater than the second template distortion.

With reference to any one of the thirteenth aspect and the foregoing implementations of the thirteenth aspect, in a fourth possible implementation of the thirteenth aspect, the obtaining unit is configured to obtain the prediction direction identifier only when a reference structure of a frame in which the current picture block is located is a non-low-delay reference structure.

With reference to the fourth implementation of the thirteenth aspect, in a fifth possible implementation of the thirteenth aspect, the reconstruction unit is further configured to: when the reference structure of the frame in which the current picture block is located is a low-delay reference structure, perform template matching on the current picture block in the reference pictures in the first reference picture list, to obtain first motion information, a template of a reference picture block corresponding to the first motion information, and a first template distortion between the reference picture block corresponding to the first motion information and the current picture block; and perform template matching on the current picture block in the reference pictures in the second reference picture list, to obtain second motion information, a template of a reference picture block corresponding to the second motion information, and a second template distortion between the reference picture block corresponding to the second motion information and the current picture block;

determine, based on the template of the reference picture block corresponding to the first motion information and the template of the reference picture block corresponding to the second motion information, a bidirectional template distortion caused when bidirectional prediction is performed on the current picture block; and

when the bidirectional template distortion, the first template distortion, and the second template distortion satisfy a bidirectional template distortion condition, obtain a reconstructed picture block of the current picture block based on the first motion information, the second motion information, and the encoded data of the current picture block.

With reference to the fifth implementation of the thirteenth aspect, in a sixth possible implementation of the thirteenth aspect, the bidirectional template distortion condition includes that the bidirectional template distortion is less than or equal to a template distortion threshold, and the template distortion threshold may be obtained based on the first template distortion and the second template distortion.

A fourteenth aspect of the present invention provides an encoding apparatus based on template matching, including:

a matching unit, configured to perform template matching on a current picture block in reference pictures in a first reference picture list, to obtain first motion information, and perform template matching on the current picture block in reference pictures in a second reference picture list, to obtain second motion information;

a determining unit, configured to determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information; and

a prediction unit, configured to: when the bidirectional rate distortion cost, the first rate distortion cost, and the second rate distortion cost satisfy a bidirectional rate distortion condition, perform bidirectional prediction on the current picture block based on the first motion information and the second motion information, to obtain bidirectional bitstream data of the current picture block, where the bidirectional bitstream data includes bitstream data carrying a prediction direction identifier, a value of the prediction direction identifier indicates that encoded data of the current picture block is obtained by performing bidirectional prediction based on the first reference picture list and the second reference picture list, and the bidirectional bitstream data includes the encoded data of the current picture block.

With reference to the fourteenth aspect, in a first possible implementation of the fourteenth aspect, the prediction unit is further configured to:

when the bidirectional rate distortion cost, the first rate distortion cost, and the second rate distortion cost do not satisfy the bidirectional rate distortion condition, and the first rate distortion cost and the second rate distortion cost satisfy a first unidirectional rate distortion condition, perform unidirectional prediction on the current picture block based on the first motion information, to obtain first bitstream data of the current picture block, where the first bitstream data includes bitstream data carrying a prediction direction identifier, a value of the prediction direction identifier indicates that encoded data of the current picture block is obtained by performing unidirectional prediction on the current picture block based on the first reference picture list, and the first bitstream data includes the encoded data of the current picture block; or

when the bidirectional rate distortion cost, the first rate distortion cost, and the second rate distortion cost do not satisfy the bidirectional rate distortion condition, and the first rate distortion cost and the second rate distortion cost satisfy a second unidirectional rate distortion condition, perform unidirectional prediction on the current picture block based on the second motion information, to obtain second bitstream data of the current picture block, where the second bitstream data includes bitstream data carrying a prediction direction identifier, a value of the prediction direction identifier indicates that the current picture block is obtained by performing unidirectional prediction on the current picture block based on the second reference picture list, and the second bitstream data includes the encoded data of the current picture block.

With reference to the fourteenth aspect or the first implementation of the fourteenth aspect, in a second possible implementation of the fourteenth aspect, the determining unit is configured to: determine the bidirectional rate distortion cost, the first rate distortion cost, and the second rate distortion cost based on the first motion information and the second motion information only when a reference structure of a frame in which the current picture block is located is a non-low-delay reference structure.

With reference to the second implementation of the fourteenth aspect, in a third possible implementation of the fourteenth aspect, the prediction unit is further configured to:

when the bidirectional rate distortion cost, the first rate distortion cost, and the second rate distortion cost do not satisfy the bidirectional rate distortion condition, and the first template distortion and the second template distortion satisfy a first unidirectional template distortion condition, perform unidirectional prediction on the current picture block based on the first motion information, to obtain first unidirectional bitstream data of the current picture block, where the first unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the first unidirectional bitstream data includes the encoded data of the current picture block; or when the bidirectional rate distortion cost, the first rate distortion cost, and the second rate distortion cost do not satisfy the bidirectional rate distortion condition, and the first template distortion and the second template distortion satisfy a second unidirectional template distortion condition, perform unidirectional prediction on the current picture block based on the second motion information, to obtain second unidirectional bitstream data of the current picture block, where the second unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the second unidirectional bitstream data includes the encoded data of the current picture block.

With reference to the second implementation of the fourteenth aspect or the third implementation of the fourteenth aspect, in a fourth possible implementation of the fourteenth aspect, the determining unit is further configured to:

when the reference structure of the frame in which the current picture block is located is a low-delay reference structure, determine, based on the template of the reference picture block corresponding to the first motion information and the template of the reference picture block corresponding to the second motion information, a bidirectional template distortion caused when bidirectional prediction is performed on the current picture block; and correspondingly, the prediction unit is further configured to: when the bidirectional template distortion, the first template distortion, and the second template distortion satisfy a bidirectional template distortion condition, perform bidirectional prediction on the current picture block based on the first motion information and the second motion information, to obtain the encoded data of the current picture block.

A fifteenth aspect of the present invention provides a decoding apparatus, including: a memory and a processor, where

the memory is configured to store a set of executable code; and
the processor is configured to execute the executable code stored in the memory to perform any one of the eleventh aspect or the first implementation to the sixth implementation of the eleventh aspect.

A sixteenth aspect of the present invention provides an encoding apparatus, including: a memory and a processor, where

the memory is configured to store a set of executable code; and
the processor is configured to execute the executable code stored in the memory to perform any one of the twelfth aspect or the first implementation to the fourth implementation of the twelfth aspect.

A seventeenth aspect of the present invention provides a storage medium. The storage medium stores executable code, and when the executable code is executed, any one of the eleventh aspect or the first implementation to the sixth implementation of the eleventh aspect may be performed.

An eighteenth aspect of the present invention provides a storage medium. The storage medium stores executable code, and when the executable code is executed, any one of the twelfth aspect or the first implementation to the fourth implementation of the twelfth aspect may be performed.

A nineteenth aspect of the present invention provides a computer program. The computer program may perform any one of the eleventh aspect or the first implementation to the sixth implementation of the eleventh aspect.

A twentieth aspect of the present invention provides a computer program. The computer program may perform any one of the twelfth aspect or the first implementation to the fourth implementation of the twelfth aspect.

## BRIEF DESCRIPTION OF DRAWINGS

To describe the technical solutions in the embodiments of the present invention more clearly, the following briefly describes the accompanying drawings required for describing the embodiments.

FIG. 1 is a schematic block diagram of a video encoding and decoding system according to an embodiment of the present invention;

FIG. 2 is a schematic block diagram of a video encoder according to an embodiment of the present invention;

FIG. 3 is a schematic block diagram of a video decoder according to an embodiment of the present invention;

FIG. 4 is a schematic flowchart of an encoding method according to an embodiment of the present invention;

FIG. 5 is a schematic diagram of an "L" shaped template in a template matching technology according to an embodiment of the present invention;

FIG. 6 is a schematic flowchart of a decoding method according to an embodiment of the present invention;

FIG. 7 is a schematic flowchart of an encoding method according to an embodiment of the present invention;

FIG. 8 is a schematic flowchart of an encoding method according to an embodiment of the present invention;

FIG. 9A and FIG. 9B are a schematic flowchart of an encoding method according to an embodiment of the present invention;

FIG. 10A and FIG. 10B are a schematic flowchart of an encoding method according to an embodiment of the present invention;

FIG. 11 is a schematic flowchart of a decoding method according to an embodiment of the present invention;

FIG. 12 is a schematic flowchart of a decoding method according to an embodiment of the present invention;

FIG. 13A and FIG. 13B are a schematic flowchart of a decoding method according to an embodiment of the present invention;

FIG. 14A and FIG. 14B are a schematic flowchart of a decoding method according to an embodiment of the present invention;

FIG. 15 is a schematic block diagram of an encoding apparatus according to an embodiment of the present invention;

FIG. 16 is a schematic block diagram of a decoding apparatus according to an embodiment of the present invention;

FIG. 17 is a schematic block diagram of an encoding apparatus according to an embodiment of the present invention;

FIG. 18 is a schematic block diagram of a decoding apparatus according to an embodiment of the present invention;

FIG. 19 is a schematic diagram of a hardware structure of a computer device according to an embodiment of the present invention; and

FIG. 20 is a schematic diagram of a hardware structure of a computer device according to an embodiment of the present invention.

## DESCRIPTION OF EMBODIMENTS

The following clearly and completely describes the technical solutions in the embodiments of the present invention with reference to the accompanying drawings in the embodiments of the present invention.

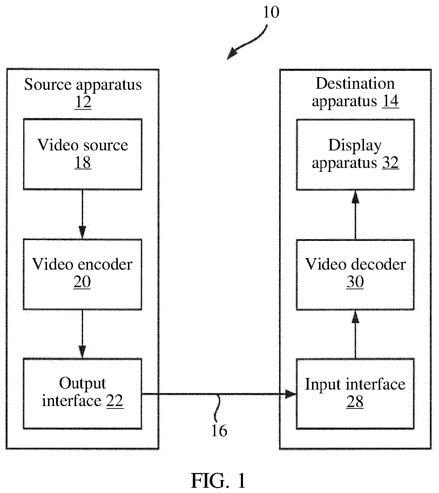

FIG. 1 is a schematic block diagram of a video encoding and decoding system 10 according to an embodiment of the present invention. As shown in FIG. 1, the video encoding and decoding system 10 includes a source apparatus 12 and a destination apparatus 14 (or referred to as a decoding apparatus). The source apparatus 12 generates encoded video data. Therefore, the source apparatus 12 may be referred to as a video encoding apparatus or a video encoding device. The destination apparatus 14 may decode the encoded video data generated by the source apparatus 12. Therefore, the destination apparatus 14 may be referred to as a video decoding apparatus or a video decoding device. The source apparatus 12 and the destination apparatus 14 may be examples of a video encoding and decoding apparatus or a video encoding and decoding device. The source apparatus 12 and the destination apparatus 14 may include widespread apparatuses, including a desktop computer, a mobile computing apparatus, a notebook (for example, laptop) computer, a tablet computer, a set-top box, a handset such as a smartphone, a television, a camera, a display apparatus, a digital media player, a video game console, an in-vehicle computer, or similar apparatuses.

The destination apparatus 14 may receive, by using a channel 16, the encoded video data from the source apparatus 12. The channel 16 may include one or more media and/or apparatuses that can move the encoded video data from the source apparatus 12 to the destination apparatus 14. In an example, the channel 16 may include one or more communications media that enable the source apparatus 12 to directly transmit the encoded video data to the destination apparatus 14 in real time. In the example, the source apparatus 12 may modulate the encoded video data based on a communications standard (for example, a wireless communication protocol), and may transmit modulated video data to the destination apparatus 14. The one or more communication media may include wireless and/or wired communication media, for example, a radio frequency (RF) spectrum or one or more physical transmission lines. The one or more communication media may form a part of a packet-based network (for example, a local area network, a wide area network, or a global network (for example, the Internet)). The one or more communication media may include a router, a switch, a base station, or another device that facilitates communication from the source apparatus 12 to the destination apparatus 14.

In another example, the channel 16 may include a storage medium storing the encoded video data generated by the source apparatus 12. In the example, the destination apparatus 14 may access the storage medium based on disk access or card access. The storage medium may include a plurality of local access-type data storage media such as a Blu-ray disc, a DVD, a CD-ROM, a flash memory, or another suitable digital storage medium configured to store the encoded video data.

In another example, the channel 16 may include a file server or another intermediate storage apparatus storing the encoded video data generated by the source apparatus 12. In the example, the destination apparatus 14 may access, based on streaming transmission or downloading, the encoded video data stored in the file server or the another intermediate storage apparatus. The file server may be a server that can store the encoded video data and transmit the encoded video data to the destination apparatus 14. An example of the file server includes a web server (for example, used for a website), a File Transfer Protocol (FTP) server, a network attached storage (NAS) apparatus, and a local disk drive.

The destination apparatus 14 may access the encoded video data based on a standard data connection (for example, an Internet connection). An example type of the data connection includes a radio channel (for example, a WiFi connection) that is suitable for accessing the encoded video data stored in the file server, a wired connection (for example, a DSL or a cable modem), or a combination of the radio channel and the wired connection. Transmission of the encoded video data from the file server may be streaming transmission, downloading transmission, or a combination of the streaming transmission and the downloading transmission.

A technology of this embodiment of the present invention is not limited to a wireless application scenario. For example, the technology may be applied to video encoding and decoding supporting a plurality of multimedia applications such as the following applications: over-the-air television broadcasting, cable television transmission, satellite television transmission, streaming transmission video transmission (for example, over the Internet), encoding video data stored in a data storage medium, decoding video data stored in a data storage medium, or another application. In some examples, the video encoding and decoding system 10 may be configured to support unidirectional or bidirectional video transmission, so as to support applications such as video streaming transmission, video playing, video broadcasting, and/or videotelephony.

In the example in FIG. 1, the source apparatus 12 may include a video source 18, a video encoder 20, and an output interface 22. In some examples, the output interface 22 may include a modulator/demodulator (modem) and/or a transmitter. The video source 18 may include a video capturing apparatus (for example, a video camera), a video archive including pre-captured video data, a video input interface configured to receive video data from a video content provider, and/or a computer graphics system configured to generate video data, or a combination of the foregoing video data sources.

The video encoder 20 may encode video data from the video source 18. In some examples, the source apparatus 12 directly transmits the encoded video data to the destination apparatus 14 by using the output interface 22. The encoded video data may be further stored in a storage medium or file server and be later accessed by the destination apparatus 14 for decoding and/or playing.

In the example in FIG. 1, the destination apparatus 14 includes an input interface 28, a video decoder 30, and a display apparatus 32. In some examples, the input interface 28 includes a receiver and/or a modem. The input interface 28 may receive the encoded video data by using the channel 16. The display apparatus 32 may be integrated with the destination apparatus 14 or may be outside the destination apparatus 14. Usually, the display apparatus 32 displays decoded video data. The display apparatus 32 may include a plurality of display apparatuses such as a liquid crystal display (LCD), a plasma display, an organic light-emitting diode (OLED) display, or a display apparatus of another type.

The video encoder 20 and the video decoder 30 may operate based on a video compression standard (for example, the high efficiency video coding H.265 standard) or a next-generation video encoding and decoding compression standard (H.266) that is currently being under development, and may comply with an HEVC test model or an H.266 test model (JEM). The H.265 standard and the H.266 standard are incorporated herein by reference in their entireties.

Alternatively, the video encoder 20 and the video decoder 30 may perform operations based on another dedicated or industrial standard. The standard includes ITU-T H.261, ISO/IEC MPEG-1 Visual, ITU-T H.262 or ISO/IEC MPEG-2 Visual, ITU-T H.263, ISO/IEC MPEG-4 Visual, or ITU-T H.264 (which is also referred to as ISO/IEC MPEG-4 AVC), and includes a Scalable Video Coding (SVC) extension and a Multiview Video Coding (MVC) extension. It should be understood that, the technology of this embodiment of the present invention is not limited to any particular encoding and decoding standard or technology.

In addition, FIG. 1 is merely an example and the technology of the present invention may be applied to a video encoding and decoding application (for example, one-sided video encoding or video decoding) that does not necessarily include any data communication between an encoding apparatus and a decoding apparatus. In another embodiment, a local memory is searched for data, and the data is transmitted based on streaming transmission in a network, or the data is operated in a similar manner. The encoding apparatus may encode video data and store the encoded video data in a memory, and/or the decoding apparatus may search the memory for the encoded data and decode the encoded data. In many embodiments, encoding and decoding are performed by using a plurality of apparatuses that do not communicate with each other but only encode data into a memory and/or search the memory for the encoded data and decode the encoded data.

The video encoder 20 and the video decoder 30 may be separately implemented as any one of a plurality of suitable circuits, for example, one or more microprocessors, a digital signal processor (DSP), an application-specific integrated circuit (ASIC), a field programmable gate array (FPGA), discrete logic, hardware, or any combination thereof. The video encoder 20 and the video decoder 30 may also be partially or wholly implemented by using software. Therefore, the source apparatus 12 and the destination apparatus 14 may store an instruction of the software in an appropriate non-transitory computer readable storage medium, and may use one or more processors to execute an instruction in hardware to perform a method provided in an embodiment of the present invention. Any one of the foregoing (which includes hardware, software, a combination of hardware and software, and the like) may be considered as one or more processors. The video encoder 20 or the video decoder 30 may be included in one or more encoders or decoders, and the video encoder 20 or the video decoder 30 may be integrated as a part of a combined encoder/decoder (codec (CODEC)) in another apparatus.

The video encoder 20 encodes video data. The video data may include one or more picture frames. The video encoder 20 may generate bitstream data, and the bitstream data includes encoded data of a picture frame and associated data in a bitstream form. The associated data may include a sequence parameter set (SPS), a picture parameter set (PPS), and another syntactic structure (for example, identifier information). The SPS may include a parameter applied to one or more sequences. The PPS may include a parameter applied to one or more pictures. The syntactic structure refers to a set of one or more syntactic elements arranged in the bitstream in a specified sequence.

To generate the encoded data of the picture frame, the video encoder 20 may divide a picture into coding tree blocks (CTB). In some examples, a CTB may be referred to as a "tree block", a "largest coding unit" (LCU), or a "coding tree unit". A CTB is not limited to a particular the size and may include one or more coding units (CU), and a division manner of a CU may be based on a quadtree plus binary tree structure (QTBT structure). Each CTB may be associated with a pixel block that has an equal size in the picture. Each pixel may correspond to one luminance (luminance or luma) sample and two chrominance (chrominance or chroma) samples. Therefore, each CTB may be associated with one luminance sampling blocks and two chrominance sampling blocks. The CTBs of the picture may be divided into one or more slices. In some examples, each slice includes an integer quantity of CTBs. As a part of encoding the picture, the video encoder 20 may generate encoding information of each slice of the picture, that is, encode a CTB in the slice. To encode the CTB, the video encoder 20 may recursively perform quadtree division, binary tree division, or quadtree plus binary tree division on a pixel block associated with the CTB, so as to divide the pixel block into diminishing pixel blocks. The relatively small pixel blocks may be associated with a CU. In this embodiment of the present invention, a picture block may be a CU, a picture block associated with a CU, or another picture block. It should be noted that, picture blocks included in HEVC include a coding block CU, a prediction block PU, and a transform block TU, and an encoding structure of a video picture is further improved based on a JEM model. Specifically, a block encoding structure referred to as "quadtree plus binary tree" (QTBT) is introduced. In the QTBT structure, concepts such as the CU, the PU, and the TU in HEVC are abandoned, more flexible CU shape division is supported, and a CU may be square or rectangular. Quadtree division is first performed on a CTU, and binary tree division is further performed on a quadtree leaf node. Moreover, in the binary tree division, there are two division modes: symmetrical horizontal division and symmetrical vertical division. A binary tree leaf node is referred to as a CU, and a CU of JEM cannot be further divided in a prediction and transform process, that is, a CU, a PU, and a TU of JEM have a same block size. In JEM at a current stage, a largest size of a CTU is 256×256 luminance pixels. A picture block of the present invention may include, but is not limited to, any one of the foregoing picture blocks.

The H.265 (HEVC) standard is developed by the JCT-VC. HEVC standardization is based on an evolutional model of the video decoding apparatus referred to as the HEVC test model (HM). A latest standard document of H.265 may be obtained from http://www.itu.int/rec/T-REC-H.265, a standard document of a latest version is H.265 (12/16), and the standard document is incorporated herein by reference in their entirety. In the HM, it is assumed that the video decoding apparatus has several additional capabilities relative to an existing algorithm of ITU-T H.264/AVC. For example, nine intra-frame predictive coding modes are provided in H.264, and up to 35 intra-frame predictive coding modes may be provided in the HM.

The JVET makes efforts to develop the H.266 standard. A process of H.266 standardization is based on an evolved model of the video decoding apparatus referred to as the H.266 test model. An algorithm description of H.266 may be obtained from http://phenix.int-evry.fr/jvet, where a latest algorithm description is included in JVET-F1001-v2, and a document of the algorithm description is incorporated herein by reference in their entirety. Moreover, reference software of the JEM test model may be obtained from https://jvet.hhi.fraunhofer.de/svn/svn_HMJEMSoftware/, and is likewise incorporated herein by reference in their entirety.

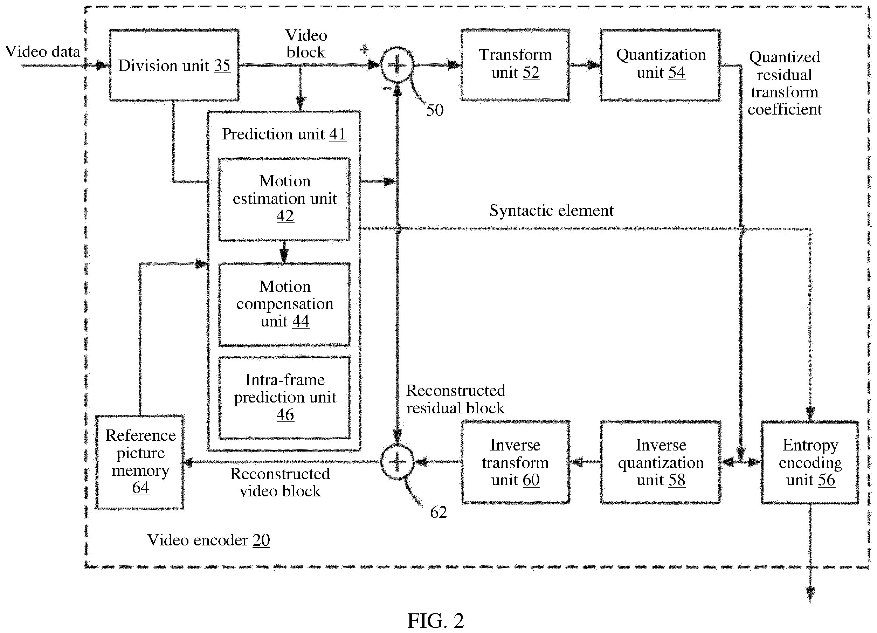

FIG. 2 is a schematic block diagram of a video encoder 20 according to an embodiment of this application. The video encoder 20 may perform intra-frame encoding and inter-frame encoding on a picture block of a video frame. The intra-frame encoding depends on space prediction to reduce or remove space redundancy of a video in a given video frame or picture. The inter-frame encoding depends on time prediction to reduce or remove time redundancy of a video in a neighboring frame or picture of a video sequence. An intra-frame mode (mode I) may be any one of several space-based compression modes. An inter-frame mode (for example, unidirectional prediction (mode P) or bidirectional prediction (mode B)) may be any one of several time-based compression modes.

In a feasible implementation of FIG. 2, the video encoder 20 includes a division unit 35, a prediction unit 41, a reference picture memory 64, a summator 50, a transform processing unit 52, a quantization unit 54, and an entropy encoding unit 56. The prediction unit 41 includes a motion estimation unit 42, a motion compensation unit 44, and an intra-frame prediction unit 46. For video block reconstruction, the video encoder 20 also includes an inverse quantization unit 58, an inverse transform unit 60, and a summator 62, and may also include a deblocking filter (not shown in FIG. 2) to filter a block boundary, thereby removing a blocking artifact from a reconstructed video. In case of need, the deblocking filter usually filters output of the summator 62. In addition to the deblocking filter, an additional loop filter (in-loop or post-loop) may also be used.

As shown in FIG. 2, the video encoder 20 receives video data, and the division unit 35 divides the data into video blocks. This division may also include division into a slice, a picture block, or another relatively large unit, and (for example) video block division is performed based on a quadtree structure of an LCU and a CU. The video encoder 20 describes, by using an example, a component for encoding a video block in a to-be-encoded video slice. Usually, a slice may be divided into a plurality of video blocks (and may be divided into a set of video blocks referred to as picture blocks).

The prediction unit 41 may select one of a plurality of possible encoding modes of a current video block based on encoding quality and a cost calculation result (for example, a code rate-distortion cost (or referred to as a rate distortion cost), RDcost), for example, one of a plurality of intra-frame encoding modes or one of a plurality of inter-frame encoding modes. The prediction unit 41 may provide an obtained intra-frame encoded or inter-frame encoded block (or referred to as a prediction picture block) to the summator 50 to generate residual block data and provide the obtained intra-frame encoded or inter-frame encoded prediction picture block to the summator 62 to reconstruct a reconstruction block to be used as a block in a reference picture.

The motion estimation unit 42 and the motion compensation unit 44 in the prediction unit 41 perform inter-frame predictive coding on the current video block (or referred to as a current picture block) relative to one or more blocks (which may be referred to as a reference picture block) in one or more reference pictures, to provide time compression. The motion estimation unit 42 may be configured to determine, based on a predetermined mode of the video sequence, an inter-frame prediction mode of the video slice, the current picture block, or an area in which the current picture block is located. In the predetermined mode, the video slice in the sequence may be designated as a slice P, a slice B, or a slice GPB. The motion estimation unit 42 and the motion compensation unit 44 may be highly integrated, but are separately described for purpose of concepts. Motion estimation performed by the motion estimation unit 42 is a process used to determine a motion vector of the current picture block. For example, the motion vector may indicate a displacement of a picture block (or referred to as a video block) in the current video frame or picture relative to a reference picture block in a reference picture.

The reference picture block is a block that is found to closely match the current picture block based on a pixel difference, and the pixel difference may be determined by using a sum of absolute difference (SAD), a sum of square difference (SSD), or another difference metric. In some feasible implementations, the video encoder 20 may calculate a value of a sub-integer (sub-integer) pixel location of a reference picture stored in the reference picture memory 64. For example, the video encoder 20 may interpolate a value of a quarter pixel location, an eighth pixel location, or another fractional pixel location of the reference picture. Therefore, the motion estimation unit 42 may perform motion search relative to a full pixel location and a fractional pixel location and output a motion vector that has fractional pixel precision.

The motion estimation unit 42 calculates a motion vector of an inter-frame predicted current picture block by comparing a location of the current picture block with a location of the reference picture block. A reference picture may be selected from a first reference picture list (a list 0) or a second reference picture list (a list 1), and each list corresponds to one or more reference pictures stored in the reference picture memory 64. The motion estimation unit 42 sends the calculated motion vector to the entropy encoding unit 56 and the motion compensation unit 44.

Motion compensation performed by the motion compensation unit 44 may be related to extracting the motion vector determined based on motion estimation or determining the reference picture block, and interpolation to sub-pixel precision may be performed. After obtaining the motion vector of the current picture block, the motion compensation unit 44 may position, in one of one or two reference picture lists, the reference picture block to which the motion vector points. The video encoder 20 forms a residual picture block (or referred to as a residual video block) by subtracting a pixel value of the reference picture block from a pixel value of the current picture block (which may also be referred to as the current video block) that is being encoded, to obtain a pixel difference. The pixel difference forms data of the residual picture block, and may include a luminance difference component and a chrominance difference component. The summator 50 indicates one or more components performing this subtraction calculation. The motion compensation unit 44 may also generate a syntactic element (for example, that provided in this embodiment of the present invention) associated with the current picture block and/or the video slice to be used by the video decoder 30 to perform decoding and obtain a reconstruction block of the current picture block or a reconstruction block of a picture block of the video slice.

For a picture block of bidirectional prediction (which is, for example, but is not limited to a PU located in the slice B), the picture block may be associated with the two reference picture lists referred to as the "list 0" and the "list 1". In some feasible implementations, a picture containing the slice B may be associated with a list combination that is a combination of the list 0 and the list 1.

Moreover, for a picture block of bidirectional prediction (which is, for example, but is not limited to a PU located in the slice B), the motion estimation unit 42 may perform unidirectional prediction or bidirectional prediction for the picture block. In some feasible implementations, bidirectional prediction is prediction performed separately based on pictures of the reference picture lists: the list 0 and the list 1. In some other feasible implementations, bidirectional prediction is prediction performed separately based on a reconstructed future frame and a reconstructed past frame of a current frame (a frame in which the current picture block is located) in a display order. When the motion estimation unit 42 performs unidirectional prediction for the current picture block, the motion estimation unit 42 may search reference pictures in the list 0 or the list 1 for a reference picture block of the current picture block. The motion estimation unit 42 may then generate a reference index that indicates a reference picture containing a reference picture block in the list 0 or the list 1 and a motion vector that indicates a space displacement between the current picture block and the reference picture block. The motion estimation unit 42 may output the reference index, a prediction direction identifier, and the motion vector as motion information of the current picture block. The prediction direction identifier may indicate that the reference index indicates the reference picture in the list 0 or the list 1. The motion compensation unit 44 may determine a prediction picture block (or referred to as a predictive picture block) of the current picture block based on the reference picture block indicated by the motion information of the current picture block.

When the motion estimation unit 42 performs bidirectional prediction for the current picture block, the motion estimation unit 42 may search the reference pictures (the reference pictures may also be referred to as reference frames) in the list 0 for a reference picture block of the current picture block and may further search the reference pictures in the list 1 for another reference picture block of the current picture block. The motion estimation unit 42 may then generate a reference index that indicates a reference picture containing a reference picture block in the list 0 and the list 1 and a motion vector that indicates a space displacement between the reference picture block and the current picture block. The motion estimation unit 42 may output the reference index and the motion vector of the current picture block as motion information of the current picture block. The motion compensation unit 44 may determine a prediction picture block of the current picture block based on the reference picture block indicated by the motion information of the current picture block.

In some feasible implementations, the motion estimation unit 42 does not output a complete set of motion information of the current picture block to the entropy encoding unit 56. Instead, the motion estimation unit 42 may notify the motion information of the current picture block with reference to motion information of another picture block. For example, the motion estimation unit 42 may determine that the motion information of the current picture block is fully similar to motion information of a neighboring picture block. In this implementation, the motion estimation unit 42 may indicate, in a syntactic structure associated with the current picture block, an indicator value, and the indicator value indicates, to the video decoder 30, that the current picture block has motion information the same as that of the neighboring picture block or has motion information that may be derived from the neighboring picture block. In another implementation, the motion estimation unit 42 may identify, in a syntactic structure associated with the current picture block, a candidate prediction motion vector associated with the neighboring picture block, and a motion vector difference (MVD). The MVD indicates a difference between the motion vector of the current picture block and the indicated candidate prediction motion vector associated with the neighboring picture block. The video decoder 30 may determine the motion vector of the current picture block by using the candidate prediction motion vector and the MVD.

As described above, the prediction unit 41 may generate a candidate prediction motion vector list used for the current picture block. One or more candidate prediction motion vector lists may include one or more candidate prediction motion vectors, and one or more additional candidate prediction motion vectors derived from a candidate prediction motion vector.

The intra-frame prediction unit 46 in the prediction unit 41 may perform intra-frame predictive coding on the current picture block based on a picture the same as the current picture block or one or more neighboring picture blocks (which may be in a slice) neighboring to the current picture block to provide space compression. Therefore, in place of the inter-frame prediction (as described above) performed by the motion estimation unit 42 and the motion compensation unit 44, the intra-frame prediction unit 46 may perform intra-frame prediction on the current picture block. Specifically, the intra-frame prediction unit 46 may determine an intra-frame prediction mode used to encode the current picture block. In some feasible implementations, the intra-frame prediction unit 46 may (for example) encode the current picture block by using various intra-frame prediction modes during independent encoding traversal, and the intra-frame prediction unit 46 (or in some feasible implementations, a mode selection unit 40) may select a used proper intra-frame prediction mode from tested modes.

After the prediction unit 41 generates the prediction picture block of the current video block by performing inter-frame prediction or intra-frame prediction, the video encoder 20 forms the residual picture block by subtracting the prediction picture block from the current picture block. Residual video data in the residual picture block may be included in one or more TUs and be applied to the transform processing unit 52 (alternatively, the residual picture block may be directly applied to the transform processing unit 52). The transform processing unit 52 transforms the residual video data into a residual transform coefficient by performing, for example, discrete cosine transform (DCT) or conceptually similar transform (for example, discrete sine transform DST). The transform processing unit 52 may convert the residual video data from a pixel domain to a transform domain (for example, a frequency domain).

The transform processing unit 52 may send the obtained transform coefficient to the quantization unit 54. The quantization unit 54 quantizes the transform coefficient to further reduce a code rate. A quantization process may reduce a bit depth associated with some or all coefficients. A quantization degree may be modified by adjusting a quantization parameter. In some feasible implementations, the quantization unit 54 may then scan a matrix including the quantized transform coefficient. Alternatively, the entropy encoding unit 56 may perform scanning.

After quantization, the entropy encoding unit 56 may perform entropy encoding on the quantized transform coefficient. For example, the entropy encoding unit 56 may perform context-adaptive variable-length coding (CAVLC), context-adaptive binary arithmetic coding (CABAC), syntax-based context-adaptive binary arithmetic coding (SBAC), probability interval partitioning entropy (PIPE) coding, or another entropy encoding method or technology. The entropy encoding unit 56 may also perform entropy encoding on the motion vector (or the motion vector of the current picture block) of the current video slice and another syntactic element. After entropy encoding is performed by the entropy encoding unit 56, an encoded bitstream may be transmitted to the video decoder 30 or archived to be later transmitted or be obtained by the video decoder 30 through search.

The entropy encoding unit 56 may encode information indicating the selected intra-frame prediction mode. The video encoder 20 may include, in transmitted bitstream configuration data including a plurality of intra-frame prediction mode index tables and a plurality of modified intra-frame prediction mode index tables (which are also referred to as code word mapping tables), definitions of encoding contexts of various blocks, an MPM used for each of the contexts, an indication of the intra-frame prediction mode index tables, and an indication of the modified intra-frame prediction mode index tables.

The inverse quantization unit 58 and the inverse transform unit 60 respectively apply inverse quantization and inverse transform, so as to reconstruct the residual picture block in the pixel domain to obtain a reference picture block used as a reference picture. The motion compensation unit 44 may reconstruct the reference picture block by adding the residual picture block to a prediction picture block of one of reference pictures in one of the reference picture lists. The motion compensation unit 44 may also apply one or more interpolation filters to the reconstructed residual picture block to calculate a sub-integer pixel value to be used for motion estimation. The summator 62 adds the residual picture block to a prediction picture block of a motion-compensated reference picture block generated by the motion compensation unit 44 to generate the reference picture block to be stored in the reference picture memory 64. The reference picture block may be used by the motion estimation unit 42 and the motion compensation unit 44 as a reference picture block used to perform inter-frame prediction on a block in a subsequent video frame or picture.

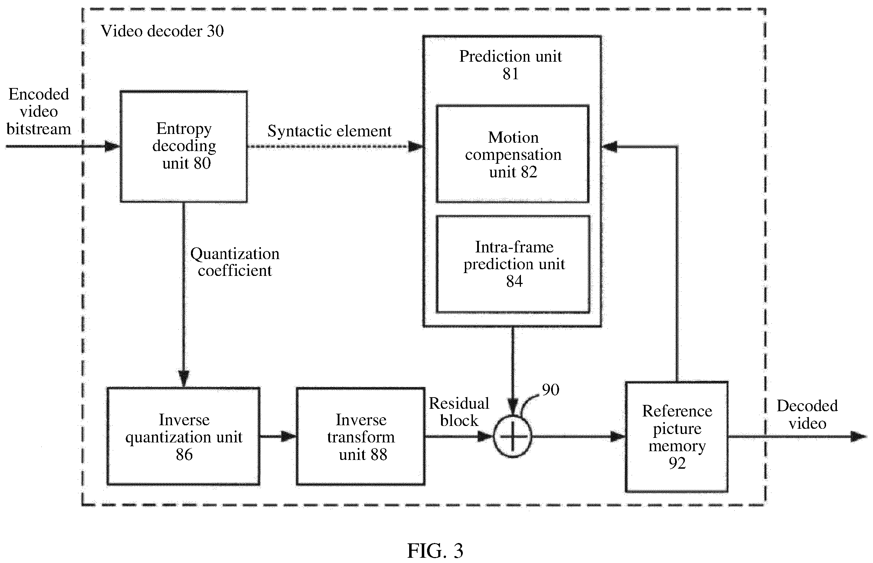

FIG. 3 is a schematic block diagram of a video decoder 30 according to an embodiment of the present invention. In a feasible implementation of FIG. 3, the video decoder 30 includes an entropy decoding unit 80, a prediction unit 81, an inverse quantization unit 86, an inverse transform unit 88, a summator 90, and a reference picture memory 92. The prediction unit 81 includes a motion compensation unit 82 and an intra-frame prediction unit 84. In some feasible implementations, the video decoder 30 may perform a decoding process of an encoding process described from the video encoder 20 in FIG. 2. The decoding process of the video decoder 30 may be reciprocal to the encoding process of the video encoder.

During the decoding process, the video decoder 30 receives, from the video encoder 20, a picture block indicating an encoded video slice (or an encoded picture block) and an encoded video bitstream of an associated syntactic element. The entropy encoding unit 80 of the video decoder 30 performs entropy decoding on the bitstream to generate a quantized coefficient, a motion vector, and another syntactic element. The entropy encoding unit 80 forwards the motion vector and the another syntactic element to the prediction unit 81. The video decoder 30 may receive the syntactic element at a video slice level and/or a picture block level.

When the video slice is decoded into an intra-frame decoded (I) slice or a current picture block is a picture block used for intra-frame prediction, the intra-frame prediction unit 84 of the prediction unit 81 may generate the current picture block or prediction data of the picture block of the current video slice based on a signaled intra-frame prediction mode and data from a previously decoded block of a current frame or picture.

When a video picture is decoded into an inter-frame decoded (for example, B, P, or GPB) slice or the current picture block is a picture block used for inter-frame decoding, the motion compensation unit 82 of the prediction unit 81 generates a prediction picture block of the current picture block based on the motion vector and the another syntactic element that are received from the entropy encoding unit 80. The prediction picture block may be determined in a reference picture in one or two reference picture lists. The video decoder 30 may use a default construction technology based on a reference picture stored in the reference picture memory 92 to construct a reference picture list (a list 0 and/or a list 1).

The motion compensation unit 82 determines prediction information of the current picture block or the picture block of the current video slice (when the current picture block is located in a slice, the current picture block is the picture block of the current video slice) by parsing the motion vector and the another syntactic element, and decodes the obtained prediction picture block of the current picture block by using the prediction information. For example, the motion compensation unit 82 determines, by using some received syntactic elements, a prediction mode (for example, intra-frame prediction or inter-frame prediction) used to decode the current picture block, an inter-frame prediction slice type (for example, a slice B, a slice P, or a slice GPB) (or a type of a frame in which the current picture block is located), construction information of one or more reference picture lists of a slice (or construction information of one or more reference picture lists of the current picture block), a motion vector of each inter-frame encoded video block of the slice (or a motion vector of the current picture block), an inter-frame prediction status of each inter-frame decoded picture block of the slice (or an inter-frame prediction status of an inter-frame decoded picture block), and another information used to decode a video block in the current video slice (or decode the current picture block).

The motion compensation unit 82 may also perform interpolation based on an interpolation filter. The motion compensation unit 82 may calculate an interpolated value of a sub-integer pixel of a reference block by using, for example, the interpolation filter used by the video encoder 20 during encoding on the current picture block. In this application, the motion compensation unit 82 may determine, based on the received syntactic element, the interpolation filter used by the video encoder 20 and obtain the prediction picture block of the current picture block by using the interpolation filter.

If the current picture block is encoded by performing inter-frame prediction, the motion compensation unit 82 may generate a candidate prediction motion vector list used for the current picture block. The bitstream may include data for identifying a location of a selected candidate prediction motion vector in the candidate prediction motion vector list of the current picture block. After generating the candidate prediction motion vector list used for the current picture block, the motion compensation unit 82 may generate, based on one or more reference blocks indicated by motion information of the current picture block, the prediction picture block used for the current picture block. A reference picture block of the current picture block may be in a picture frame whose time is different from that of the current picture block. The motion compensation unit 82 may determine the motion information of the current picture block based on selected motion information in the candidate prediction motion vector list of the current picture block.

The inverse quantization unit 86 performs inverse quantization (for example, dequantization) on a quantized transform coefficient that is decoded by the entropy encoding unit 80 and that is provided in the bitstream. An inverse quantization process may include: determining a quantization degree by using a quantization parameter calculated by the video encoder 20 for the picture block or the picture block in the video slice, and likewise determining an inverse quantization degree that should be applied. The inverse transform unit 88 applies inverse transform (for example, inverse DCT, inverse integer transform, or a conceptually similar inverse transform process) to the transform coefficient so as to generate a residual picture block in a pixel domain.

After the motion compensation unit 82 generates the prediction picture block of the current picture block based on the motion vector and the another syntactic element, the video decoder 30 sums the residual picture block from the inverse transform unit 88 and the corresponding prediction picture block generated by the motion compensation unit 82 to form a decoded video block (that is, a reconstructed picture block of the current picture block). The summator 90 indicates one or more components performing this summation calculation. In case of need, a deblocking filter may also be used to filter the decoded block so as to remove a blocking artifact. Another loop filter (in a decoding loop or after a decoding loop) may also be used to smooth pixel transform, or video quality is improved in another manner. The decoded video block in the given frame or picture is then stored in the reference picture memory 92, and the reference picture memory 92 stores a reference picture used for subsequent motion compensation. The reference picture memory 92 also stores the decoded video to be later presented on a display apparatus such as the display apparatus 32 in FIG. 1.

As noted above, by way of example, technologies of some embodiments of the present invention are related to inter-frame encoding and inter-frame decoding. It should be understood that, the technologies of some embodiments of the present invention may be performed by using either of the video encoder and the video decoder described in the embodiments of the present invention, and the video encoder and the video decoder include (for example) the video encoder 20 and the video decoder 30 presented and described with reference to FIG. 1 to FIG. 3. That is, in a feasible implementation, the prediction unit 41 described with reference to FIG. 2 may perform, when inter-frame prediction is performed during encoding on the current picture block, a particular technology described below. In another feasible implementation, the prediction unit 81 described with reference to FIG. 3 may perform, when inter-frame prediction is performed during decoding on the current picture block, a particular technology described below. Therefore, reference to a general "video encoder" or "video decoder" may include the video encoder 20, the video decoder 30, or another video encoding or decoding unit.

FIG. 4 is a schematic flowchart of an encoding method based on template matching according to an embodiment of the present invention. The method may be performed by a source apparatus 12, specifically may be performed by a video encoder 20, or specifically may be performed by a prediction unit 41. The method may include the following steps.

S401. Determine first motion information based on a first motion information list of a current picture block, where a first template distortion between a reference picture block corresponding to the first motion information and the current picture block is less than or equal to a template distortion between a reference picture block corresponding to each motion information in the first motion information list and the current picture block.

The method may further include: determining the first motion information list of the current picture block and a second motion information list of the current picture block.

The motion information may include a motion vector and a reference index.

A motion information list of the current picture block may be determined based on a reference picture list of a frame or an area (for example, a slice) in which the current picture block is located. Specifically, the first motion information list may be determined based on a first reference picture list (for example, a list 0). The second motion information list may be determined based on a second reference picture list (for example, a list 1).

The frame in which the current picture block is located may be a frame used for bidirectional prediction, and the foregoing two motion information lists may be candidate motion information lists in a combined mode or motion information of lists in an advanced motion vector prediction (Advanced Motion Vector Prediction, AMVP) mode. The foregoing two motion information lists may be established based on motion information of encoded picture blocks surrounding the current picture block.

Any one motion information in the first motion information list includes a motion vector and a reference index, and the reference index is used to indicate a location of a reference frame (or referred to as a reference picture) in a first reference frame list (or referred to as the first reference picture list or a forward reference picture list, that is, the list 0). Any one motion information in the second motion information list includes a motion vector and a reference index, and the reference index is used to indicate a location of a reference frame in a second reference frame list (or referred to as the second reference picture list or a backward reference picture list, that is, the list 1).

A reference picture block corresponding to any one motion information in the first motion information list is a reconstructed picture block (a picture block obtained through reconstruction). A reference picture block corresponding to any one motion information in the second motion information list is a reconstructed picture block (a picture block obtained through reconstruction).

It should be noted that, a person skilled in the art should understand that in a process of determining the first motion information based on the first motion information list, the first template distortion, and a template of the reference picture block corresponding to the first motion information are also determined. Additionally, the first template distortion between the reference picture block corresponding to the first motion information and the current picture block is a difference between the template of the reference picture block corresponding to the first motion information and a template of the current picture block. Details of similar descriptions are not described again below.

The first motion information may be first motion information of the current picture block.

The determining first motion information based on the first motion information list may include: using motion information corresponding to a minimum one of template distortions between reference picture blocks corresponding to all motion information in the first motion information list and the current picture block as first initial motion information; and performing motion search in an area in which a reference picture block corresponding to the first initial motion information is located, to obtain the first motion information.

In some feasible implementations, a template distortion may be obtained through calculation by using the following formula:

$$SAD(x, y) = \sum_{m=1}^{M} \sum_{n=1}^{N} |P(m, n) - Q(m+x, n+x)|$$

where P is a template of the current picture block, Q is a template of a reference picture block to which any one motion information in a motion information list points, (x, y) is a motion vector of any one motion information in a motion information list between P and Q, M and N are a length and a width of the current picture block and the reference picture block, and SAD is a template distortion or is referred to as a sum of absolute difference (SAD, Sum of Absolute Difference).

In addition to the sum of absolute difference, the template distortion may be further indicated by using a sum of square difference (SSD).

In some feasible implementations, an "L" shaped template may be used as the foregoing template. As shown in FIG. 5, a left neighboring block and an upper neighboring block of the current picture block (curBlock) form an "L" shaped template (Template). Because the template is closely neighboring to a space location of the current picture block and motion information of the template and motion information of the current picture block should be kept basically consistent, the motion information of the template may be used as the motion information of the current picture block. The left neighboring block and the upper neighboring block of the current picture block are generated through reconstruction, and may be obtained on both an encoder side and a decoder side.

In addition to the "L" shaped template, another template may also be used.

A relationship between a size of an area in which the reference picture block is located and a location of the reference picture block may be preset. A pixel in the area in which the reference picture block is located is obtained through reconstruction. In some feasible implementations, the performing motion search in an area in which a reference picture block corresponding to the first initial motion information is located, to obtain the first motion information may include:

traversing, in the area in which the reference picture block is located, at least two of all templates that have a size and a shape the same as those of the template of the current picture block, and calculating template distortions between the at least two templates and the template of the current picture block. Motion information between a template whose template distortion is minimum and the template of the current picture block is used as the first motion information. In a traversal process, an interval between the at least two templates may be an integer pixel value, or may be a non-integer pixel value that is, for example, but is not limited to, a half pixel, a quarter pixel, an eighth pixel, or a three-seconds pixel.

S402. Determine second motion information based on a second motion information list of the current picture block, where a second template distortion between a reference picture block corresponding to the second motion information and the current picture block is less than or equal to a template distortion between a reference picture block corresponding to each motion information in the second motion information list and the current picture block.

The second motion information may be second motion information of the current picture block.

The determining second motion information based on the second motion information list may include: using motion information corresponding to a minimum one of template distortions between reference picture blocks corresponding to all motion information in the second motion information list and the current picture block as second initial motion information; and performing motion search in an area in which a reference picture block corresponding to the second initial motion information is located, to obtain the second motion information.

For a process of S402, refer to a process of S401. Details are not described herein again.

S403. Determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information.

A specific process of calculating a rate distortion cost may be as follows:

Motion compensation (Motion Compensation, MC), transform (Transform, T), quantization (Quantization, Q), and entropy encoding are performed on the current picture block based on the first motion information (or referred to as forward motion information), to obtain the first rate distortion cost (or referred to as a rate distortion cost of forward prediction), motion compensation, transform, quantization, and entropy encoding are performed on the current picture block based on the second backward motion information (or referred to as backward motion information), to obtain the second rate distortion cost (or referred to as a rate distortion cost of backward prediction), and bidirectional motion compensation, transform, quantization, and entropy encoding are performed on the current picture block based on the first motion information and the second motion information, to obtain the bidirectional rate distortion cost (or referred to as a rate distortion cost of bidirectional prediction).

A formula of calculating the first rate distortion cost may be: $RDCost0 = D_0 + \lambda R_0$

where RDCost0 indicates the first rate distortion cost, D0 indicates a distortion of the current picture block on which encoding (which may include motion compensation and include at least one of transform, quantization, and entropy encoding) is performed by using the first motion information, R0 indicates a quantity of bits consumed when encoding (which may include motion compensation and include at least one of transform, quantization, and entropy encoding) is performed on the current picture block by using the first motion information, and $\lambda$ is a multiplier and may be determined on the encoder side.

A formula of calculating the second rate distortion cost may be: $RDCost1 = D_1 + \lambda R_1$

where RDCost1 indicates the second rate distortion cost, D1 indicates a distortion of the current picture block on which encoding (which may include motion compensation and include at least one of transform, quantization, and entropy encoding) is performed by using the second motion information, R1 indicates a quantity of bits consumed when encoding (which may include motion compensation and include at least one of transform, quantization, and entropy encoding) is performed on the current picture block by using the second motion information, and $\lambda$ is a multiplier and may be determined on the encoder side.

A formula of calculating the bidirectional rate distortion cost may be:

$$RD\mathrm{Cos}\,t\mathrm{Bi} = D_{\mathrm{Bi}} + \lambda R_{\mathrm{Bi}}$$

where RDCostBi indicates the bidirectional rate distortion cost, DBi indicates a distortion of the current picture block on which encoding (which may include motion compensation and include at least one of transform, quantization, and entropy encoding) is performed by using the first motion information and the second motion information, RBi indicates a quantity of bits consumed when encoding (which may include motion compensation and include at least one of transform, quantization, and entropy encoding) is performed on the current picture block by using the first motion information and the second motion information, and $\lambda$ is a multiplier and may be determined on the encoder side.

The bidirectional rate distortion cost of bidirectional prediction corresponding to the bidirectional motion information, the first rate distortion cost of unidirectional prediction corresponding to the first motion information, and the second rate distortion cost of unidirectional prediction corresponding to the second motion information are determined based on the first motion information and the second motion information only when a reference structure of a frame in which the current picture block is located is a non-low-delay reference structure. For content of the non-low-delay reference structure (Non-LowDelayconfiguration) and a low-delay reference structure (LowDelayconfiguration), refer to related content of HM 7.0, H.265, and H.266. The non-low-delay reference structure may be understood as a reference structure that is not a low-delay reference structure.

The method may further include: when the reference structure of the frame in which the current picture block is located is the non-low-delay reference structure, the bidirectional rate distortion cost is greater than the smaller one of the first rate distortion cost, and the second rate distortion cost and the first rate distortion cost is less than or equal to the second rate distortion cost, performing unidirectional prediction on the current picture block based on the first motion information, to obtain first bitstream data of the current picture block, where the first bitstream data includes bitstream data carrying a prediction direction identifier, and a value of the prediction direction identifier indicates that encoded data of the current picture block is obtained by performing unidirectional prediction on the current picture block based on the first motion information list. The first bitstream data may further include the encoded data of the current picture block.

The method may further include: when the reference structure of the frame in which the current picture block is located is the non-low-delay reference structure, the bidirectional rate distortion cost is greater than the smaller one of the first rate distortion cost, and the second rate distortion cost and the first rate distortion cost is greater than the second rate distortion cost, performing unidirectional prediction on the current picture block based on the second motion information, to obtain second bitstream data of the current picture block, where the second bitstream data includes bitstream data carrying a prediction direction identifier, and a value of the prediction direction identifier indicates that encoded data of the current picture block is obtained by performing unidirectional prediction on the current picture block based on the second motion information list. The second bitstream data may further include the encoded data of the current picture block.

In some feasible implementations, the method may further include: when the reference structure of the frame in which the current picture block is located is the non-low-delay reference structure, the bidirectional rate distortion cost is greater than the smaller one of the first rate distortion cost, and the first template distortion is less than or equal to the second template distortion, performing unidirectional prediction on the current picture block based on the first motion information, to obtain first unidirectional bitstream data of the current picture block, where the first unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list. The first unidirectional bitstream data may further include the encoded data of the current picture block.

In some feasible implementations, the method may further include: when the reference structure of the frame in which the current picture block is located is the non-low-delay reference structure, the bidirectional rate distortion cost is greater than the smaller one of the first rate distortion cost, and the first template distortion is greater than the second template distortion, performing unidirectional prediction on the current picture block based on the second motion information, to obtain second unidirectional bitstream data of the current picture block, where the second unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list. The second unidirectional bitstream data may further include the encoded data of the current picture block.

The method may further include: when the reference structure of the frame in which the current picture block is located is a low-delay reference structure, determining, based on the first template distortion and the second template distortion, a bidirectional template distortion caused when bidirectional prediction is performed on the current picture block; and when the bidirectional template distortion is less than or equal to a template distortion threshold, performing bidirectional prediction on the current picture block based on the first motion information and the second motion information, to obtain the encoded data of the current picture block, where the template distortion threshold is obtained based on the first template distortion and the second template distortion.

The template distortion threshold may be the smaller one of the first template distortion and the second template distortion. The template distortion threshold may also be a value obtained by multiplying the smaller one of the first template distortion and the second template distortion by a preset coefficient, and the coefficient may be any real number greater than or equal to 1 and less than or equal to 3, for example, 2 or 1.25.

In some feasible implementations, the method may further include: when the reference structure of the frame in which the current picture block is located is a low-delay reference structure, the bidirectional template distortion is greater than the template distortion threshold, and the first template distortion is less than or equal to the second template distortion, performing unidirectional prediction on the current picture block based on the first motion information, to obtain the encoded data of the current picture block; or when the reference structure of the frame in which the current picture block is located is a low-delay reference structure, the bidirectional template distortion is greater than the template distortion threshold, and the first template distortion is greater than the second template distortion, performing unidirectional prediction on the current picture block based on the second motion information, to obtain the encoded data of the current picture block.

In some feasible implementations, the determining, based on the first template distortion and the second template distortion, a bidirectional template distortion caused when bidirectional prediction is performed on the current picture block may include:

if the first template distortion is less than or equal to the second template distortion, updating a template Tc of the current picture block, to obtain a new template Tc' of the current picture block, where Tc'=2*Tc-T0, and T0 is the template of the reference picture block corresponding to the first motion information, performing, based on the new template of the current picture block, motion search in an area in which the reference picture block corresponding to the second motion information is located or an area in which a reference picture block corresponding to the second initial motion information is located, to obtain the adjusted second motion information, and calculating a template distortion, that is, a bidirectional template distortion between the new template of the current picture block and a template of a reference picture block corresponding to the adjusted second motion information; and

if the first template distortion is less than or equal to the second template distortion, updating a template Tc of the current picture block, to obtain a new template Tc' of the current picture block, where Tc'=2*Tc-T1, and T1 is the template of the reference picture block corresponding to the second motion information, performing, based on the new template of the current picture block, motion search in an area in which the reference picture block corresponding to the first motion information is located or an area in which a reference picture corresponding to the first initial motion information is located, to obtain the adjusted first motion information, and calculating a template distortion, that is, a bidirectional template distortion between the new template of the current picture block and a template of a reference picture block corresponding to the adjusted first motion information.

In some other feasible implementations, the determining, based on the first template distortion and the second template distortion, a bidirectional template distortion caused when bidirectional prediction is performed on the current picture block may alternatively include:

using a sum of the first template distortion and the second template distortion as the bidirectional template distortion; or using a product of a sum of the first template distortion and the second template distortion and a preset another coefficient as the bidirectional template distortion. The another coefficient may be any real number greater than or equal to 1 and less than or equal to 3, for example, 2 or 1.25.

In some feasible implementations, the bidirectional template distortion may be further obtained in the following manner:

determining, based on the template of the reference picture block corresponding to the first motion information and the template of the reference picture block corresponding to the second motion information, a bidirectional template distortion caused when bidirectional prediction is performed on the current picture block. Specifically, a value of the bidirectional template distortion may be sum of absolute difference of the template of the current picture block and a bidirectional template, and the bidirectional template is a weighted sum of the template of the reference picture block corresponding to the first motion information and the template of the reference picture block corresponding to the second motion information. For example, the bidirectional template may be a half of a sum of the template of the reference picture block corresponding to the first motion information and the template of the reference picture block corresponding to the second motion information. Alternatively, a value of the bidirectional template distortion may be a value of a product of a sum of absolute difference of the template of the current picture block and a bidirectional template and a preset another coefficient, and the another coefficient may be any real number greater than or equal to 1 and less than or equal to 3, for example, 2 or 1.25.

For content of motion search, refer to S401. Details are not described herein again.

In some feasible implementations, a process of determining whether the reference structure of the frame in which the current picture block is located is the low-delay reference structure or the non-low-delay reference structure may be specifically as follows: If a serial number (Picture of Count, POC) of each reference frame (or referred to as a reference picture) in a reference list of a current frame (that is, a frame in which the current picture block is located) is less than a serial number of the current frame, the reference structure of the frame in which the current picture block is located is the low-delay structure; otherwise, the reference structure of the frame in which the current picture block is located is the non-low-delay reference structure. In an example, POC_list0 may be used to indicate a serial number of a reference frame in the first reference frame list (for example, the list 0), POC_list1 may be used to indicate a serial number of a reference frame in the second reference frame list (the list 1), and POC_cur may be used to indicate a serial number of the current frame. The low-delay reference structure may satisfy the following condition: both POC_cur>POC_list 0 and POC_cur>POC_list 1 hold true. For a specific process, also refer to the description in JEM 5.0.1.

S404. When the bidirectional rate distortion cost is less than or equal to the smaller one of the first rate distortion cost and the second rate distortion cost, perform bidirectional prediction on the current picture block based on the first motion information and the second motion information, to obtain bidirectional bitstream data of the current picture block, where the bidirectional bitstream data includes bitstream data carrying a prediction direction identifier, and a value of the prediction direction identifier indicates that encoded data of the current picture block is obtained by performing bidirectional prediction on the current picture block based on the first motion information list and the second motion information list.

The bidirectional bitstream data may further include the encoded data of the current picture block.

The encoded data of the current picture block may be obtained by performing bidirectional prediction (for example, motion compensation based on two reference picture lists) on the current picture block and further performing at least one of transform, quantization, and entropy encoding on the current picture block. Encoded data obtained below by performing bidirectional prediction is similar to this content, and details are not described again below.

The performing bidirectional prediction on the current picture block based on the first motion information and the second motion information may include:

using the reference picture block corresponding to the first motion information and the reference picture block corresponding to the second motion information as reference picture blocks of the current picture block, and obtaining a prediction picture block of the current picture block. The performing encoding on the current picture block may be further performing at least one operation of transform, quantization, and entropy encoding on the prediction picture block of the current picture block, to obtain the bidirectional bitstream data of the current picture block. The following content of unidirectional prediction is similar to this, and details are not described again.

In some feasible implementations, the performing bidirectional prediction on the current picture block based on the first motion information and the second motion information may be replaced with the following solution:

if the first template distortion is less than or equal to the second template distortion, updating a template Tc of the current picture block, to obtain a new template Tc' of the current picture block, where Tc'=2*Tc-T0, and T0 is the template of the reference picture block corresponding to the first motion information, performing, based on the new template of the current picture block, motion search in an area in which the reference picture block corresponding to the second motion information is located or an area in which a reference picture corresponding to the second initial motion information is located, to obtain the adjusted second motion information, and performing bidirectional prediction on the current picture block based on the first motion information and the adjusted second motion information; and

if the first template distortion is less than or equal to the second template distortion, updating a template Tc of the current picture block, to obtain a new template Tc' of the current picture block, where Tc'=2*Tc-T1, and T1 is the template of the reference picture block corresponding to the second motion information, performing, based on the new template of the current picture block, motion search in an area in which the reference picture block corresponding to the first motion information is located or an area in which a reference picture corresponding to the first initial motion information is located, to obtain the adjusted first motion information, and performing bidirectional prediction on the current picture block based on the adjusted first motion information and the second motion information.

In some feasible implementations, the method may further include: when the bidirectional rate distortion cost is greater than the smaller one of the first rate distortion cost and the second rate distortion cost and the first template distortion is less than or equal to the second template distortion, performing unidirectional prediction on the current picture block based on the first motion information, to obtain first unidirectional bitstream data of the current picture block, where the first unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list. The first unidirectional bitstream data may further include the encoded data of the current picture block. The encoded data of the current picture block may be obtained by performing unidirectional prediction (for example, motion compensation) on the current picture block and further performing at least one of transform, quantization, and entropy encoding on the current picture block. Encoded data obtained below by performing unidirectional prediction is similar to this content, and details are not described again below.

In some feasible implementations, the method may further include: when the bidirectional rate distortion cost is greater than the smaller one of the first rate distortion cost and the second rate distortion cost and the first template distortion is greater than the second template distortion, performing unidirectional prediction on the current picture block based on the second motion information, to obtain second unidirectional bitstream data of the current picture block, where the second unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list. The second unidirectional bitstream data may further include the encoded data of the current picture block.

In some feasible implementations, the method may further include: when the bidirectional rate distortion cost is greater than the smaller one of the first rate distortion cost and the second rate distortion cost and the first rate distortion cost is less than or equal to the second rate distortion cost, performing unidirectional prediction on the current picture block based on the first motion information, to obtain first bitstream data of the current picture block, where the first bitstream data includes bitstream data carrying a prediction direction identifier, and a value of the prediction direction identifier indicates that encoded data of the current picture block is obtained by performing unidirectional prediction on the current picture block based on the first motion information list. The first bitstream data may further include the encoded data of the current picture block.

In some feasible implementations, the method may further include: when the bidirectional rate distortion cost is greater than the smaller one of the first rate distortion cost and the second rate distortion cost and the first rate distortion cost is greater than the second rate distortion cost, performing unidirectional prediction on the current picture block based on the second motion information, to obtain second bitstream data of the current picture block, where the second bitstream data includes a prediction direction identifier, and a value of the prediction direction identifier indicates that encoded data of the current picture block is obtained by performing unidirectional prediction on the current picture block based on the second motion information list. The second bitstream data may further include the encoded data of the current picture block.

In the foregoing method, the following encoding solution may be used as a solution for a value of the prediction direction identifier:

| Prediction direction | Syntactic element | Binarization |
| --- | --- | --- |
| Bidirectional prediction | 2 | '1' |
| Forward prediction | 0 | '00' |
| Backward prediction | 1 | '01' |

Bidirectional prediction indicates that the encoded data of the current picture block is obtained by performing bidirectional prediction on the current picture block based on the first motion information list of the current picture block and the second motion information list of the current picture block, forward prediction indicates that the encoded data of the current picture block is obtained by performing unidirectional prediction on the current picture block based on the first motion information list of the current picture block, and backward prediction indicates that the encoded data of the current picture block is obtained by performing unidirectional prediction on the current picture block based on the second motion information list of the current picture block.

As a syntactic element, during bidirectional prediction, a value of the prediction direction identifier may be a bidirectional predictor such as 2, and as a binarized value, the bidirectional predictor may be '1'.

As a syntactic element, during forward prediction, a value of the prediction direction identifier may be a first unidirectional predictor such as 0, and as a binarized value, the first unidirectional predictor may be '00'.

As a syntactic element, during backward prediction, a value of the prediction direction identifier may be a second unidirectional predictor such as 1, and as a binarized value, the second unidirectional predictor may be '01'.

In the foregoing method, the following another encoding solution may be alternatively used as a solution for a value of the prediction direction identifier:

| Prediction direction | Syntactic element | Binarization |
| --- | --- | --- |
| Bidirectional prediction | 0 | '0' |
| Non-bidirectional prediction | 1 | '1' |

Non-bidirectional prediction indicates that the encoded data of the current picture block is obtained by performing unidirectional prediction on the current picture block based on the first motion information list of the current picture block or the second motion information list of the current picture block.

As a syntactic element, during bidirectional prediction, a value of the prediction direction identifier may be a bidirectional predictor such as 0, and as a binarized value, the bidirectional predictor may be '0'.

As a syntactic element, during non-bidirectional prediction, a value of the prediction direction identifier may be a non-bidirectional predictor such as 1, and as a binarized value, the non-bidirectional predictor may be '1'.

For an encoding related process, refer to related descriptions in the embodiments in FIG. 1 to FIG. 3. Details are not described herein again.

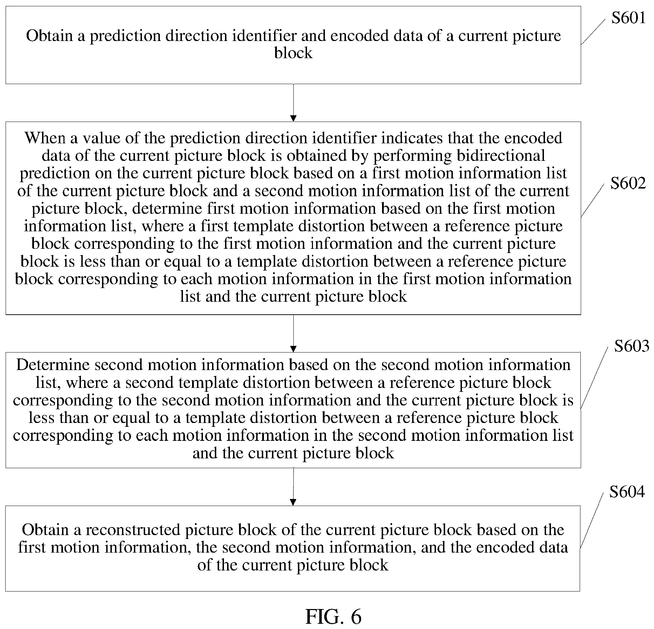

FIG. 6 is a schematic flowchart of a decoding method based on template matching according to an embodiment of the present invention. The method may be performed by a destination apparatus 14, specifically may be performed by a video decoder 30, or specifically may be performed by a prediction unit 81. The method may include the following steps.

S601. Obtain a prediction direction identifier and encoded data of a current picture block.

The prediction direction identifier may be a prediction direction identifier of the current picture block, a prediction direction identifier of an area in which the current picture block is located, or a prediction direction identifier of a frame in which the current picture block is located.

Content of the encoded data and bitstream data is similar to that in the foregoing, and details are not described herein again.

In some feasible implementations, the prediction direction identifier is obtained only when a reference structure of a frame in which the current picture block is located is a non-low-delay reference structure (Non-LowDelay).

The method may further include: when the reference structure of the frame in which the current picture block is located is the non-low-delay reference structure, and a value of the prediction direction identifier indicates that the encoded data of the current picture block is obtained by performing bidirectional prediction on the current picture block based on a first motion information list of the current picture block, obtaining a reconstructed picture block of the current picture block based on the first motion information list and the encoded data of the current picture block. In some feasible implementations, the obtaining a reconstructed picture block of the current picture block based on the first motion information list and the encoded data of the current picture block may include: determining first motion information based on the first motion information list, where a first template distortion between a reference picture block corresponding to the first motion information and the current picture block is less than or equal to a template distortion between a reference picture block corresponding to each motion information in the first motion information list and the current picture block; and obtaining a reconstructed picture block of the current picture block based on the first motion information and the encoded data of the current picture block.

The method may further include: when the reference structure of the frame in which the current picture block is located is the non-low-delay reference structure, and a value of the prediction direction identifier indicates that the encoded data of the current picture block is obtained by performing bidirectional prediction on the current picture block based on a second motion information list of the current picture block, obtaining a reconstructed picture block of the current picture block based on the second motion information list and the encoded data of the current picture block. In some feasible implementations, the obtaining a reconstructed picture block of the current picture block based on the second motion information list and the encoded data of the current picture block may include: determining second motion information based on the second motion information list, where a first template distortion between a reference picture block corresponding to the second motion information and the current picture block is less than or equal to a template distortion between a reference picture block corresponding to each motion information in the second motion information list and the current picture block; and obtaining a reconstructed picture block of the current picture block based on the second motion information and the encoded data of the current picture block.

The method may further include: when the reference structure of the frame in which the current picture block is located is the non-low-delay reference structure, and a value of the prediction direction identifier indicates that the encoded data of the current picture block is obtained by performing unidirectional prediction on the current picture block based on the first motion information list of the current picture block or the second motion information list of the current picture block, determining first motion information based on the first motion information list, where a first template distortion between a reference picture block corresponding to the first motion information and the current picture block is less than or equal to a template distortion between a reference picture block corresponding to each motion information in the first motion information list and the current picture block; determining second motion information based on the second motion information list, where a second template distortion between a reference picture block corresponding to the second motion information and the current picture block is less than or equal to a template distortion between a reference picture block corresponding to each motion information in the second motion information list and the current picture block; and when the first template distortion is less than or equal to the second template distortion, obtaining a reconstructed picture block of the current picture block based on the first motion information and the encoded data of the current picture block; or when the first template distortion is greater than the second template distortion, obtaining a reconstructed picture block of the current picture block based on the second motion information and the encoded data of the current picture block. In some feasible implementations, the method may further include: when the bidirectional template distortion is greater than the template distortion threshold, and the first template distortion is less than or equal to the second template distortion, obtaining a reconstructed picture block of the current picture block based on the first motion information and the encoded data of the current picture block. In some feasible implementations, the method may further include: when the bidirectional template distortion is greater than the template distortion threshold and the first template distortion is greater than the second template distortion, obtaining a reconstructed picture block of the current picture block based on the second motion information and the encoded data of the current picture block.

The method may further include: when the reference structure of the frame in which the current picture block is located is a low-delay (LowDelay) reference structure, determining first motion information based on the first motion information list of the current picture block, where a first template distortion between a reference picture block corresponding to the first motion information and the current picture block is less than or equal to a template distortion between a reference picture block corresponding to each motion information in the first motion information list and the current picture block; determining second motion information based on the second motion information list of the current picture block, where a second template distortion between a reference picture block corresponding to the second motion information and the current picture block is less than or equal to a template distortion between a reference picture block corresponding to each motion information in the second motion information list and the current picture block; determining, based on the first template distortion and the second template distortion, a bidirectional template distortion caused when bidirectional prediction is performed on the current picture block; and when the bidirectional template distortion is less than or equal to a template distortion threshold, obtaining a reconstructed picture block of the current picture block based on the first motion information, the second motion information, and the encoded data of the current picture block, where the template distortion threshold is obtained based on the first template distortion and the second template distortion. In some feasible implementations, the method may further include: when the bidirectional template distortion is greater than the template distortion threshold, and the first template distortion is less than or equal to the second template distortion, obtaining a reconstructed picture block of the current picture block based on the first motion information and the encoded data of the current picture block. In some feasible implementations, the method may further include: when the bidirectional template distortion is greater than the template distortion threshold and the first template distortion is greater than the second template distortion, obtaining a reconstructed picture block of the current picture block based on the second motion information and the encoded data of the current picture block.

In some feasible implementations, for a process of determining whether the reference structure of the frame in which the current picture block is located is the low-delay reference structure or the non-low-delay reference structure, specifically refer to the embodiment corresponding to FIG. 4. Details are not described herein again.

S602. When a value of the prediction direction identifier indicates that the encoded data of the current picture block is obtained by performing bidirectional prediction on the current picture block based on a first motion information list of the current picture block and a second motion information list of the current picture block, determine first motion information based on the first motion information list, where a first template distortion between a reference picture block corresponding to the first motion information and the current picture block is less than or equal to a template distortion between a reference picture block corresponding to each motion information in the first motion information list and the current picture block.

The method may further include: determining the first motion information list of the current picture block and the second motion information list of the current picture block.

For content of the prediction direction identifier, refer to the content in the embodiment in FIG. 4. Details are not described herein again.

For specific content for determining motion information, refer to the embodiment in FIG. 4. Details are not described herein again.

S603. Determine second motion information based on the second motion information list, where a second template distortion between a reference picture block corresponding to the second motion information and the current picture block is less than or equal to a template distortion between a reference picture block corresponding to each motion information in the second motion information list and the current picture block.

For specific content for determining motion information, refer to the embodiment in FIG. 4. Details are not described herein again.

S604. Obtain a reconstructed picture block of the current picture block based on the first motion information, the second motion information, and the encoded data of the current picture block.

The obtaining a reconstructed picture block of the current picture block based on the first motion information, the second motion information, and the encoded data of the current picture block may include:

determining a prediction picture block of the current picture block based on the first motion information and the second motion information; and performing at least one operation of entropy decoding, inverse quantization, and inverse transform on the encoded data of the current picture block, to obtain a residual picture block of the current picture block, and adding the prediction picture block of the current picture block to the residual picture block, to obtain the reconstructed picture block of the current picture block. For a specific process, refer to the description in FIG. 3. Details are not described herein again.

In some feasible implementations, the method may further include: when a value of the prediction direction identifier indicates that the encoded data of the current picture block is obtained by performing bidirectional prediction on the current picture block based on the first motion information list of the current picture block, obtaining a reconstructed picture block of the current picture block based on the first motion information list and the encoded data of the current picture block. The obtaining a reconstructed picture block of the current picture block based on the first motion information list and the encoded data of the current picture block may include: determining first motion information based on the first motion information list, where a first template distortion between a reference picture block corresponding to the first motion information and the current picture block is less than or equal to a template distortion between a reference picture block corresponding to each motion information in the first motion information list and the current picture block; and obtaining a reconstructed picture block of the current picture block based on the first motion information and the encoded data of the current picture block. For a similar process, refer to the above description and the description in FIG. 2. Details are not described herein again.

In some feasible implementations, the method may further include: when a value of the prediction direction identifier indicates that the encoded data of the current picture block is obtained by performing bidirectional prediction on the current picture block based on the second motion information list of the current picture block, obtaining a reconstructed picture block of the current picture block based on the second motion information list and the encoded data of the current picture block. For a specific implementation, similarly refer to the above description and the description in FIG. 2. Details are not described herein again.

In some feasible implementations, the method may further include: when a value of the prediction direction identifier indicates that the encoded data of the current picture block is obtained by performing unidirectional prediction on the current picture block based on the first motion information list of the current picture block or the second motion information list of the current picture block, determining first motion information based on the first motion information list, where a first template distortion between a reference picture block corresponding to the first motion information and the current picture block is less than or equal to a template distortion between a reference picture block corresponding to each motion information in the first motion information list and the current picture block; determining second motion information based on the second motion information list, where a second template distortion between a reference picture block corresponding to the second motion information and the current picture block is less than or equal to a template distortion between a reference picture block corresponding to each motion information in the second motion information list and the current picture block; and when the first template distortion is less than or equal to the second template distortion, obtaining a reconstructed picture block of the current picture block based on the first motion information and the encoded data of the current picture block; or when the first template distortion is greater than the second template distortion, obtaining a reconstructed picture block of the current picture block based on the second motion information and the encoded data of the current picture block.

For a prediction direction identifier, a template distortion, and other similar content, refer to the description in FIG. 6. Details are not described herein again.

For a decoding related process, refer to related descriptions in the embodiments in FIG. 1 to FIG. 3. Details are not described herein again.

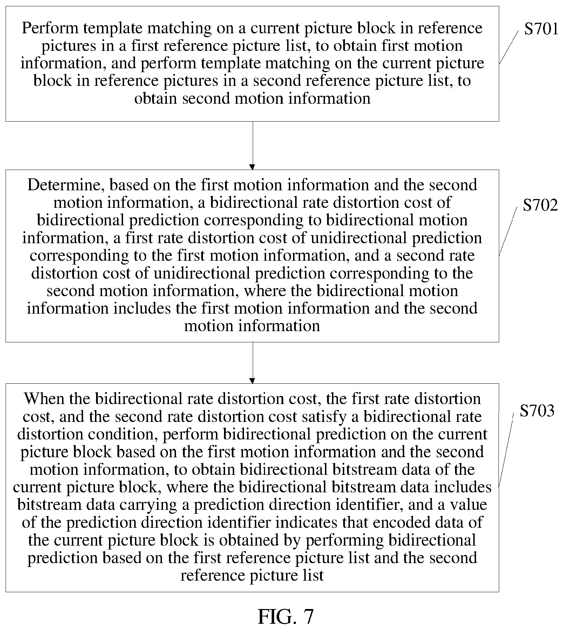

FIG. 7 is a schematic flowchart of an encoding method based on template matching according to an embodiment of the present invention. The method may be performed by a source apparatus 12, specifically may be performed by a video encoder 20, or specifically may be performed by a prediction unit 41. The method may include the following steps.

S701. Perform template matching on a current picture block in reference pictures in a first reference picture list, to obtain first motion information, and perform template matching on the current picture block in reference pictures in a second reference picture list, to obtain second motion information.

The method may further include: determining the first reference picture list and the second reference picture list. The first reference picture list and the second reference picture list may be reference picture lists of a frame in which the current picture block is located, reference picture lists of an area (slice) in which the current picture block is located, or reference picture lists of the current picture block. The first motion information is first motion information of the current picture block.

The performing template matching on a current picture block in the reference pictures in the first reference picture list is performing template matching on a template of the current picture block in the reference pictures in the first reference picture list.

The performing template matching on a current picture block in the reference pictures in the first reference picture list, to obtain first motion information may include: determining first initial motion information of the current picture block based on the first reference picture list; and performing, in an area in which a reference picture block corresponding to the first initial motion information is located and based on the first initial motion information and the current picture block, template matching on a reference picture block surrounding the reference picture block corresponding to the first initial motion information, and using motion information for which a template distortion is minimum as the first motion information. The minimum template distortion herein may be a minimum template distortion of template distortions including a template distortion corresponding to the first initial motion information.

The determining first initial motion information of the current picture block based on the first reference picture list may include: determining a first motion information list of the current picture block based on the first reference picture list, and using motion information corresponding to a minimum one of template distortions between reference picture blocks corresponding to all motion information in the first motion information list and the current picture block as first initial motion information. A template distortion corresponding to the first motion information is less than or equal to the template distortion corresponding to the first initial motion information.

The process of performing, in an area in which a reference picture block corresponding to the first initial motion information is located and based on the first initial motion information and the current picture block, template matching on a reference picture block surrounding the reference picture block corresponding to the first initial motion information, and using motion information for which a template distortion is minimum as the first motion information may also be referred to as: performing motion search in an area in which a reference picture block corresponding to the first initial motion information is located, to obtain the first motion information, and the process may include:

traversing, in the area in which the reference picture block is located, at least two of all templates that have a size and a shape the same as those of the template of the current picture block, and calculating template distortions between the at least two templates and the template of the current picture block. Motion information between a template whose template distortion is minimum and the template of the current picture block is used as the first motion information. The at least two templates may be traversed based on a preset order. A distance between neighboring templates of the at least two templates may be a preset length such as an integer pixel value or a non-integer pixel value.

In some feasible implementations, the determining first initial motion information of the current picture block based on the first reference picture list may include: determining a first motion information list of the current picture block based on the first reference picture list, and using motion information that corresponds to a minimum template distortion of template distortions and that is in the first motion information list as the first initial motion information.

Content of the second reference picture list, the second motion information, and the operation of performing template matching on the current picture block in the reference pictures in the second reference picture list, to obtain second motion information are similar to that of the first reference picture list, the first motion information, and the operation of performing template matching on a current picture block in the reference pictures in the first reference picture list, to obtain first motion information. Details are not described herein again.

S702. Determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information.

In some feasible implementations, the bidirectional rate distortion cost, the first rate distortion cost, and the second rate distortion cost are determined based on the first motion information and the second motion information only when a reference structure of a frame in which the current picture block is located is a non-low-delay reference structure.

In some feasible implementations, the method may further include: when the reference structure of the frame in which the current picture block is located is the non-low-delay reference structure, the bidirectional rate distortion cost, the first rate distortion cost, and the second rate distortion cost do not satisfy the bidirectional rate distortion condition, and the first rate distortion cost and the second rate distortion cost satisfy a first unidirectional rate distortion condition, performing unidirectional prediction on the current picture block based on the first motion information, to obtain first bitstream data of the current picture block, where the first bitstream data includes bitstream data carrying a prediction direction identifier, a value of the prediction direction identifier indicates that encoded data of the current picture block is obtained by performing unidirectional prediction on the current picture block based on the first reference picture list, and the first bitstream data includes the encoded data of the current picture block.

The first unidirectional rate distortion condition may include that the first rate distortion cost is less than or equal to the second rate distortion cost.

In some feasible implementations, the method may further include: when the reference structure of the frame in which the current picture block is located is the non-low-delay reference structure, the bidirectional rate distortion cost, the first rate distortion cost, and the second rate distortion cost do not satisfy the bidirectional rate distortion condition, and the first rate distortion cost and the second rate distortion cost satisfy a second unidirectional rate distortion condition, performing unidirectional prediction on the current picture block based on the second motion information, to obtain second bitstream data of the current picture block, where the second bitstream data includes bitstream data carrying a prediction direction identifier, a value of the prediction direction identifier indicates that the current picture block is obtained by performing unidirectional prediction on the current picture block based on the second reference picture list, and the second bitstream data includes the encoded data of the current picture block.

The second unidirectional rate distortion condition may include that the first rate distortion cost is greater than the second rate distortion cost. That the first rate distortion cost and the second rate distortion cost satisfy the second unidirectional rate distortion condition may be that the first rate distortion cost and the second rate distortion cost do not satisfy the first unidirectional rate distortion condition.

In some feasible implementations, the method may further include: when the reference structure of the frame in which the current picture block is located is the non-low-delay reference structure, the bidirectional rate distortion cost, the first rate distortion cost, and the second rate distortion cost do not satisfy the bidirectional rate distortion condition, and the first template distortion and the second template distortion satisfy a first unidirectional template distortion condition, performing unidirectional prediction on the current picture block based on the first motion information, to obtain first unidirectional bitstream data of the current picture block, where the first unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the first unidirectional bitstream data includes the encoded data of the current picture block.

The first unidirectional template distortion condition may include that the first template distortion is less than or equal to the second template distortion.

In some feasible implementations, the method may further include: when the reference structure of the frame in which the current picture block is located is the non-low-delay reference structure, the bidirectional rate distortion cost, the first rate distortion cost, and the second rate distortion cost do not satisfy the bidirectional rate distortion condition, and the first template distortion and the second template distortion satisfy a second unidirectional template distortion condition, performing unidirectional prediction on the current picture block based on the second motion information, to obtain second unidirectional bitstream data of the current picture block, where the second unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the second unidirectional bitstream data includes the encoded data of the current picture block.

The second unidirectional template distortion condition may include that the first template distortion is greater than the second template distortion. Alternatively, satisfying the second unidirectional template distortion condition may be not satisfying the first unidirectional template distortion condition.

In some feasible implementations, the method may further include: when the reference structure of the frame in which the current picture block is located is a low-delay reference structure, determining, based on the template of the reference picture block corresponding to the first motion information and the template of the reference picture block corresponding to the second motion information, a bidirectional template distortion caused when bidirectional prediction is performed on the current picture block; and when the bidirectional template distortion, the first template distortion, and the second template distortion satisfy a bidirectional template distortion condition, performing bidirectional prediction on the current picture block based on the first motion information and the second motion information, to obtain the encoded data of the current picture block. The method may further include: when the bidirectional template distortion, the first template distortion, and the second template distortion do not satisfy the bidirectional template distortion condition, and the first template distortion and the second template distortion satisfy the first unidirectional template distortion condition, performing unidirectional prediction on the current picture block based on the first motion information, to obtain the encoded data of the current picture block; or when the bidirectional template distortion, the first template distortion, and the second template distortion do not satisfy the bidirectional template distortion condition, and the first template distortion and the second template distortion satisfy the second unidirectional template distortion condition, performing unidirectional prediction on the current picture block based on the second motion information, to obtain the encoded data of the current picture block.

It should be understood that, it can be learned based on a template matching process that, while the first motion information is determined, the template of the reference picture block corresponding to the first motion information and the first template distortion are determined. While the second motion information is determined, the template of the reference picture block corresponding to the second motion information and the second template distortion are determined.

A value of the bidirectional template distortion may be sum of absolute difference of the template of the current picture block and a bidirectional template, and the bidirectional template is a weighted sum of the template of the reference picture block corresponding to the first motion information and the template of the reference picture block corresponding to the second motion information. For example, the bidirectional template may be a half of a sum of the template of the reference picture block corresponding to the first motion information and the template of the reference picture block corresponding to the second motion information.

A manner of obtaining the bidirectional template distortion in this embodiment may also be a manner of obtaining the bidirectional template distortion in the embodiment in FIG. 4.

The bidirectional template distortion condition may include that the bidirectional template distortion is less than or equal to a template distortion threshold, and the template distortion threshold may be obtained based on the first template distortion and the second template distortion. The template distortion threshold may be the smaller one of the first template distortion and the second template distortion. The template distortion threshold may also be a value obtained by multiplying the smaller one of the first template distortion and the second template distortion by a preset coefficient, and the coefficient may be any real number greater than or equal to 1 and less than or equal to 3, for example, 2 or 1.25. S703. When the bidirectional rate distortion cost, the first rate distortion cost, and the second rate distortion cost satisfy a bidirectional rate distortion condition, perform bidirectional prediction on the current picture block based on the first motion information and the second motion information, to obtain bidirectional bitstream data of the current picture block, where the bidirectional bitstream data includes bitstream data carrying a prediction direction identifier, a value of the prediction direction identifier indicates that encoded data of the current picture block is obtained by performing bidirectional prediction based on the first reference picture list and the second reference picture list, and the bidirectional bitstream data includes the encoded data of the current picture block.

Each prediction in this embodiment may be referred to as motion compensation or motion compensation prediction. Unidirectional prediction may be referred to as unidirectional motion compensation or unidirectional motion compensation prediction, and bidirectional prediction may be referred to as bidirectional motion compensation prediction or bidirectional motion compensation.

The bidirectional rate distortion condition may include that the bidirectional rate distortion cost is less than or equal to the smaller one of the first rate distortion cost and the second rate distortion cost.

In some feasible implementations, the method may further include: when the bidirectional rate distortion cost, the first rate distortion cost, and the second rate distortion cost do not satisfy the bidirectional rate distortion condition, and the first rate distortion cost and the second rate distortion cost satisfy a first unidirectional rate distortion condition, performing unidirectional prediction on the current picture block based on the first motion information, to obtain first bitstream data of the current picture block, where the first bitstream data includes bitstream data carrying a prediction direction identifier, a value of the prediction direction identifier indicates that encoded data of the current picture block is obtained by performing unidirectional prediction on the current picture block based on the first reference picture list, and the first bitstream data includes the encoded data of the current picture block.

In some feasible implementations, the method may further include: when the bidirectional rate distortion cost, the first rate distortion cost, and the second rate distortion cost do not satisfy the bidirectional rate distortion condition, and the first rate distortion cost and the second rate distortion cost satisfy a second unidirectional rate distortion condition, performing unidirectional prediction on the current picture block based on the second motion information, to obtain second bitstream data of the current picture block, where the second bitstream data includes bitstream data carrying a prediction direction identifier, a value of the prediction direction identifier indicates that the current picture block is obtained by performing unidirectional prediction on the current picture block based on the second reference picture list, and the second bitstream data includes the encoded data of the current picture block.

In some feasible implementations, the method may further include: when the bidirectional rate distortion cost, the first rate distortion cost, and the second rate distortion cost do not satisfy the bidirectional rate distortion condition, and the first template distortion and the second template distortion satisfy a first unidirectional template distortion condition, performing unidirectional prediction on the current picture block based on the first motion information, to obtain first unidirectional bitstream data of the current picture block, where the first unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the first unidirectional bitstream data includes the encoded data of the current picture block.

In some feasible implementations, the method may further include: when the bidirectional rate distortion cost, the first rate distortion cost, and the second rate distortion cost do not satisfy the bidirectional rate distortion condition, and the first template distortion and the second template distortion satisfy a second unidirectional template distortion condition, performing unidirectional prediction on the current picture block based on the second motion information, to obtain second unidirectional bitstream data of the current picture block, where the second unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the second unidirectional bitstream data includes the encoded data of the current picture block.

In the foregoing method, the following encoding solution may be used as a solution for a value of the prediction direction identifier:

| Prediction direction | Syntactic element | Binarization |
|---|---|---|
| Bidirectional prediction | 2 | '1' |
| Forward prediction | 0 | '00' |
| Backward prediction | 1 | '01' |

Bidirectional prediction indicates that the encoded data of the current picture block is obtained by performing bidirectional prediction on the current picture block based on the first reference picture list and the second reference picture list, forward prediction indicates that the encoded data of the current picture block is obtained by performing unidirectional prediction on the current picture block based on the first reference picture list, and backward prediction indicates that the encoded data of the current picture block is obtained by performing unidirectional prediction on the current picture block based on the second reference picture list.

As a syntactic element, during bidirectional prediction, a value of the prediction direction identifier may be a bidirectional predictor such as 2, and as a binarized value, the bidirectional predictor may be '1'.

As a syntactic element, during forward prediction, a value of the prediction direction identifier may be a first unidirectional predictor such as 0, and as a binarized value, the first unidirectional predictor may be '00'.

As a syntactic element, during backward prediction, a value of the prediction direction identifier may be a second unidirectional predictor such as 1, and as a binarized value, the second unidirectional predictor may be '01'.

In the foregoing method, the following another encoding solution may be alternatively used as a solution for a value of the prediction direction identifier:

| Prediction direction | Syntactic element | Binarization |
|---|---|---|
| Bidirectional prediction | 0 | '0' |
| Non-bidirectional prediction | 1 | '1' |

Non-bidirectional prediction indicates that the encoded data of the current picture block is obtained by performing unidirectional prediction on the current picture block based on the first reference picture list or the second reference picture list.

As a syntactic element, during bidirectional prediction, a value of the prediction direction identifier may be a bidirectional predictor such as 0, and as a binarized value, the bidirectional predictor may be '0'.

As a syntactic element, during non-bidirectional prediction, a value of the prediction direction identifier may be a non-bidirectional predictor such as 1, and as a binarized value, the non-bidirectional predictor may be '1'.

For content in the embodiment in FIG. 7 similar to that in the embodiments in FIG. 4 and FIG. 6, refer to the descriptions in the embodiments in FIG. 4 and FIG. 6. Details are not described herein again.

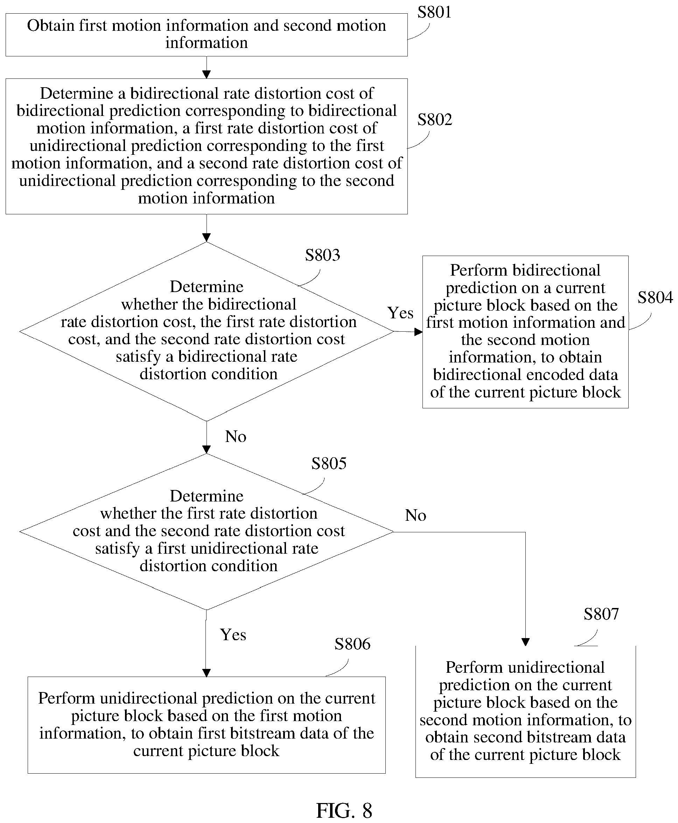

Based on FIG. 7, FIG. 8 is a schematic flowchart of an encoding method based on template matching according to an embodiment of the present invention. The method may be performed by a source apparatus 12, specifically may be performed by a video encoder 20, or specifically may be performed by a prediction unit 41. The method may include the following steps.

S801. Perform template matching on a current picture block in reference pictures in a first reference picture list, to obtain first motion information, and perform template matching on the current picture block in reference pictures in a second reference picture list, to obtain second motion information.

For a specific implementation process, refer to the descriptions in FIG. 1 to FIG. 7. Details are not described herein again.

S802. Determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information.

For a specific implementation process, refer to the descriptions in FIG. 1 to FIG. 7. Details are not described herein again.

S803. Determine whether the bidirectional rate distortion cost, the first rate distortion cost, and the second rate distortion cost satisfy a bidirectional rate distortion condition; and when the bidirectional rate distortion cost, the first rate distortion cost, and the second rate distortion cost satisfy the bidirectional rate distortion condition, perform S804, or when the bidirectional rate distortion cost, the first rate distortion cost, and the second rate distortion cost do not satisfy the bidirectional rate distortion condition, perform S805.

S804. Perform bidirectional prediction on the current picture block based on the first motion information and the second motion information, to obtain bidirectional bitstream data of the current picture block, where the bidirectional bitstream data includes bitstream data carrying a prediction direction identifier, a value of the prediction direction identifier indicates that encoded data of the current picture block is obtained by performing bidirectional prediction based on the first reference picture list and the second reference picture list, and the bidirectional bitstream data includes the encoded data of the current picture block. The process ends.

S805. Determine whether the first rate distortion cost and the second rate distortion cost satisfy a first unidirectional rate distortion condition; and when the first rate distortion cost and the second rate distortion cost satisfy the first unidirectional rate distortion condition, perform S806, or when the first rate distortion cost and the second rate distortion cost do not satisfy the first unidirectional rate distortion condition, perform S807.

S806. Perform unidirectional prediction on the current picture block based on the first motion information, to obtain first bitstream data of the current picture block, where the first bitstream data includes bitstream data carrying a prediction direction identifier, a value of the prediction direction identifier indicates that encoded data of the current picture block is obtained by performing unidirectional prediction on the current picture block based on the first reference picture list, and the first bitstream data includes the encoded data of the current picture block. The process ends.

S807. Perform unidirectional prediction on the current picture block based on the second motion information, to obtain second bitstream data of the current picture block, where the second bitstream data includes bitstream data carrying a prediction direction identifier, a value of the prediction direction identifier indicates that the current picture block is obtained by performing unidirectional prediction on the current picture block based on the second reference picture list, and the second bitstream data includes the encoded data of the current picture block. The process ends.

For content in the embodiment in FIG. 8 similar to that in the embodiments in FIG. 4 and FIG. 7, refer to the descriptions in the embodiments in FIG. 4 and FIG. 7. Details are not described herein again.

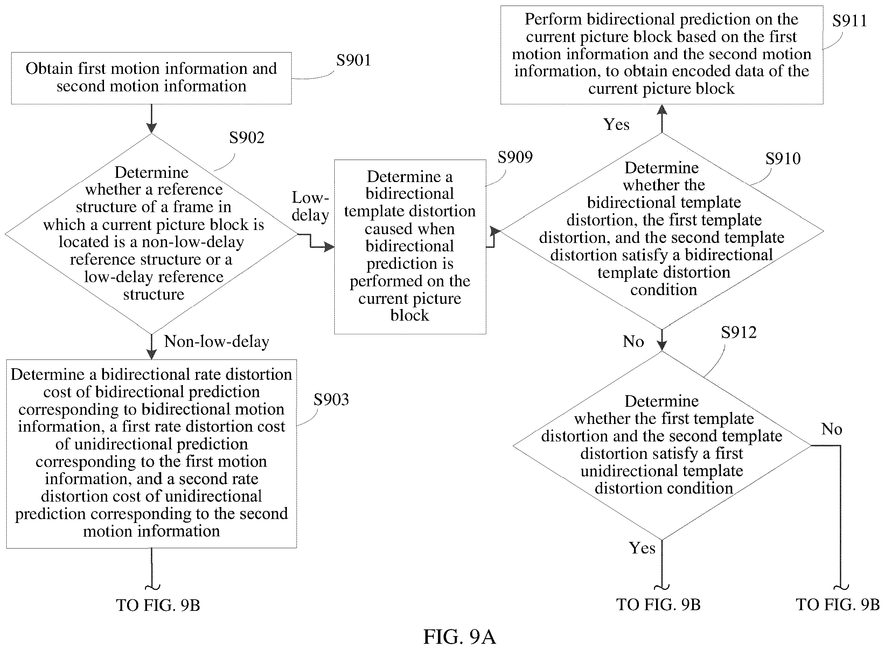

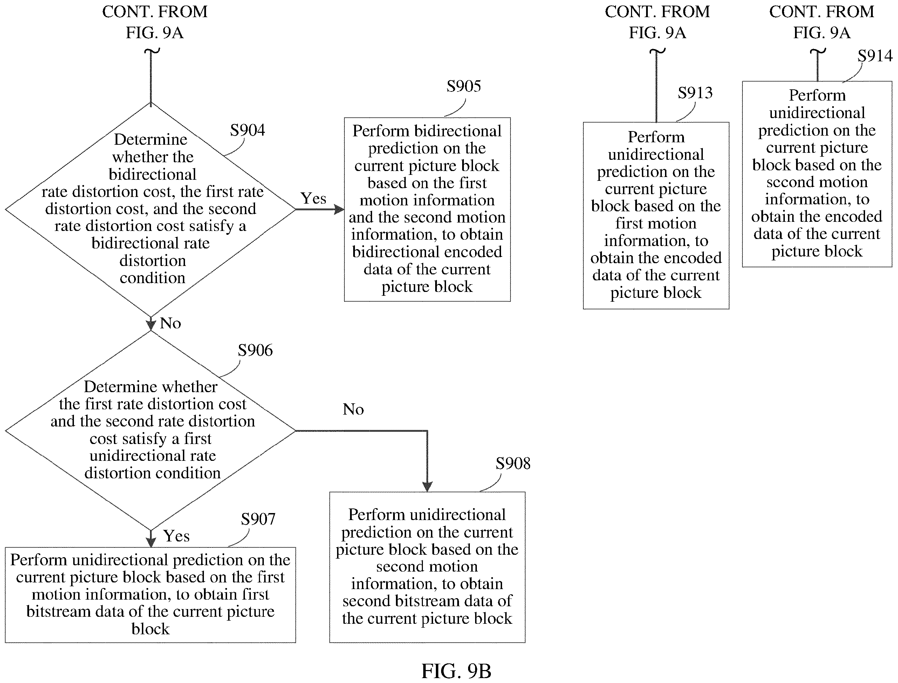

Based on FIG. 7, FIG. 9A and FIG. 9B are a schematic flowchart of an encoding method based on template matching according to an embodiment of the present invention. The method may be performed by a source apparatus 12, specifically may be performed by a video encoder 20, or specifically may be performed by a prediction unit 41. The method may include the following steps.

S901. Perform template matching on a current picture block in reference pictures in a first reference picture list, to obtain first motion information, and perform template matching on the current picture block in reference pictures in a second reference picture list, to obtain second motion information.

S902. Determine whether a reference structure of a frame in which the current picture block is located is a non-low-delay reference structure or a low-delay reference structure; and when the reference structure of the frame in which the current picture block is located is the non-low-delay reference structure, perform S903, or when the reference structure of the frame in which the current picture block is located is the low-delay reference structure, perform S909.

S903. Determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information.

S904. Determine whether the bidirectional rate distortion cost, the first rate distortion cost, and the second rate distortion cost satisfy a bidirectional rate distortion condition; and when the bidirectional rate distortion cost, the first rate distortion cost, and the second rate distortion cost satisfy the bidirectional rate distortion condition, perform S905, or when the bidirectional rate distortion cost, the first rate distortion cost, and the second rate distortion cost do not satisfy the bidirectional rate distortion condition, perform S906.

S905. Perform bidirectional prediction on the current picture block based on the first motion information and the second motion information, to obtain bidirectional bitstream data of the current picture block, where the bidirectional bitstream data includes bitstream data carrying a prediction direction identifier, a value of the prediction direction identifier indicates that encoded data of the current picture block is obtained by performing bidirectional prediction based on the first reference picture list and the second reference picture list, and the bidirectional bitstream data includes the encoded data of the current picture block. The process ends.

S906. Determine whether the first rate distortion cost and the second rate distortion cost satisfy a first unidirectional rate distortion condition; and when the first rate distortion cost and the second rate distortion cost satisfy the first unidirectional rate distortion condition, perform S907, or when the first rate distortion cost and the second rate distortion cost do not satisfy the first unidirectional rate distortion condition, perform S908.

S907. Perform unidirectional prediction on the current picture block based on the first motion information, to obtain first bitstream data of the current picture block, where the first bitstream data includes bitstream data carrying a prediction direction identifier, a value of the prediction direction identifier indicates that encoded data of the current picture block is obtained by performing unidirectional prediction on the current picture block based on the first reference picture list, and the first bitstream data includes the encoded data of the current picture block. The process ends.

S908. Perform unidirectional prediction on the current picture block based on the second motion information, to obtain second bitstream data of the current picture block, where the second bitstream data includes bitstream data carrying a prediction direction identifier, a value of the prediction direction identifier indicates that the current picture block is obtained by performing unidirectional prediction on the current picture block based on the second reference picture list, and the second bitstream data includes the encoded data of the current picture block. The process ends.

S909. Determine, based on the template of the reference picture block corresponding to the first motion information and the template of the reference picture block corresponding to the second motion information, a bidirectional template distortion caused when bidirectional prediction is performed on the current picture block.

S910. Determine whether the bidirectional template distortion, the first template distortion, and the second template distortion satisfy a bidirectional template distortion condition; and when the bidirectional template distortion, the first template distortion, and the second template distortion satisfy the bidirectional template distortion condition, perform S911, or the bidirectional template distortion, the first template distortion, and the second template distortion do not satisfy the bidirectional template distortion condition, perform S912.

S911. Perform bidirectional prediction on the current picture block based on the first motion information and the second motion information, to obtain the encoded data of the current picture block. The process ends.

S912. Determine whether the first template distortion and the second template distortion satisfy a first unidirectional template distortion condition; and when the first template distortion and the second template distortion satisfy the first unidirectional template distortion condition, perform S913, or when the first template distortion and the second template distortion do not satisfy the first unidirectional template distortion condition, perform S914.

S913. Perform unidirectional prediction on the current picture block based on the first motion information, to obtain the encoded data of the current picture block. The process ends.

S914. Perform unidirectional prediction on the current picture block based on the second motion information, to obtain the encoded data of the current picture block. The process ends.

For content in the embodiment in FIG. 9A and FIG. 9B similar to that in the embodiments in FIG. 4 and FIG. 7, refer to the descriptions in the embodiments in FIG. 4 and FIG. 7. Details are not described herein again.

Based on FIG. 7, FIG. 9A and FIG. 9B are a schematic flowchart of an encoding method based on template matching according to an embodiment of the present invention. The method may be performed by a source apparatus 12, specifically may be performed by a video encoder 20, or specifically may be performed by a prediction unit 41. The method may include the following steps.

S1001. Perform template matching on a current picture block in reference pictures in a first reference picture list, to obtain first motion information, and perform template matching on the current picture block in reference pictures in a second reference picture list, to obtain second motion information.

S1002. Determine whether a reference structure of a frame in which the current picture block is located is a non-low-delay reference structure or a low-delay reference structure; and when the reference structure of the frame in which the current picture block is located is the non-low-delay reference structure, perform S1003, or when the reference structure of the frame in which the current picture block is located is the low-delay reference structure, perform S1009.

S1003. Determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information.

S1004. Determine whether the bidirectional rate distortion cost, the first rate distortion cost, and the second rate distortion cost satisfy a bidirectional rate distortion condition; and when the bidirectional rate distortion cost, the first rate distortion cost, and the second rate distortion cost satisfy the bidirectional rate distortion condition, perform S1005, or when the bidirectional rate distortion cost, the first rate distortion cost, and the second rate distortion cost do not satisfy the bidirectional rate distortion condition, perform S1006.

S1005. Perform bidirectional prediction on the current picture block based on the first motion information and the second motion information, to obtain bidirectional bitstream data of the current picture block, where the bidirectional bitstream data includes bitstream data carrying a prediction direction identifier, a value of the prediction direction identifier indicates that encoded data of the current picture block is obtained by performing bidirectional prediction based on the first reference picture list and the second reference picture list, and the bidirectional bitstream data includes the encoded data of the current picture block. The process ends.

S1006. Determine whether the first template distortion and the second template distortion satisfy a first unidirectional template distortion condition; and when the first template distortion and the second template distortion satisfy the first unidirectional template distortion condition, perform S1007, or when the first template distortion and the second template distortion do not satisfy the first unidirectional template distortion condition, perform S1008.

S1007. Perform unidirectional prediction on the current picture block based on the first motion information, to obtain first unidirectional bitstream data of the current picture block, where the first unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the first unidirectional bitstream data includes the encoded data of the current picture block. The process ends.

S 1008. Perform unidirectional prediction on the current picture block based on the second motion information, to obtain second unidirectional bitstream data of the current picture block, where the second unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the second unidirectional bitstream data includes the encoded data of the current picture block. The process ends. S1009. Determine, based on the template of the reference picture block corresponding to the first motion information and the template of the reference picture block corresponding to the second motion information, a bidirectional template distortion caused when bidirectional prediction is performed on the current picture block.

S1010. Determine whether the bidirectional template distortion, the first template distortion, and the second template distortion satisfy a bidirectional template distortion condition; and when the bidirectional template distortion, the first template distortion, and the second template distortion satisfy the bidirectional template distortion condition, perform S1011, or the bidirectional template distortion, the first template distortion, and the second template distortion do not satisfy the bidirectional template distortion condition, perform S1012.

S1011. Perform bidirectional prediction on the current picture block based on the first motion information and the second motion information, to obtain the encoded data of the current picture block. The process ends.

S1012. Determine whether the first template distortion and the second template distortion satisfy a first unidirectional template distortion condition; and when the first template distortion and the second template distortion satisfy the first unidirectional template distortion condition, perform S1013, or when the first template distortion and the second template distortion do not satisfy the first unidirectional template distortion condition, perform S1014.

S1013. Perform unidirectional prediction on the current picture block based on the first motion information, to obtain the encoded data of the current picture block. The process ends.

S 1014. Perform unidirectional prediction on the current picture block based on the second motion information, to obtain the encoded data of the current picture block. The process ends.

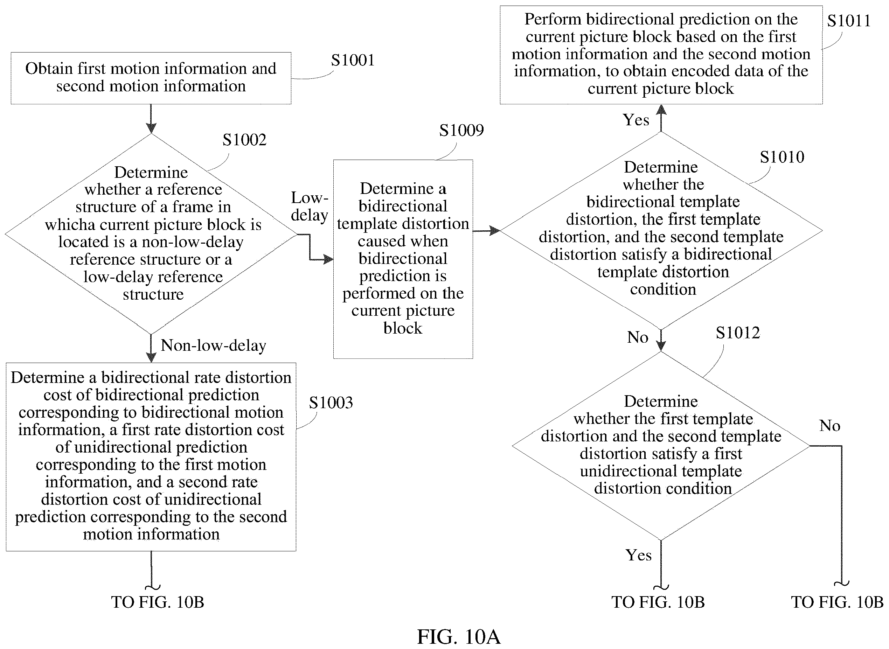

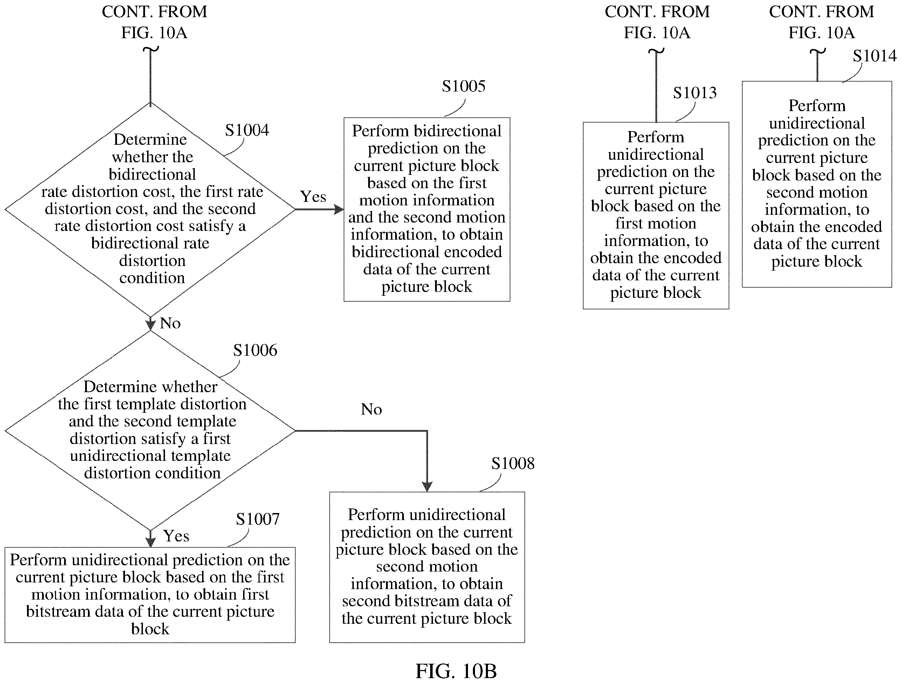

For content in the embodiment in FIG. 10A and FIG. 10B similar to that in the embodiments in FIG. 4 and FIG. 7, refer to the descriptions in the embodiments in FIG. 4 and FIG. 7. Details are not described herein again.

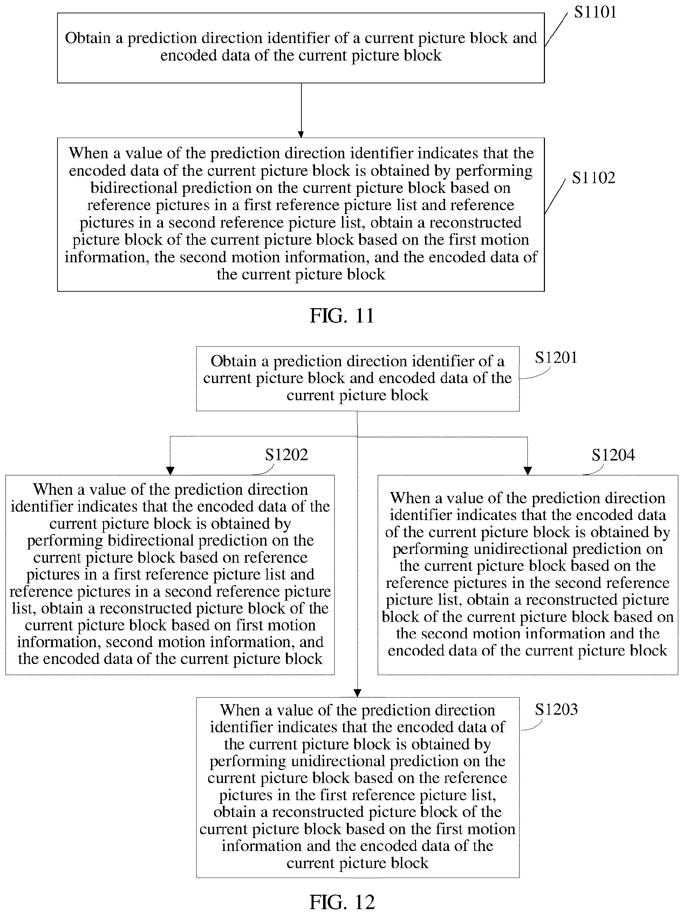

FIG. 11 is a schematic flowchart of a decoding method according to an embodiment of the present invention. The method may be performed by a destination apparatus 14, specifically may be performed by a video decoder 30, or specifically may be performed by a prediction unit 81. The method may include the following steps.

S 1101. Obtain a prediction direction identifier of a current picture block and encoded data of the current picture block.

In some feasible implementations, the prediction direction identifier is obtained only when a reference structure of a frame in which the current picture block is located is a non-low-delay reference structure.

The obtaining a prediction direction identifier of a current picture block and encoded data of the current picture block may include: obtaining bitstream data of the current picture block, and parsing the bitstream data, to obtain the prediction direction identifier of the current picture block and the encoded data of the current picture block. A value of the prediction direction identifier may be directly written to the bitstream data, or may be encoded (for example, entropy encoded) and then written to the bitstream data.

In some feasible implementations, the method may further include: when the reference structure of the frame in which the current picture block is located is a low-delay reference structure, performing template matching on the current picture block in reference pictures in a first reference picture list, to obtain first motion information, a template of a reference picture block corresponding to the first motion information, and a first template distortion between the reference picture block corresponding to the first motion information and the current picture block; performing template matching on the current picture block in reference pictures in a second reference picture list, to obtain second motion information, a template of a reference picture block corresponding to the second motion information, and a second template distortion between the reference picture block corresponding to the second motion information and the current picture block; determining, based on the template of the reference picture block corresponding to the first motion information and the template of the reference picture block corresponding to the second motion information, a bidirectional template distortion caused when bidirectional prediction is performed on the current picture block; and when the bidirectional template distortion, the first template distortion, and the second template distortion satisfy a bidirectional template distortion condition, obtaining a reconstructed picture block of the current picture block based on the first motion information, the second motion information, and the encoded data of the current picture block. The method may further include: when the bidirectional template distortion, the first template distortion, and the second template distortion do not satisfy the bidirectional template distortion condition, and the first template distortion and the second template distortion satisfy the first unidirectional template distortion condition, obtaining a reconstructed picture block of the current picture block based on the first motion information and the encoded data of the current picture block; or when the bidirectional template distortion, the first template distortion, and the second template distortion do not satisfy the bidirectional template distortion condition, and the first template distortion and the second template distortion satisfy the second unidirectional template distortion condition, obtaining a reconstructed picture block of the current picture block based on the second motion information and the encoded data of the current picture block.

The bidirectional template distortion condition may include that the bidirectional template distortion is less than or equal to a template distortion threshold, and the template distortion threshold may be obtained based on the first template distortion and the second template distortion. The template distortion threshold may be the smaller one of the first template distortion and the second template distortion. The template distortion threshold may also be a value obtained by multiplying the smaller one of the first template distortion and the second template distortion by a preset coefficient, and the coefficient may be any real number greater than or equal to 1 and less than or equal to 3, for example, 2 or 1.25.

The first unidirectional template distortion condition may include that the first template distortion is less than or equal to the second template distortion. The second unidirectional template distortion condition may include that the first template distortion is greater than the second template distortion. Alternatively, satisfying the second unidirectional template distortion condition may be not satisfying the first unidirectional template distortion condition.

For a specific implementation of content of this part of performing template matching on the current picture block in the reference pictures in the first reference picture list, to obtain first motion information, a template of a reference picture block corresponding to the first motion information, and a first template distortion between the reference picture block corresponding to the first motion information and the current picture block, and performing template matching on the current picture block in the reference pictures in the second reference picture list, to obtain second motion information, a template of a reference picture block corresponding to the second motion information, and a second template distortion between the reference picture block corresponding to the second motion information and the current picture block, refer to the above description of performing template matching on a current picture block in the reference pictures in the first reference picture list, to obtain first motion information, and perform template matching on the current picture block in the reference pictures in the second reference picture list, to obtain second motion information. Details are not described herein again.

S1102. When a value of the prediction direction identifier indicates that the encoded data of the current picture block is obtained by performing bidirectional prediction on the current picture block based on reference pictures in a first reference picture list and reference pictures in a second reference picture list, perform template matching on the current picture block in the reference pictures in the first reference picture list, to obtain first motion information, and perform template matching on the current picture block in the reference pictures in the second reference picture list, to obtain second motion information; and obtain a reconstructed picture block of the current picture block based on the first motion information, the second motion information, and the encoded data of the current picture block. For the implementation of performing template matching on a current picture block in the reference pictures in the first reference picture list, to obtain first motion information, and perform template matching on the current picture block in the reference pictures in the second reference picture list, to obtain second motion information, refer to the above descriptions in FIG. 1 to FIG. 10A and FIG. 10B. Details are not described herein again. For the implementation of obtaining a reconstructed picture block of the current picture block based on the first motion information, the second motion information, and the encoded data of the current picture block, refer to the above descriptions in FIG. 1 to FIG. 10A and FIG. 10B. Details are not described herein again.

In some feasible implementations, the method may further include:
when a value of the prediction direction identifier indicates that the encoded data of the current picture block is obtained by performing unidirectional prediction on the current picture block based on the reference pictures in the first reference picture list, performing template matching on the current picture block in the reference pictures in the first reference picture list, to obtain first motion information, and obtaining a reconstructed picture block of the current picture block based on the first motion information and the encoded data of the current picture block.

In some feasible implementations, the method may further include:
when a value of the prediction direction identifier indicates that the encoded data of the current picture block is obtained by performing unidirectional prediction on the current picture block based on the reference pictures in the second reference picture list, performing template matching on the current picture block in the reference pictures in the second reference picture list, to obtain second motion information, and obtaining a reconstructed picture block of the current picture block based on the second motion information and the encoded data of the current picture block.

In some feasible implementations, the method may further include:
when a value of the prediction direction identifier indicates that the encoded data of the current picture block is obtained by performing unidirectional prediction on the current picture block based on the reference pictures in the first reference picture list or the reference pictures in the second reference picture list, performing template matching on the current picture block in the reference pictures in the first reference picture list, to obtain first motion information, and performing template matching on the current picture block in the reference pictures in the second reference picture list, to obtain second motion information; and when a first template distortion between a reference picture block corresponding to the first motion information and the current picture block and a second template distortion between a reference picture block corresponding to the second motion information and the current picture block satisfy a first unidirectional template distortion condition, obtaining a reconstructed picture block of the current picture block based on the first motion information and the encoded data of the current picture block; or when the first template distortion and the second template distortion satisfy a second unidirectional template distortion condition, obtaining a reconstructed picture block of the current picture block based on the second motion information and the encoded data of the current picture block.

For content in the embodiment in FIG. 11 similar to that in the embodiments in FIG. 4 and FIG. 10A and FIG. 10B, refer to the descriptions in the embodiments in FIG. 4 and FIG. 10A and FIG. 10B. Details are not described herein again.

Based on FIG. 11, FIG. 12 is a schematic flowchart of a decoding method according to an embodiment of the present invention. The method may be performed by a destination apparatus 14, specifically may be performed by a video decoder 30, or specifically may be performed by a prediction unit 81. The method may include the following steps.

S1201. Obtain a prediction direction identifier of a current picture block and encoded data of the current picture block.

S1202. When a value of the prediction direction identifier indicates that the encoded data of the current picture block is obtained by performing bidirectional prediction on the current picture block based on reference pictures in a first reference picture list and reference pictures in a second reference picture list, perform template matching on the current picture block in the reference pictures in the first reference picture list, to obtain first motion information, and perform template matching on the current picture block in the reference pictures in the second reference picture list, to obtain second motion information; and obtain a reconstructed picture block of the current picture block based on the first motion information, the second motion information, and the encoded data of the current picture block. The process ends.

S1203. When a value of the prediction direction identifier indicates that the encoded data of the current picture block is obtained by performing unidirectional prediction on the current picture block based on the reference pictures in the first reference picture list, perform template matching on the current picture block in the reference pictures in the first reference picture list, to obtain first motion information, and obtain a reconstructed picture block of the current picture block based on the first motion information and the encoded data of the current picture block. The process ends.

S1204. When a value of the prediction direction identifier indicates that the encoded data of the current picture block is obtained by performing unidirectional prediction on the current picture block based on the reference pictures in the second reference picture list, perform template matching on the current picture block in the reference pictures in the second reference picture list, to obtain second motion information, and obtain a reconstructed picture block of the current picture block based on the second motion information and the encoded data of the current picture block. The process ends.

For content in the embodiment in FIG. 12 similar to that in the embodiments in FIG. 4 and FIG. 11, refer to the descriptions in the embodiments in FIG. 4 and FIG. 10A and FIG. 10B. Details are not described herein again.

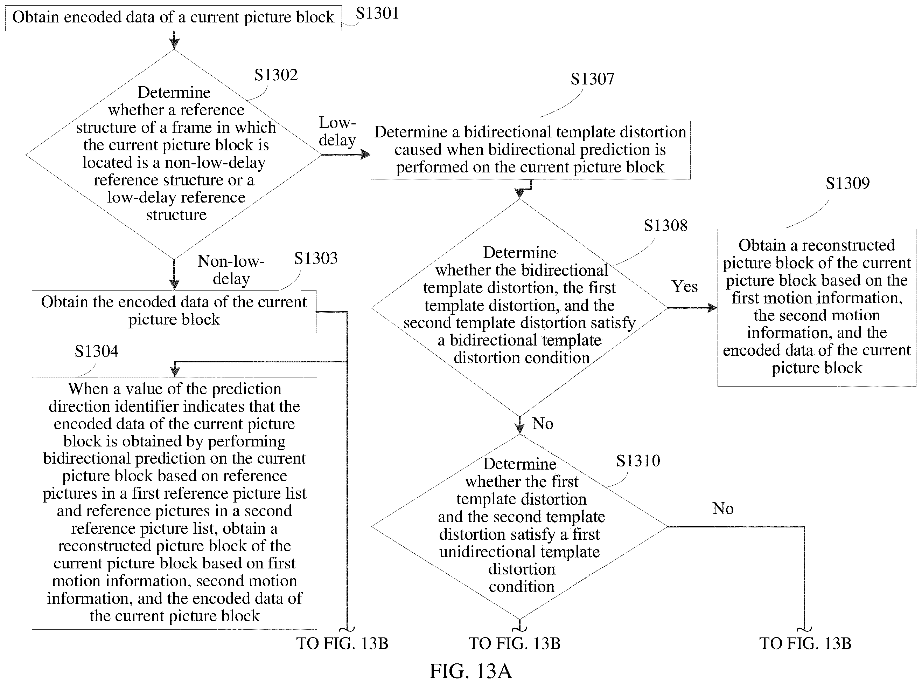

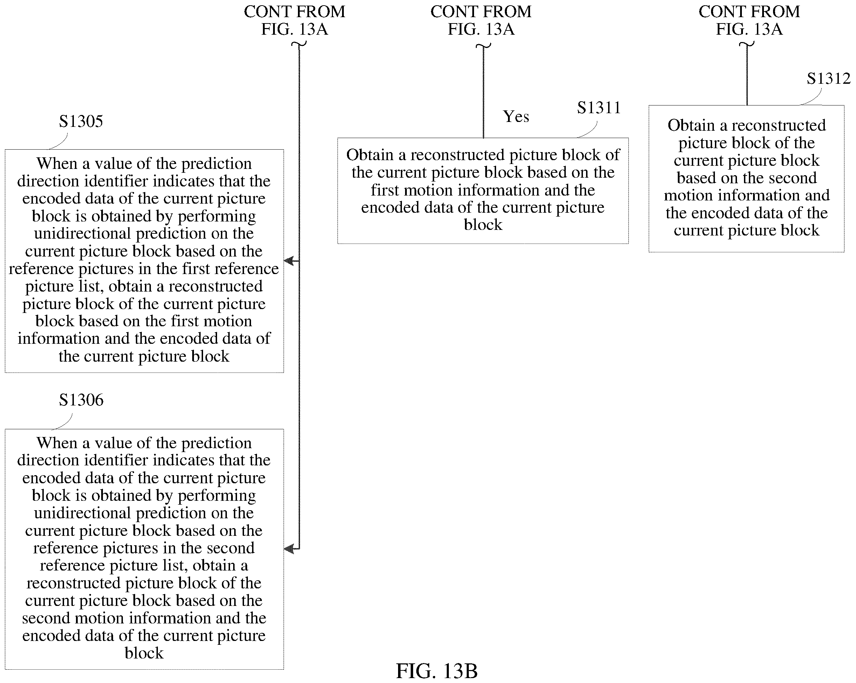

Based on FIG. 11, FIG. 13A and FIG. 13B are a schematic flowchart of a decoding method according to an embodiment of the present invention. The method may be performed by a destination apparatus 14, specifically may be performed by a video decoder 30, or specifically may be performed by a prediction unit 81. The method may include the following steps.

S1301. Obtain encoded data of a current picture block.

S1302. Determine whether a reference structure of a frame in which the current picture block is located is a non-low-delay reference structure or a low-delay reference structure; and when the reference structure of the frame in which the current picture block is located is the non-low-delay reference structure, perform S1303, or when the reference structure of the frame in which the current picture block is located is the low-delay reference structure, perform S1307.

S1303. Obtain a prediction direction identifier of the current picture block.

S1304. When a value of the prediction direction identifier indicates that the encoded data of the current picture block is obtained by performing bidirectional prediction on the current picture block based on reference pictures in a first reference picture list and reference pictures in a second reference picture list, perform template matching on the current picture block in the reference pictures in the first reference picture list, to obtain first motion information, and perform template matching on the current picture block in the reference pictures in the second reference picture list, to obtain second motion information; and obtain a reconstructed picture block of the current picture block based on the first motion information, the second motion information, and the encoded data of the current picture block. The process ends.

S1305. When a value of the prediction direction identifier indicates that the encoded data of the current picture block is obtained by performing unidirectional prediction on the current picture block based on the reference pictures in the first reference picture list, perform template matching on the current picture block in the reference pictures in the first reference picture list, to obtain first motion information, and obtain a reconstructed picture block of the current picture block based on the first motion information and the encoded data of the current picture block. The process ends.

S1306. When a value of the prediction direction identifier indicates that the encoded data of the current picture block is obtained by performing unidirectional prediction on the current picture block based on the reference pictures in the second reference picture list, perform template matching on the current picture block in the reference pictures in the second reference picture list, to obtain second motion information, and obtain a reconstructed picture block of the current picture block based on the second motion information and the encoded data of the current picture block. The process ends.

S1307. Perform template matching on the current picture block in the reference pictures in the first reference picture list, to obtain first motion information, a template of a reference picture block corresponding to the first motion information, and a first template distortion between the reference picture block corresponding to the first motion information and the current picture block; and perform template matching on the current picture block in the reference pictures in the second reference picture list, to obtain second motion information, a template of a reference picture block corresponding to the second motion information, and a second template distortion between the reference picture block corresponding to the second motion information and the current picture block; and determine, based on the template of the reference picture block corresponding to the first motion information and the template of the reference picture block corresponding to the second motion information, a bidirectional template distortion caused when bidirectional prediction is performed on the current picture block.

S1308. Determine whether the bidirectional template distortion, the first template distortion, and the second template distortion satisfy a bidirectional template distortion condition; and when the bidirectional template distortion, the first template distortion, and the second template distortion satisfy the bidirectional template distortion condition, perform S1309, or the bidirectional template distortion, the first template distortion, and the second template distortion do not satisfy the bidirectional template distortion condition, perform S1310.

S1309. Obtain a reconstructed picture block of the current picture block based on the first motion information, the second motion information, and the encoded data of the current picture block. The process ends.

S1310. Determine whether the first template distortion and the second template distortion satisfy a first unidirectional template distortion condition; and when the first template distortion and the second template distortion satisfy the first unidirectional template distortion condition, perform S1311, or when the first template distortion and the second template distortion do not satisfy the first unidirectional template distortion condition, perform S1012.

S1311. Obtain a reconstructed picture block of the current picture block based on the first motion information and the encoded data of the current picture block. The process ends.

S1312. Obtain a reconstructed picture block of the current picture block based on the second motion information and the encoded data of the current picture block. The process ends.

For content in the embodiment in FIG. 13A and FIG. 13B similar to that in the embodiments in FIG. 4 and FIG. 11, refer to the descriptions in the embodiments in FIG. 4 and FIG. 10A and FIG. 10B. Details are not described herein again.

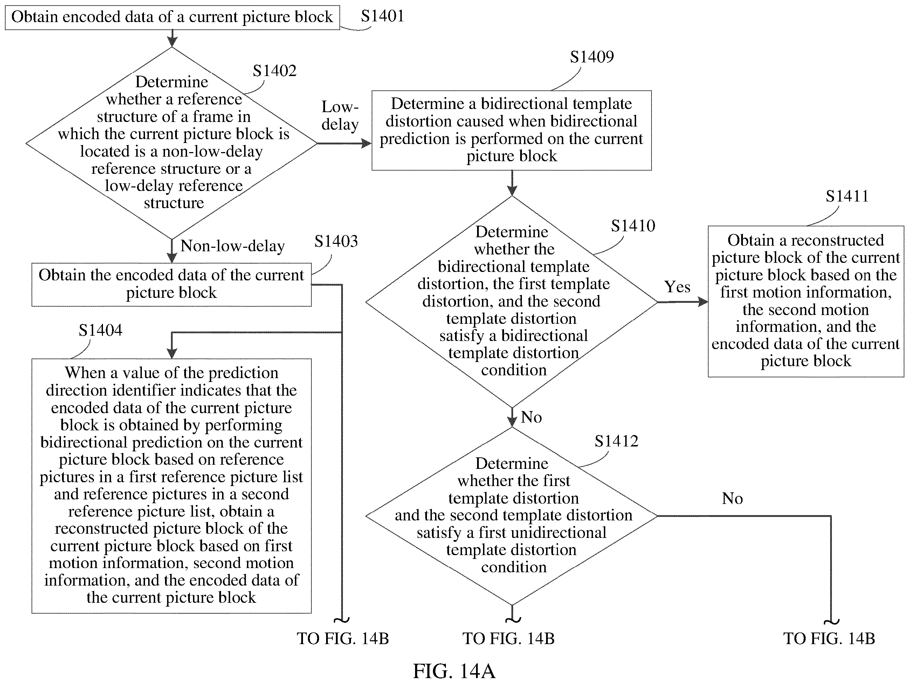

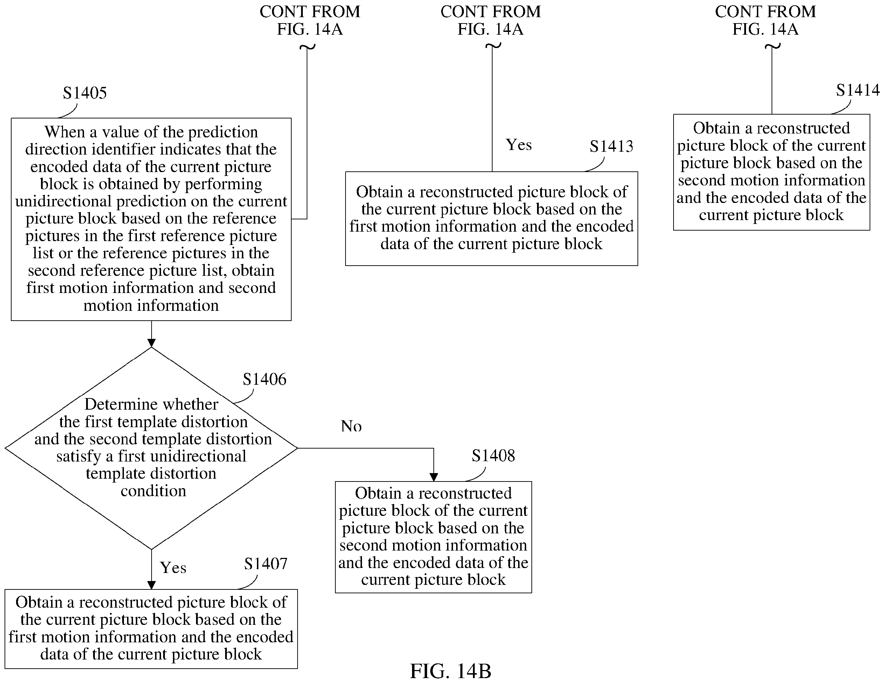

Based on FIG. 11, FIG. 14A and FIG. 14B are a schematic flowchart of a decoding method according to an embodiment of the present invention. The method may be performed by a destination apparatus 14, specifically may be performed by a video decoder 30, or specifically may be performed by a prediction unit 81. The method may include the following steps.

S1401. Obtain encoded data of a current picture block.

S1402. Determine whether a reference structure of a frame in which the current picture block is located is a non-low-delay reference structure or a low-delay reference structure; and when the reference structure of the frame in which the current picture block is located is the non-low-delay reference structure, perform S1403, or when the reference structure of the frame in which the current picture block is located is the low-delay reference structure, perform S1409.

S1403. Obtain a prediction direction identifier of the current picture block.

S1404. When a value of the prediction direction identifier indicates that the encoded data of the current picture block is obtained by performing bidirectional prediction on the current picture block based on reference pictures in a first reference picture list and reference pictures in a second reference picture list, perform template matching on the current picture block in the reference pictures in the first reference picture list, to obtain first motion information, and perform template matching on the current picture block in the reference pictures in the second reference picture list, to obtain second motion information; and obtain a reconstructed picture block of the current picture block based on the first motion information, the second motion information, and the encoded data of the current picture block. The process ends.

S1405. When a value of the prediction direction identifier indicates that the encoded data of the current picture block is obtained by performing unidirectional prediction on the current picture block based on the reference pictures in the first reference picture list or the reference pictures in the second reference picture list, perform template matching on the current picture block in the reference pictures in the first reference picture list, to obtain first motion information, and perform template matching on the current picture block in the reference pictures in the second reference picture list, to obtain second motion information.

S1406. Determine whether a first template distortion between a reference picture block corresponding to the first motion information and the current picture block and a second template distortion between a reference picture block corresponding to the second motion information and the current picture block satisfy a first unidirectional template distortion condition; when the first template distortion and the second template distortion satisfy the first unidirectional template distortion condition, perform S1407, or when the first template distortion and the second template distortion do not satisfy the first unidirectional template distortion condition, perform S1408.

S1407. Obtain a reconstructed picture block of the current picture block based on the first motion information and the encoded data of the current picture block. The process ends.

S1408. Obtain a reconstructed picture block of the current picture block based on the second motion information and the encoded data of the current picture block. The process ends.

S1409. Perform template matching on the current picture block in the reference pictures in the first reference picture list, to obtain first motion information, a template of a reference picture block corresponding to the first motion information, and a first template distortion between the reference picture block corresponding to the first motion information and the current picture block; and perform template matching on the current picture block in the reference pictures in the second reference picture list, to obtain second motion information, a template of a reference picture block corresponding to the second motion information, and a second template distortion between the reference picture block corresponding to the second motion information and the current picture block; and determine, based on the template of the reference picture block corresponding to the first motion information and the template of the reference picture block corresponding to the second motion information, a bidirectional template distortion caused when bidirectional prediction is performed on the current picture block.

S1410. Determine whether the bidirectional template distortion, the first template distortion, and the second template distortion satisfy a bidirectional template distortion condition; and when the bidirectional template distortion, the first template distortion, and the second template distortion satisfy the bidirectional template distortion condition, perform S1411, or the bidirectional template distortion, the first template distortion, and the second template distortion do not satisfy the bidirectional template distortion condition, perform S1412.

S1411. Obtain a reconstructed picture block of the current picture block based on the first motion information, the second motion information, and the encoded data of the current picture block. The process ends.

S1412. Determine whether the first template distortion and the second template distortion satisfy a first unidirectional template distortion condition; and when the first template distortion and the second template distortion satisfy the first unidirectional template distortion condition, perform S1413, or when the first template distortion and the second template distortion do not satisfy the first unidirectional template distortion condition, perform S1414.

S1413. Obtain a reconstructed picture block of the current picture block based on the first motion information and the encoded data of the current picture block. The process ends.

S1414. Obtain a reconstructed picture block of the current picture block based on the first motion information and the encoded data of the current picture block. The process ends.

For content in the embodiment in FIG. 14A and FIG. 14B similar to that in the embodiments in FIG. 4 and FIG. 11, refer to the descriptions in the embodiments in FIG. 4 and FIG. 10A and FIG. 10B. Details are not described herein again.

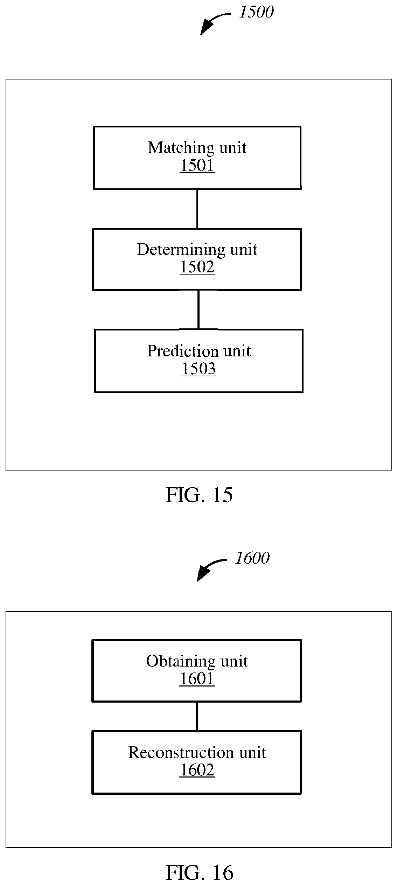

Referring to FIG. 15, an embodiment of the present invention provides an encoding apparatus 1500. The apparatus includes a matching unit 1501, a determining unit 1502, and a prediction unit 1503.

The matching unit 1501 is configured to determine first motion information based on a first motion information list of a current picture block, where a first template distortion between a reference picture block corresponding to the first motion information and the current picture block is less than or equal to a template distortion between a reference picture block corresponding to each motion information in the first motion information list and the current picture block; and determine second motion information based on a second motion information list of the current picture block, where a second template distortion between a reference picture block corresponding to the second motion information and the current picture block is less than or equal to a template distortion between a reference picture block corresponding to each motion information in the second motion information list and the current picture block.

In some feasible implementations, the matching unit 1501 may be configured to: use motion information corresponding to a minimum one of template distortions between reference picture blocks corresponding to all motion information in the first motion information list and the current picture block as first initial motion information; and perform motion search in an area in which a reference picture block corresponding to the first initial motion information is located, to obtain the first motion information; and

use motion information corresponding to a minimum one of template distortions between reference picture blocks corresponding to all motion information in the second motion information list and the current picture block as second initial motion information; and perform motion search in an area in which a reference picture block corresponding to the second initial motion information is located, to obtain the second motion information.

The determining unit 1502 is configured to determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information.

In some feasible implementations, the determining unit 1502 may be configured to:
determine the bidirectional rate distortion cost, the first rate distortion cost, and the second rate distortion cost based on the first motion information and the second motion information only when a reference structure of a frame in which the current picture block is located is a non-low-delay reference structure.

The prediction unit 1503 is configured to: when the bidirectional rate distortion cost is less than or equal to the smaller one of the first rate distortion cost and the second rate distortion cost, perform bidirectional prediction on the current picture block based on the first motion information and the second motion information, to obtain bidirectional bitstream data of the current picture block, where the bidirectional bitstream data includes bitstream data carrying a prediction direction identifier, and a value of the prediction direction identifier indicates that encoded data of the current picture block is obtained by performing bidirectional prediction on the current picture block based on the first motion information list and the second motion information list.

In some feasible implementations, the prediction unit 1503 may be further configured to:
when the bidirectional rate distortion cost is greater than the smaller one of the first rate distortion cost and the second rate distortion cost and the first rate distortion cost is less than or equal to the second rate distortion cost, perform unidirectional prediction on the current picture block based on the first motion information, to obtain first bitstream data of the current picture block, where the first bitstream data includes bitstream data carrying a prediction direction identifier, and a value of the prediction direction identifier indicates that encoded data of the current picture block is obtained by performing unidirectional prediction on the current picture block based on the first motion information list.

Alternatively, in some feasible implementations, the prediction unit 1503 may be further configured to: when the bidirectional rate distortion cost is greater than the smaller one of the first rate distortion cost and the second rate distortion cost and the first rate distortion cost is greater than the second rate distortion cost, perform unidirectional prediction on the current picture block based on the second motion information, to obtain second bitstream data of the current picture block, where the second bitstream data includes bitstream data carrying a prediction direction identifier, and a value of the prediction direction identifier indicates that encoded data of the current picture block is obtained by performing unidirectional prediction on the current picture block based on the second motion information list.

In some feasible implementations, the prediction unit 1503 may be further configured to: when the bidirectional rate distortion cost is greater than the smaller one of the first rate distortion cost and the second rate distortion cost and the first template distortion is less than or equal to the second template distortion, perform unidirectional prediction on the current picture block based on the first motion information, to obtain first unidirectional bitstream data of the current picture block, where the first unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list.

Alternatively, in some feasible implementations, the prediction unit 1503 may be further configured to: when the bidirectional rate distortion cost is greater than the smaller one of the first rate distortion cost and the second rate distortion cost and the first template distortion is greater than the second template distortion, perform unidirectional prediction on the current picture block based on the second motion information, to obtain second unidirectional bitstream data of the current picture block, where the second unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list.

In some feasible implementations, the prediction unit 1503 may be further configured to: when the reference structure of the frame in which the current picture block is located is a low-delay reference structure, determine, based on the first template distortion and the second template distortion, a bidirectional template distortion caused when bidirectional prediction is performed on the current picture block; and when the bidirectional template distortion is less than or equal to a template distortion threshold, perform bidirectional prediction on the current picture block based on the first motion information and the second motion information, to obtain the encoded data of the current picture block, where the template distortion threshold is obtained based on the first template distortion and the second template distortion. The prediction unit 1503 may be further configured to: when the bidirectional template distortion is greater than the template distortion threshold, and the first template distortion is less than or equal to the second template distortion, perform bidirectional prediction on the current picture block based on the first motion information, to obtain the encoded data of the current picture block. The prediction unit 1503 may be further configured to: when the bidirectional template distortion is greater than the template distortion threshold, and the first template distortion is greater than the second template distortion, perform bidirectional prediction on the current picture block based on the second motion information, to obtain the encoded data of the current picture block.

It may be understood that, functions of units of the encoding apparatus of this embodiment may be specifically implemented based on the method in the foregoing encoding method embodiment. For a specific implementation process

44

of the functions, refer to the related description of the foregoing method embodiment. Details are not described herein again.

Referring to FIG. 16, an embodiment of the present invention provides a decoding apparatus 1600. The apparatus includes an obtaining unit 1601 and a reconstruction unit 1602.

The obtaining unit 1601 is configured to obtain a prediction direction identifier and encoded data of a current picture block.

In some feasible implementations, the obtaining unit 1601 may be configured to obtain the prediction direction identifier only when a reference structure of a frame in which the current picture block is located is a non-low-delay reference structure.

The reconstruction unit 1602 is configured to: when a value of the prediction direction identifier indicates that the encoded data of the current picture block is obtained by performing bidirectional prediction on the current picture block based on a first motion information list of the current picture block and a second motion information list of the current picture block, determine first motion information based on the first motion information list, where a first template distortion between a reference picture block corresponding to the first motion information and the current picture block is less than or equal to a template distortion between a reference picture block corresponding to each motion information in the first motion information list and the current picture block; determine second motion information based on the second motion information list, where a second template distortion between a reference picture block corresponding to the second motion information and the current picture block is less than or equal to a template distortion between a reference picture block corresponding to each motion information in the second motion information list and the current picture block; and obtain a reconstructed picture block of the current picture block based on the first motion information, the second motion information, and the encoded data of the current picture block.

In some feasible implementations, the reconstruction unit 1602 may be further configured to:

when a value of the prediction direction identifier indicates that the encoded data of the current picture block is obtained by performing unidirectional prediction on the current picture block based on the first motion information list of the current picture block, obtain a reconstructed picture block of the current picture block based on the first motion information list and the encoded data of the current picture block; or
the reconstruction unit 1602 may be further configured to: when a value of the prediction direction identifier indicates that the encoded data of the current picture block is obtained by performing unidirectional prediction on the current picture block based on the second motion information list of the current picture block, obtain a reconstructed picture block of the current picture block based on the second motion information list and the encoded data of the current picture block.

In some feasible implementations, the reconstruction unit 1602 may be further configured to: when a value of the prediction direction identifier indicates that the encoded data of the current picture block is obtained by performing unidirectional prediction on the current picture block based on the first motion information list of the current picture block or the second motion information list of the current picture block, determine first motion information based on the first motion information list, where a first template distortion between a reference picture block corresponding to the first motion information and the current picture block is less than or equal to a template distortion between a reference picture block corresponding to each motion information in the first motion information list and the current picture block; determine second motion information based on the second motion information list, where a second template distortion between a reference picture block corresponding to the second motion information and the current picture block is less than or equal to a template distortion between a reference picture block corresponding to each motion information in the second motion information list and the current picture block; and when the first template distortion is less than or equal to the second template distortion, obtain a reconstructed picture block of the current picture block based on the first motion information and the encoded data of the current picture block; or when the first template distortion is greater than the second template distortion, obtain a reconstructed picture block of the current picture block based on the second motion information and the encoded data of the current picture block.

In some feasible implementations, the reconstruction unit 1602 may be further configured to: when the reference structure of the frame in which the current picture block is located is a low-delay reference structure, determine first motion information based on the first motion information list of the current picture block, where a first template distortion between a reference picture block corresponding to the first motion information and the current picture block is less than or equal to a template distortion between a reference picture block corresponding to each motion information in the first motion information list and the current picture block; determine second motion information based on the second motion information list of the current picture block, where a second template distortion between a reference picture block corresponding to the second motion information and the current picture block is less than or equal to a template distortion between a reference picture block corresponding to each motion information in the second motion information list and the current picture block; determine, based on the first template distortion and the second template distortion, a bidirectional template distortion caused when bidirectional prediction is performed on the current picture block; and when the bidirectional template distortion is less than or equal to a template distortion threshold, obtain a reconstructed picture block of the current picture block based on the first motion information list, the second motion information list, and the encoded data of the current picture block, where the template distortion threshold is obtained based on the first template distortion and the second template distortion. The reconstruction unit 1602 may be further configured to: when the first template distortion is less than or equal to the second template distortion, obtain a reconstructed picture block of the current picture block based on the first motion information list and the encoded data of the current picture block. The reconstruction unit 1602 may be further configured to: when the first template distortion is greater than the second template distortion, obtain a reconstructed picture block of the current picture block based on the second motion information list and the encoded data of the current picture block.

It may be understood that, functions of units of the decoding apparatus of this embodiment may be specifically implemented based on the method in the foregoing decoding method embodiment. For a specific implementation process of the functions, refer to the related description of the foregoing method embodiment. Details are not described herein again.

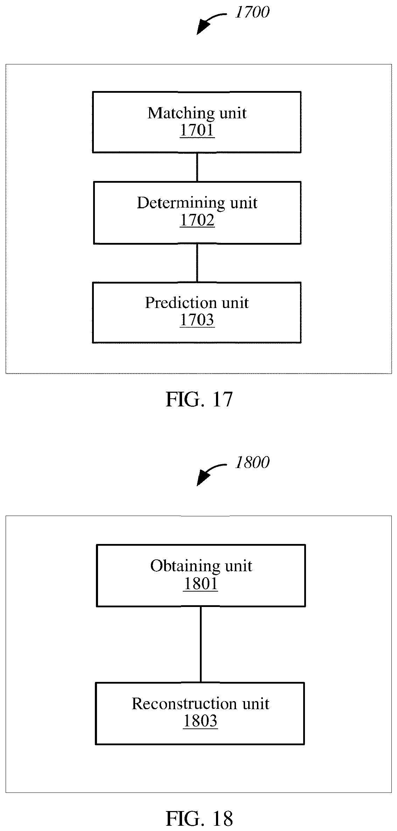

Referring to FIG. 17, an embodiment of the present invention provides an encoding apparatus 1700. The apparatus includes a matching unit 1701, a determining unit 1702, and a prediction unit 1703.

The matching unit 1701 is configured to perform template matching on a current picture block in reference pictures in a first reference picture list, to obtain first motion information, and perform template matching on the current picture block in reference pictures in a second reference picture list, to obtain second motion information.

The determining unit 1702 is configured to determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information.

The prediction unit 1703 is configured to: when the bidirectional rate distortion cost, the first rate distortion cost, and the second rate distortion cost satisfy a bidirectional rate distortion condition, perform bidirectional prediction on the current picture block based on the first motion information and the second motion information, to obtain bidirectional bitstream data of the current picture block, where the bidirectional bitstream data includes bitstream data carrying a prediction direction identifier, a value of the prediction direction identifier indicates that encoded data of the current picture block is obtained by performing bidirectional prediction based on the first reference picture list and the second reference picture list, and the bidirectional bitstream data includes the encoded data of the current picture block.

In some feasible implementations, the prediction unit 1703 may be further configured to:
when the bidirectional rate distortion cost, the first rate distortion cost, and the second rate distortion cost do not satisfy the bidirectional rate distortion condition, and the first rate distortion cost and the second rate distortion cost satisfy a first unidirectional rate distortion condition, perform unidirectional prediction on the current picture block based on the first motion information, to obtain first bitstream data of the current picture block, where the first bitstream data includes bitstream data carrying a prediction direction identifier, a value of the prediction direction identifier indicates that encoded data of the current picture block is obtained by performing unidirectional prediction on the current picture block based on the first reference picture list, and the first bitstream data includes the encoded data of the current picture block.

In some feasible implementations, the prediction unit 1703 may be further configured to:
when the bidirectional rate distortion cost, the first rate distortion cost, and the second rate distortion cost do not satisfy the bidirectional rate distortion condition, and the first rate distortion cost and the second rate distortion cost satisfy a second unidirectional rate distortion condition, perform unidirectional prediction on the current picture block based on the second motion information, to obtain second bitstream data of the current picture block, where the second bitstream data includes bitstream data carrying a prediction direction identifier, a value of the prediction direction identifier indicates that the current picture block is obtained by performing unidirectional prediction on the current picture block based on the second reference picture list, and the second bitstream data includes the encoded data of the current picture block.

In some feasible implementations, the determining unit 1702 may be configured to: determine the bidirectional rate distortion cost, the first rate distortion cost, and the second rate distortion cost based on the first motion information and the second motion information only when a reference structure of a frame in which the current picture block is located is a non-low-delay reference structure.

In some feasible implementations, the prediction unit 1703 may be further configured to: when the bidirectional rate distortion cost, the first rate distortion cost, and the second rate distortion cost do not satisfy the bidirectional rate distortion condition, and the first template distortion and the second template distortion satisfy a first unidirectional template distortion condition, perform unidirectional prediction on the current picture block based on the first motion information, to obtain first unidirectional bitstream data of the current picture block, where the first unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the first unidirectional bitstream data includes the encoded data of the current picture block.

In some feasible implementations, the prediction unit 1703 may be further configured to: when the bidirectional rate distortion cost, the first rate distortion cost, and the second rate distortion cost do not satisfy the bidirectional rate distortion condition, and the first template distortion and the second template distortion satisfy a second unidirectional template distortion condition, perform unidirectional prediction on the current picture block based on the second motion information, to obtain second unidirectional bitstream data of the current picture block, where the second unidirectional bitstream data includes bitstream data carrying a prediction direction identifier, a value of the prediction direction identifier indicates that encoded data of the current picture block is obtained by performing unidirectional prediction on the current picture block based on the first reference picture list or the second reference picture list, and the second unidirectional bitstream data includes the encoded data of the current picture block.

In some feasible implementations, the determining unit 1702 may be further configured to:
when the reference structure of the frame in which the current picture block is located is a low-delay reference structure, determine, based on the template of the reference picture block corresponding to the first motion information and the template of the reference picture block corresponding to the second motion information, a bidirectional template distortion caused when bidirectional prediction is performed on the current picture block. Correspondingly, the prediction unit 1703 may be further configured to: when the bidirectional template distortion, the first template distortion, and the second template distortion satisfy a bidirectional template distortion condition, perform bidirectional prediction on the current picture block based on the first motion information and the second motion information, to obtain the encoded data of the current picture block. The prediction unit 1703 may be further configured to: when the first template distortion and the second template distortion satisfy a first unidirectional template distortion condition, perform unidirectional prediction on the current picture block based on the first motion information, to obtain the encoded data of the current picture block. The prediction unit 1703 may be further configured to: when the first template distortion and the second template distortion satisfy a second unidirectional template distortion condition, perform unidirectional prediction on the current picture block based on the second motion information, to obtain the encoded data of the current picture block.

It may be understood that, functions of units of the encoding apparatus of this embodiment may be specifically implemented based on the method in the foregoing encoding method embodiment. For a specific implementation process of the functions, refer to the related description of the foregoing method embodiment. Details are not described herein again.

Referring to FIG. 18, an embodiment of the present invention provides a decoding apparatus 1800. The apparatus includes an obtaining unit 1801 and a reconstruction unit 1802.

The obtaining unit 1801 is configured to obtain a prediction direction identifier of a current picture block and encoded data of the current picture block.

The reconstruction unit 1802 is configured to: when a value of the prediction direction identifier indicates that the encoded data of the current picture block is obtained by performing bidirectional prediction on the current picture block based on reference pictures in a first reference picture list and reference pictures in a second reference picture list, perform template matching on the current picture block in the reference pictures in the first reference picture list, to obtain first motion information, and perform template matching on the current picture block in the reference pictures in the second reference picture list, to obtain second motion information; and obtain a reconstructed picture block of the current picture block based on the first motion information, the second motion information, and the encoded data of the current picture block.

In some feasible implementations, the reconstruction unit 1802 may be further configured to:
when a value of the prediction direction identifier indicates that the encoded data of the current picture block is obtained by performing unidirectional prediction on the current picture block based on the reference pictures in the first reference picture list, perform template matching on the current picture block in the reference pictures in the first reference picture list, to obtain first motion information, and obtain a reconstructed picture block of the current picture block based on the first motion information and the encoded data of the current picture block.

In some feasible implementations, the reconstruction unit 1802 may be further configured to:
when a value of the prediction direction identifier indicates that the encoded data of the current picture block is obtained by performing unidirectional prediction on the current picture block based on the reference pictures in the second reference picture list, perform template matching on the current picture block in the reference pictures in the second reference picture list, to obtain second motion information, and obtain a reconstructed picture block of the current picture block based on the second motion information and the encoded data of the current picture block.

In some feasible implementations, the reconstruction unit 1802 may be further configured to:

when a value of the prediction direction identifier indicates that the encoded data of the current picture block is obtained by performing unidirectional prediction on the current picture block based on the reference pictures in the first reference picture list or the reference pictures in the second reference picture list, perform template matching on the current picture block in the reference pictures in the first reference picture list, to obtain first motion information, and perform template matching on the current picture block in the reference pictures in the second reference picture list, to obtain second motion information; and

when a first template distortion between a reference picture block corresponding to the first motion information and the current picture block and a second template distortion between a reference picture block corresponding to the second motion information and the current picture block satisfy a first unidirectional template distortion condition, obtain a reconstructed picture block of the current picture block based on the first motion information and the encoded data of the current picture block; or when the first template distortion and the second template distortion satisfy a second unidirectional template distortion condition, obtain a reconstructed picture block of the current picture block based on the second motion information and the encoded data of the current picture block.

The first unidirectional template distortion condition may include that the first template distortion is less than or equal to the second template distortion.

The second unidirectional template distortion condition may include that the first template distortion is greater than the second template distortion.

In some feasible implementations, the obtaining unit 1801 is configured to obtain the prediction direction identifier only when a reference structure of a frame in which the current picture block is located is a non-low-delay reference structure.

In some feasible implementations, the reconstruction unit 1802 may be further configured to: when the reference structure of the frame in which the current picture block is located is a low-delay reference structure, perform template matching on the current picture block in the reference pictures in the first reference picture list, to obtain first motion information, a template of a reference picture block corresponding to the first motion information, and a first template distortion between the reference picture block corresponding to the first motion information and the current picture block; and perform template matching on the current picture block in the reference pictures in the second reference picture list, to obtain second motion information, a template of a reference picture block corresponding to the second motion information, and a second template distortion between the reference picture block corresponding to the second motion information and the current picture block;

determine, based on the template of the reference picture block corresponding to the first motion information and the template of the reference picture block corresponding to the second motion information, a bidirectional template distortion caused when bidirectional prediction is performed on the current picture block; and

when the bidirectional template distortion, the first template distortion, and the second template distortion satisfy a bidirectional template distortion condition, obtain a reconstructed picture block of the current picture block based on the first motion information, the second motion information, and the encoded data of the current picture block. The reconstruction unit 1802 may be further configured to: when the first template distortion and the second template distortion satisfy a first unidirectional template distortion condition, obtain a reconstructed picture block of the current picture block based on the first motion information and the encoded data of the current picture block. The reconstruction unit 1802 may be further configured to: when the first template distortion and the second template distortion satisfy a second unidirectional template distortion condition, obtain a reconstructed picture block of the current picture block based on the second motion information and the encoded data of the current picture block.

The bidirectional template distortion condition may include that the bidirectional template distortion is less than or equal to a template distortion threshold, and the template distortion threshold may be obtained based on the first template distortion and the second template distortion.

It may be understood that, functions of units of the encoding apparatus of this embodiment may be specifically implemented based on the method in the foregoing encoding method embodiment. For a specific implementation process of the functions, refer to the related description of the foregoing method embodiment. Details are not described herein again.

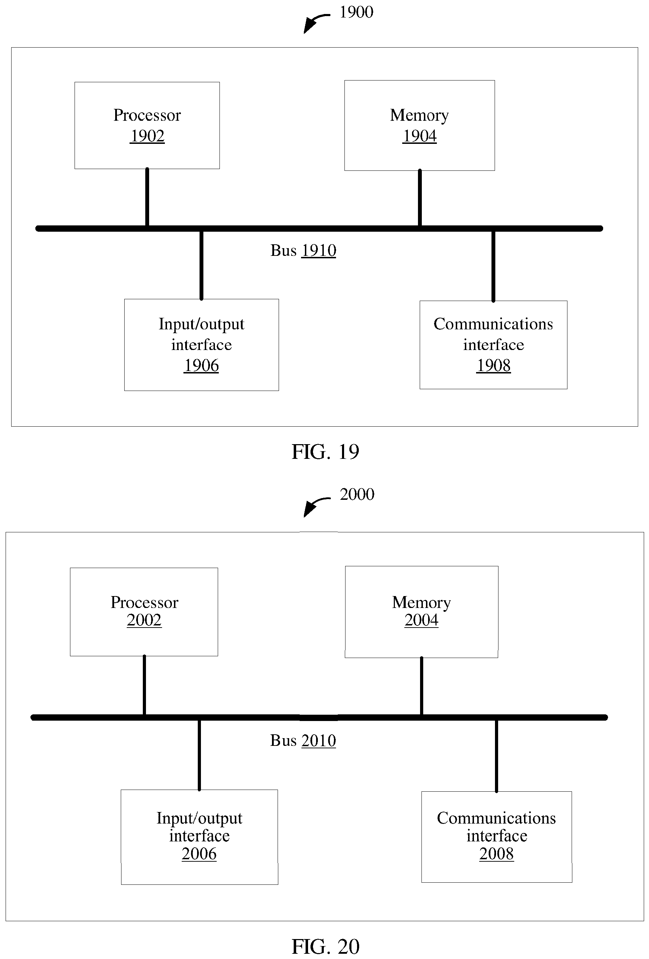

FIG. 19 is a schematic diagram of a hardware structure of a computer device 1900 according to an embodiment of the present invention. As shown in FIG. 19, the computer device 1900 may be used as an implementation of the encoding apparatus 1500 or 1700, and the computer device 1900 includes a processor 1902, a memory 1904, an input/output interface 1906, a communications interface 1908, and a bus 1910. The processor 1902, the memory 1904, the input/output interface 1906, and the communications interface 1908 communicate with and connect to each other by using a bus 1910.

It should be understood that, specifically, the computer device 1900 may be a device such as a management server, a NodeB (base station), an RNC (radio network controller), or a gateway in a computer device or an operator network.

The processor 1902 may be a general purpose central processing unit (Central Processing Unit, CPU), a microprocessor, an application-specific integrated circuit (Application Specific Integrated Circuit, ASIC), or one or more integrated circuits, and is configured to execute a related program, to implement a function that a unit included in the encoding apparatus 1500 or 1700 provided in the embodiments of the present invention needs to perform, or perform the encoding method provided in the method embodiment of the present invention. The processor 1902 may be an integrated circuit chip and has a signal processing capability. In an implementation process, steps in the foregoing methods may be completed by using an integrated logical circuit of hardware in the processor 1902 or instructions in a form of software in the processor 1902. The processor 1902 may be a general purpose processor, a digital signal processor (DSP), an application-specific integrated circuit (ASIC), a field programmable gate array (FPGA), or another programmable logic device, discrete gate or transistor logic device, or discrete hardware component. The processor may implement or perform the methods, the steps, and logical block diagrams that are disclosed in the embodiments of the present invention. The general purpose processor may be a microprocessor or the processor may be any conventional processor or the like. Steps of the methods disclosed with reference to the embodiments of the present invention may be directly performed and completed by using a hardware decoding processor, or may be performed and completed by using a combination of hardware and software modules in a decoding processor. The software module may be located in a mature storage medium in the art, such as a random access memory, a flash memory, a read-only memory, a programmable read-only memory, an electrically-erasable programmable memory, or a register. The storage medium is located in the memory 1904, and the processor 1902 reads information in the memory 1904 and completes the steps in the foregoing methods in combination with hardware of the processor.

The memory 1904 may be a read-only memory (Read Only Memory, ROM), a static storage device, a dynamic storage device, or a random access memory (Random Access Memory, RAM). The memory 1904 may store an operating system and another application program. When the function that the unit included in the encoding apparatus 1500 or 1700 provided in the embodiments of the present invention needs to perform is implemented, or the encoding method provided in the method embodiment of the present invention is performed by using software or firmware, program code configured to implement the technical solution provided in this embodiment of the present invention is stored in the memory 1904, and the processor 1902 performs an operation that the unit included in the encoding apparatus 1500 or 1700 provided in the embodiments of the present invention needs to perform, or performs the encoding method provided in the method embodiment of the present invention.

The input/output interface 1906 is configured to: receive data and information that are input, and output data such as an operation result.

The communications interface 1908 is, for example, but is not limited to, a receiving/transmitting apparatus such as a transceiver, to implement communication between the computer device 1900 and another device or communications network.

The bus 1910 may include a path for transferring information among components (for example, the processor 1902, the memory 1904, the input/output interface 1906, and the communications interface 1908) of the computer device 1900.

It should be noted that, although only the processor 1902, the memory 1904, the input/output interface 1906, the communications interface 1908, and the bus 1910 are shown in the computer device 1900 shown in FIG. 19, in a specific implementation process, a person skilled in the art should understand that, the computer device 1900 further includes another device required to implement normal running, for example, a display screen. Moreover, based on a specific need, a person skilled in the art should understand that, the computer device 1900 may further include a hardware device for implementing another appended function. Moreover, a person skilled in the art should understand that, the computer device 1900 may alternatively include only a device required to implement this embodiment of the present invention, and unnecessarily includes all devices shown in FIG. 19.

FIG. 20 is a schematic diagram of a hardware structure of a computer device 2000 according to an embodiment of the present invention. As shown in FIG. 20, the computer device 2000 may be used as an implementation of the decoding apparatus 1600 or 1800, and the computer device 2000 includes a processor 2002, a memory 2004, an input/output interface 2006, a communications interface 2008, and a bus 2010. The processor 2002, the memory 2004, the input/output interface 2006, and the communications interface 2008 communicate with and connect to each other by using a bus 2010. It should be understood that, specifically, the computer device 2000 may be a device such as a management server, a NodeB (base station), an RNC (radio network controller), or a gateway in a computer device or an operator network.

The processor 2002 may be a general purpose central processing unit (Central Processing Unit, CPU), a microprocessor, an application-specific integrated circuit (Application Specific Integrated Circuit, ASIC), or one or more integrated circuits, and is configured to execute a related program, to implement a function that a unit included in the decoding apparatus 1600 or 1800 provided in the embodiments of the present invention needs to perform, or perform the decoding method provided in the method embodiment of the present invention. The processor 2002 may be an integrated circuit chip and has a signal processing capability. In an implementation process, steps in the foregoing methods may be completed by using an integrated logical circuit of hardware in the processor 2002 or instructions in a form of software in the processor 2002. The processor 2002 may be a general purpose processor, a digital signal processor (DSP), an application-specific integrated circuit (ASIC), a field programmable gate array (FPGA), or another programmable logic device, discrete gate or transistor logic device, or discrete hardware component. The processor may implement or perform the methods, the steps, and logical block diagrams that are disclosed in the embodiments of the present invention. The general purpose processor may be a microprocessor or the processor may be any conventional processor or the like. Steps of the methods disclosed with reference to the embodiments of the present invention may be directly performed and completed by using a hardware decoding processor, or may be performed and completed by using a combination of hardware and software modules in a decoding processor. The software module may be located in a mature storage medium in the art, such as a random access memory, a flash memory, a read-only memory, a programmable read-only memory, an electrically-erasable programmable memory, or a register. The storage medium is located in the memory 2004, and the processor 2002 reads information in the memory 2004 and completes the steps in the foregoing methods in combination with hardware of the processor.

The memory 2004 may be a read-only memory (Read Only Memory, ROM), a static storage device, a dynamic storage device, or a random access memory (Random Access Memory, RAM). The memory 2004 may store an operating system and another application program. When the function that the unit included in the decoding apparatus 1600 or 1800 provided in the embodiments of the present invention needs to perform is implemented, or the decoding method provided in the method embodiment of the present invention is performed by using software or firmware, program code configured to implement the technical solution provided in this embodiment of the present invention is stored in the memory 2004, and the processor 2002 performs an operation that the unit included in the decoding apparatus 1600 or 1800 provided in the embodiments of the present invention needs to perform, or performs the decoding method provided in the method embodiment of the present invention.

The input/output interface 2006 is configured to: receive data and information that are input, and output data such as an operation result.

The communications interface 2008 is, for example, but is not limited to, a receiving/transmitting apparatus such as a transceiver, to implement communication between the computer device 2000 and another device or communications network.

The bus 2010 may include a path for transferring information among components (for example, the processor 2002, the memory 2004, the input/output interface 2006, and the communications interface 2008) of the computer device 2000.

It should be noted that, although only the processor 2002, the memory 2004, the input/output interface 2006, the communications interface 2008, and the bus 2010 are shown in the computer device 2000 shown in FIG. 20, in a specific implementation process, a person skilled in the art should understand that, the computer device 2000 further includes another device required to implement normal running, for example, a display screen. Moreover, based on a specific need, a person skilled in the art should understand that, the computer device 2000 may further include a hardware device for implementing another appended function. Moreover, a person skilled in the art should understand that, the computer device 2000 may alternatively include only a device required to implement this embodiment of the present invention, and unnecessarily includes all devices shown in FIG. 20.

In one or more examples, the described functions may be implemented by hardware, software, firmware, or any combination thereof. If the functions are implemented by the software, the functions may be stored in a computer-readable medium as one or more instructions or code lines, or sent by a computer-readable medium, and are executed by a hardware-based processing unit. The computer readable medium may include a computer readable storage medium (which corresponds to a tangible medium such as a data storage medium) or a communications medium, and the communications medium includes, for example, any medium that facilitates transmission of data, by using a computer program, from a place to another place based on a communication protocol. In this manner, the computer readable medium may usually correspond to: (1) a non-transitory tangible computer readable storage medium, or (2) a communications medium such as a signal or a carrier. A data storage medium may be any available medium that may be accessed by one or more computers or one or more processors to search for an instruction, code, and/or a data structure to implement technologies described in the present invention. A computer program product may include a computer readable medium.

By way of example and not by way of limitation, some computer readable storage media may include a RAM, a ROM, an EEPROM, a CD-ROM, another optical disc storage or magnetic disk storage, another magnetic storage apparatus, a flash memory, or any other medium that can be used to store required program code in a form of an instruction or a data structure and can be accessed by a computer. In addition, any connection may be appropriately referred to as a computer-readable medium. For example, if an instruction is sent from a website, a server, or another remote source by using a coaxial cable, an optical cable, a twisted pair, a digital subscriber line (DSL), or a wireless technology (for example, infrared, radio, or microwave), the coaxial cable, the optical cable, the twisted pair, the DSL, or the wireless technology (for example, infrared, radio, or microwave) is included in a definition of a medium. However, it should be understood that the computer readable storage medium and the data storage medium do not include a connection, a carrier, a signal, or another transitory medium, but are directed to non-transitory tangible storage media. A disk and an optical disc used in this specification include a compact disc (CD), a laser disc, an optical disc, a digital versatile disc (DVD), a floppy disk, and a Blu-ray disc, where the disk usually magnetically copies data, and the optical disc optically copies data by using a laser. A combination of the foregoing objects should be further included in the range of the computer readable medium.

An instruction may be executed by one or more processors such as one or more digital signal processors (DSP), a general purpose microprocessor, an application-specific integrated circuit (ASIC), a field programmable gate array (FPGA), or another equivalent integrated circuit or discrete logic circuit. Therefore, a term "processor" used herein may refer to the foregoing structure or any one of any other structures suitable for implementing the technology described herein. In addition, in some aspects, the functions described in this specification may be provided in a dedicated hardware and/or software module configured for encoding and decoding, or may be incorporated into a combined codec. In addition, the technologies may be completely implemented in one or more circuits or logic elements.

The technologies in the present invention may be widely implemented by a plurality of apparatuses or devices. The apparatuses or devices include a radio handset, an integrated circuit (IC), or an IC set (for example, a chip set). In the present invention, various components, modules, or units are described to emphasize functions of an apparatus that is configured to implement the disclosed technologies, but the functions do not necessarily need to be implemented by different hardware units. Precisely, as described above, various units may be combined in a codec hardware unit, or may be provided by a set of interoperable hardware units (including one or more processors described above) in combination with appropriate software and/or firmware.

It should be understood that "one embodiment" or "an embodiment" mentioned in the whole specification means that particular features, structures, or characteristics related to the embodiment are included in at least one embodiment of the present invention. Therefore, "in one embodiment" or "in an embodiment" appearing throughout the specification does not necessarily point to a same embodiment. In addition, these particular features, structures, or characteristics may be combined in one or more embodiments in any appropriate manner.

It should be understood that sequence numbers of the foregoing processes do not mean execution sequences in various embodiments of the present invention. The execution sequences of the processes should be determined based on functions and internal logic of the processes, and should not be construed as any limitation on the implementation processes of the embodiments of the present invention.

In addition, the terms "system" and "network" may be used interchangeably in this specification. It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that in the embodiments of this application, "B corresponding to A" indicates that B is associated with A, and B may be determined based on A. However, it should further be understood that determining B based on A does not mean that B is determined based on A only; that is, B may also be determined based on A and/or other information.

A person of ordinary skill in the art may be aware that, the units and steps in the examples described with reference to the embodiments disclosed herein may be implemented by electronic hardware, computer software, or a combination thereof. To clearly describe the interchangeability between the hardware and the software, the foregoing has usually described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the embodiments.

In addition, functional units in the embodiments of the present invention may be integrated into one processing unit, or each of the units may exist alone physically, or two or more units are integrated into one unit.

The descriptions are only specific implementations of the present invention, but are not intended to limit the protection scope of the present invention. Any variation or replacement readily figured out by a person skilled in the art within the technical scope disclosed in the present invention should fall within the protection scope of the present invention. Therefore, the protection scope of the present invention should be subject to the protection scope of the claims.

**Claims**

1. A decoding method based on template matching, comprising:

   obtaining (S601) a prediction direction identifier and encoded data of a current picture block;
   when a value of the prediction direction identifier indicates that the encoded data of the current picture block is obtained by performing bidirectional prediction on the current picture block based on a first motion information list of the current picture block and a second motion information list of the current picture block, determining (S602) first motion information based on the first motion information list, wherein a first template distortion between a reference picture block corresponding to the first motion information and the current picture block is less than or equal to a template distortion between a reference picture block corresponding to each motion information in the first motion information list and the current picture block; and determining (S603) second motion information based on the second motion information list, wherein a second template distortion between a reference picture block corresponding to the second motion information and the current picture block is less than or equal to a template distortion between a reference picture block corresponding to each motion information in the second motion information list and the current picture block; and
   obtaining (S604) a reconstructed picture block of the current picture block based on the first motion information, the second motion information, and the encoded data of the current picture block;
   wherein the prediction direction identifier is obtained only when a reference structure of a frame in which the current picture block is located is a non-low-delay reference structure;
   wherein the method further comprises:

   when a value of the prediction direction identifier indicates that the encoded data of the current picture block is obtained by performing unidirectional prediction on the current picture block based on the first motion information list of the current picture block or the second motion information list of the current picture block, determining first motion information based on the first motion information list, wherein a first template distortion between a reference picture block corresponding to the first motion information and the current picture block is less than or equal to a template distortion between a reference picture block corresponding to each motion information in the first motion information list and the current picture block;
   determining second motion information based on the second motion information list, wherein a second template distortion between a reference picture block corresponding to the second motion information and the current picture block is less than or equal to a template distortion between a reference picture block corresponding to each motion information in the second motion information list and the current picture block; and
   when the first template distortion is less than or equal to the second template distortion, obtaining a reconstructed picture block of the current picture block based on the first motion information and the encoded data of the current picture block; or when the first template distortion is greater than the second template distortion, obtaining a reconstructed picture block of the current picture block based on the second motion information and the encoded data of the current picture block.

2. An encoding method based on template matching, comprising:

   determining (S401) first motion information based on a first motion information list of a current picture block, wherein a first template distortion between a reference picture block corresponding to the first motion information and the current picture block is less than or equal to a template distortion between a reference picture block corresponding to each motion information in the first motion information list and the current picture block;
   determining (S402) second motion information based on a second motion information list of the current picture block, wherein a second template distortion between a reference picture block corresponding to the second motion information and the current picture block is less than or equal to a template distortion between a reference picture block corresponding to each motion information in the second motion information list and the current picture block;

determining (S403), based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, wherein the bidirectional motion information comprises the first motion information and the second motion information; and

when the bidirectional rate distortion cost is less than or equal to the smaller one of the first rate distortion cost and the second rate distortion cost, performing (S404) bidirectional prediction on the current picture block based on the first motion information and the second motion information, to obtain bidirectional bitstream data of the current picture block, wherein the bidirectional bitstream data comprises bitstream data carrying a prediction direction identifier, and a value of the prediction direction identifier indicates that encoded data of the current picture block is obtained by performing bidirectional prediction on the current picture block based on the first motion information list and the second motion information list;

wherein the bidirectional rate distortion cost of bidirectional prediction corresponding to the bidirectional motion information, the first rate distortion cost of unidirectional prediction corresponding to the first motion information, and the second rate distortion cost of unidirectional prediction corresponding to the second motion information are determined based on the first motion information and the second motion information only when a reference structure of a frame in which the current picture block is located is a non-low-delay reference structure;

wherein the method further comprises:

when the bidirectional rate distortion cost is greater than the smaller one of the first rate distortion cost and the second rate distortion cost and the first template distortion is less than or equal to the second template distortion, performing unidirectional prediction on the current picture block based on the first motion information, to obtain first unidirectional bitstream data of the current picture block, wherein the first unidirectional bitstream data comprises bitstream data carrying a prediction direction identifier, and a value of the prediction direction identifier indicates that the encoded data of the current picture block is obtained by performing unidirectional prediction on the current picture block based on the first motion information list or the second motion information list; or

when the bidirectional rate distortion cost is greater than the smaller one of the first rate distortion cost and the second rate distortion cost and the first template distortion is greater than the second template distortion, performing unidirectional prediction on the current picture block based on the second motion information, to obtain second unidirectional bitstream data of the current picture block, wherein the second unidirectional bitstream data comprises bitstream data carrying a prediction direction identifier, and a value of the prediction direction identifier indicates that the encoded data of the current picture block is obtained by performing unidirectional prediction on the current picture block based on the first motion information list or the second motion information list.

3.  A decoding apparatus (1600) based on template matching, wherein the apparatus comprises:

an obtaining unit (1601), configured to obtain a prediction direction identifier and encoded data of a current picture block; and

a reconstruction unit (1602), configured to: when a value of the prediction direction identifier indicates that the encoded data of the current picture block is obtained by performing bidirectional prediction on the current picture block based on a first motion information list of the current picture block and a second motion information list of the current picture block, determine first motion information based on the first motion information list, wherein a first template distortion between a reference picture block corresponding to the first motion information and the current picture block is less than or equal to a template distortion between a reference picture block corresponding to each motion information in the first motion information list and the current picture block; determine second motion information based on the second motion information list, wherein a second template distortion between a reference picture block corresponding to the second motion information and the current picture block is less than or equal to a template distortion between a reference picture block corresponding to each motion information in the second motion information list and the current picture block; and obtain a reconstructed picture block of the current picture block based on the first motion information, the second motion information, and the encoded data of the current picture block;

wherein the prediction direction identifier is obtained only when a reference structure of a frame in which the current picture block is located is a non-low-delay reference structure;

wherein the reconstruction unit (1602) is further configured to:

when a value of the prediction direction identifier indicates that the encoded data of the current picture block is obtained by performing unidirectional prediction on the current picture block based on the first motion information list of the current picture block or the second motion information list of the current picture block, determine first motion information based on the first motion information list, wherein a first template distortion between a reference picture block corresponding to the first motion information and the current picture block is less than or equal to a template distortion between a reference picture block corresponding to each motion information in the first motion information list and the current picture block;

determine second motion information based on the second motion information list, wherein a second template distortion between a reference picture block corresponding to the second motion information and the current picture block is less than or equal to a template distortion between a reference picture block corresponding to each motion information in the second motion information list and the current picture block; and when the first template distortion is less than or equal to the second template distortion, obtain a reconstructed picture block of the current picture block based on the first motion information and the encoded data of the current picture block; or when the first template distortion is greater than the second template distortion, obtain a reconstructed picture block of the current picture block based on the second motion information and the encoded data of the current picture block.

4.  An encoding apparatus (1500) based on template matching, wherein the apparatus comprises:

a matching unit (1501), configured to determine first motion information based on a first motion information list of a current picture block, wherein a first template distortion between a reference picture block corresponding to the first motion information and the current picture block is less than or equal to a template distortion between a reference picture block corresponding to each motion information in the first motion information list and the current picture block; and determine second motion information based on a second motion information list of the current picture block, wherein a second template distortion between a reference picture block corresponding to the second motion information and the current picture block is less than or equal to a template distortion between a reference picture block corresponding to each motion information in the second motion information list and the current picture block;

a determining unit (1502), configured to determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, wherein the bidirectional motion information comprises the first motion information and the second motion information; and

a prediction unit (1503), configured to: when the bidirectional rate distortion cost is less than or equal to the smaller one of the first rate distortion cost and the second rate distortion cost, perform bidirectional prediction on the current picture block based on the first motion information and the second motion information, to obtain bidirectional bitstream data of the current picture block, wherein the bidirectional bitstream data comprises bitstream data carrying a prediction direction identifier, and a value of the prediction direction identifier indicates that encoded data of the current picture block is obtained by performing bidirectional prediction on the current picture block based on the first motion information list and the second motion information list;

wherein the determining unit is configured to: determine the bidirectional rate distortion cost, the first rate distortion cost, and the second rate distortion cost based on the first motion information and the second motion information only when a reference structure of a frame in which the current picture block is located is a non-low-delay reference structure

wherein the prediction unit (1503) is further configured to: when the bidirectional rate distortion cost is greater than the smaller one of the first rate distortion cost and the second rate distortion cost and the first template distortion is less than or equal to the second template distortion, perform unidirectional prediction on the current picture block based on the first motion information, to obtain first unidirectional bitstream data of the current picture block, where the first unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list; or

when the bidirectional rate distortion cost is greater than the smaller one of the first rate distortion cost and the second rate distortion cost and the first template distortion is greater than the second template distortion, perform unidirectional prediction on the current picture block based on the second motion information, to obtain second unidirectional bitstream data of the current picture block, where the second unidirectional bitstream data includes bitstream data carrying a prediction direction identifier, and a value of the prediction direction identifier indicates that the encoded data of the current picture block is obtained by performing unidirectional prediction on the current picture block based on the first motion information list or the second motion information list.

**Patentansprüche**

1.  Decodierverfahren, basierend auf Vorlagenabgleich, das Folgendes umfasst:

    Erhalten (S601) einer Prädiktionsrichtungskennung und von codierten Daten eines aktuellen Bildblocks;
    wenn ein Wert der Prädiktionsrichtungskennung angibt, dass die codierten Daten des aktuellen Bildblocks durch Durchführen von bidirektionaler Prädiktion an dem aktuellen Bildblock erhalten werden, basierend auf einer ersten Bewegungsinformationenliste des aktuellen Bildblocks und einer zweiten Bewegungsinformationenliste des aktuellen Bildblocks, Bestimmen (S602) von ersten Bewegungsinformationen, basierend auf der ersten Bewegungsinformationenliste, wobei eine erste Vorlagenverzerrung zwischen einem Referenzbildblock, der den ersten Bewegungsinformationen entspricht, und dem aktuellen Bildblock kleiner oder gleich einer Vorlagenverzerrung zwischen einem Referenzbildblock, der jeden Bewegungsinformationen in der ersten Bewegungsinformationenliste entspricht, und dem aktuellen Bildblock ist; und Bestimmen (S603) von zweiten Bewegungsinformationen, basierend auf der zweiten Bewegungsinformationenliste, wobei eine zweite Vorlagenverzerrung zwischen einem Referenzbildblock, der den zweiten Bewegungsinformationen entspricht, und dem aktuellen Bildblock kleiner oder gleich einer Vorlagenverzerrung zwischen einem Referenzbildblock, der jeden Bewegungsinformationen in der zweiten Bewegungsinformationenliste entspricht, und dem aktuellen Bildblock ist; und
    Erhalten (S604) eines rekonstruierten Bildblocks des aktuellen Bildblocks, basierend auf den ersten Bewegungsinformationen, den zweiten Bewegungsinformationen und den codierten Daten des aktuellen Bildblocks;
    wobei die Prädiktionsrichtungskennung nur dann erhalten wird, wenn eine Referenzstruktur eines Frames, in dem sich der aktuelle Bildblock befindet, eine Nicht-Niederverzögerung-Referenzstruktur ist;
    wobei das Verfahren ferner Folgendes umfasst:

    wenn ein Wert der Prädiktionsrichtungskennung angibt, dass die codierten Daten des aktuellen Bildblocks durch Durchführen von unidirektionaler Prädiktion an dem aktuellen Bildblock erhalten werden, basierend auf der ersten Bewegungsinformationenliste des aktuellen Bildblocks oder der zweiten Bewegungsinformationenliste des aktuellen Bildblocks, Bestimmen von ersten Bewegungsinformationen, basierend auf der ersten Bewegungsinformationenliste, wobei eine erste Vorlagenverzerrung zwischen einem Referenzbildblock, der den ersten Bewegungsinformationen entspricht, und dem aktuellen Bildblock kleiner oder gleich einer Vorlagenverzerrung zwischen einem Referenzbildblock, der jeden Bewegungsinformationen in der ersten Bewegungsinformationenliste entspricht, und dem aktuellen Bildblock ist;
    Bestimmen von zweiten Bewegungsinformationen, basierend auf der zweiten Bewegungsinformationenliste, wobei eine zweite Vorlagenverzerrung zwischen einem Referenzbildblock, der den zweiten Bewegungsinformationen entspricht, und dem aktuellen Bildblock kleiner oder gleich einer Vorlagenverzerrung zwischen einem Referenzbildblock, der jeden Bewegungsinformationen in der zweiten Bewegungsinformationenliste entspricht, und dem aktuellen Bildblock ist; und,
    wenn die erste Vorlagenverzerrung kleiner oder gleich der zweiten Vorlagenverzerrung ist, Erhalten eines rekonstruierten Bildblocks des aktuellen Bildblocks, basierend auf den ersten Bewegungsinformationen und den codierten Daten des aktuellen Bildblocks; oder, wenn die erste Vorlagenverzerrung größer als die zweite Vorlagenverzerrung ist, Erhalten eines rekonstruierten Bildblocks des aktuellen Bildblocks, basierend auf den zweiten Bewegungsinformationen und den codierten Daten des aktuellen Bildblocks.

2.  Codierverfahren, basierend auf Vorlagenabgleich, das Folgendes umfasst:

    Bestimmen (S401) von ersten Bewegungsinformationen, basierend auf einer ersten Bewegungsinformationenliste eines aktuellen Bildblocks, wobei eine erste Vorlagenverzerrung zwischen einem Referenzbildblock, der den ersten Bewegungsinformationen entspricht, und dem aktuellen Bildblock kleiner oder gleich einer Vorlagenverzerrung zwischen einem Referenzbildblock, der jeden Bewegungsinformationen in der ersten Bewegungsinformationenliste entspricht, und dem aktuellen Bildblock ist;
    Bestimmen (S402) von zweiten Bewegungsinformationen, basierend auf einer zweiten Bewegungsinformationenliste des aktuellen Bildblocks, wobei eine zweite Vorlagenverzerrung zwischen einem Referenzbildblock, der den zweiten Bewegungsinformationen entspricht, und dem aktuellen Bildblock kleiner oder gleich einer Vorlagenverzerrung zwischen einem Referenzbildblock, der jeden Bewegungsinformationen in der zweiten Bewegungsinformationenliste entspricht, und dem aktuellen Bildblock ist;

Bestimmen (S403), basierend auf den ersten Bewegungsinformationen und den zweiten Bewegungsinformationen, eines bidirektionalen Rate-Verzerrungs-Aufwands von bidirektionaler Prädiktion, entsprechend bidirektionalen Bewegungsinformationen, eines ersten Rate-Verzerrungs-Aufwands von unidirektionaler Prädiktion, entsprechend den ersten Bewegungsinformationen, und eines zweiten Rate-Verzerrungs-Aufwands von unidirektionaler Prädiktion, entsprechend den zweiten Bewegungsinformationen, wobei die bidirektionalen Bewegungsinformationen die ersten Bewegungsinformationen und die zweiten Bewegungsinformationen umfassen; und

wenn der bidirektionale Rate-Verzerrungs-Aufwand kleiner oder gleich dem kleineren des ersten Rate-Verzerrungs-Aufwands und des zweiten Rate-Verzerrungs-Aufwands ist, Durchführen (S404) von bidirektionaler Prädiktion an dem aktuellen Bildblock, basierend auf den ersten Bewegungsinformationen und den zweiten Bewegungsinformationen, um bidirektionale Bitstromdaten des aktuellen Bildblocks zu erhalten, wobei die bidirektionalen Bitstromdaten Bitstromdaten, die eine Prädiktionsrichtungskennung führen, umfassen, und ein Wert der Prädiktionsrichtungskennung angibt, dass codierte Daten des aktuellen Bildblocks durch Durchführen von bidirektionaler Prädiktion an dem aktuellen Bildblock, basierend auf der ersten Bewegungsinformationenliste und der zweiten Bewegungsinformationenliste, erhalten werden;

wobei der bidirektionale Rate-Verzerrungs-Aufwand von bidirektionaler Prädiktion, entsprechend den bidirektionalen Bewegungsinformationen, der erste Rate-Verzerrungs-Aufwand von unidirektionaler Prädiktion, entsprechend den ersten Bewegungsinformationen, und der zweite Rate-Verzerrungs-Aufwand von unidirektionaler Prädiktion, entsprechend den zweiten Bewegungsinformationen, basierend auf den ersten Bewegungsinformationen und den zweiten Bewegungsinformationen, nur dann bestimmt werden, wenn eine Referenzstruktur eines Frames, in dem sich der aktuelle Bildblock befindet, eine Nicht-Niederverzögerung-Referenzstruktur ist;

wobei das Verfahren ferner Folgendes umfasst:

wenn der bidirektionale Rate-Verzerrungs-Aufwand größer als der kleinere des ersten Rate-Verzerrungs-Aufwands und des zweiten Rate-Verzerrungs-Aufwands ist und die erste Vorlagenverzerrung kleiner oder gleich der zweiten Vorlagenverzerrung ist, Durchführen von unidirektionaler Prädiktion an dem aktuellen Bildblock, basierend auf den ersten Bewegungsinformationen, um erste unidirektionale Bitstromdaten des aktuellen Bildblocks zu erhalten, wobei die ersten unidirektionalen Bitstromdaten Bitstromdaten, die eine Prädiktionsrichtungskennung führen, umfassen, und ein Wert der Prädiktionsrichtungskennung angibt, dass die codierten Daten des aktuellen Bildblocks durch Durchführen von unidirektionaler Prädiktion an dem aktuellen Bildblock, basierend auf der ersten Bewegungsinformationenliste oder der zweiten Bewegungsinformationenliste, erhalten werden; oder

wenn der bidirektionale Rate-Verzerrungs-Aufwand größer als der kleinere des ersten Rate-Verzerrungs-Aufwands und des zweiten Rate-Verzerrungs-Aufwands ist und die erste Vorlagenverzerrung größer als die zweite Vorlagenverzerrung ist, Durchführen von unidirektionaler Prädiktion an dem aktuellen Bildblock, basierend auf den zweiten Bewegungsinformationen, um zweite unidirektionale Bitstromdaten des aktuellen Bildblocks zu erhalten, wobei die zweiten unidirektionalen Bitstromdaten Bitstromdaten, die eine Prädiktionsrichtungskennung führen, umfassen, und ein Wert der Prädiktionsrichtungskennung angibt, dass die codierten Daten des aktuellen Bildblocks durch Durchführen von unidirektionaler Prädiktion an dem aktuellen Bildblock, basierend auf der ersten Bewegungsinformationenliste oder der zweiten Bewegungsinformationenliste, erhalten werden.

3. Decodiereinrichtung (1600), basierend auf Vorlagenabgleich, wobei die Einrichtung Folgendes umfasst:

eine Erhalteeinheit (1601), ausgelegt zum Erhalten einer Prädiktionsrichtungskennung und von codierten Daten eines aktuellen Bildblocks; und

eine Rekonstruktionseinheit (1602), ausgelegt zum: wenn ein Wert der Prädiktionsrichtungskennung angibt, dass die codierten Daten des aktuellen Bildblocks durch Durchführen von bidirektionaler Prädiktion an dem aktuellen Bildblock erhalten werden, basierend auf einer ersten Bewegungsinformationenliste des aktuellen Bildblocks und einer zweiten Bewegungsinformationenliste des aktuellen Bildblocks, Bestimmen von ersten Bewegungsinformationen, basierend auf der ersten Bewegungsinformationenliste, wobei eine erste Vorlagenverzerrung zwischen einem Referenzbildblock, der den ersten Bewegungsinformationen entspricht, und dem aktuellen Bildblock kleiner oder gleich einer Vorlagenverzerrung zwischen einem Referenzbildblock, der jeden Bewegungsinformationen in der ersten Bewegungsinformationenliste entspricht, und dem aktuellen Bildblock ist;

Bestimmen von zweiten Bewegungsinformationen, basierend auf der zweiten Bewegungsinformationenliste, wobei eine zweite Vorlagenverzerrung zwischen einem Referenzbildblock, der den zweiten Bewegungsinformationen entspricht, und dem aktuellen Bildblock kleiner oder gleich einer Vorlagenverzerrung zwischen einem Referenzbildblock, der jeden Bewegungsinformationen in der zweiten Bewegungsinformationenliste entspricht, und dem aktuellen Bildblock ist; und

Erhalten eines rekonstruierten Bildblocks des aktuellen Bildblocks, basierend auf den ersten Bewegungsinformationen, den zweiten Bewegungsinformationen und den codierten Daten des aktuellen Bildblocks;

wobei die Prädiktionsrichtungskennung nur dann erhalten wird, wenn eine Referenzstruktur eines Frames, in dem sich der aktuelle Bildblock befindet, eine Nicht-Niederverzögerung-Referenzstruktur ist;

wobei die Rekonstruktionseinheit (1602) ferner ausgelegt ist zum:

wenn ein Wert der Prädiktionsrichtungskennung angibt, dass die codierten Daten des aktuellen Bildblocks durch Durchführen von unidirektionaler Prädiktion an dem aktuellen Bildblock erhalten werden, basierend auf der ersten Bewegungsinformationenliste des aktuellen Bildblocks oder der zweiten Bewegungsinformationenliste des aktuellen Bildblocks, Bestimmen von ersten Bewegungsinformationen, basierend auf der ersten Bewegungsinformationenliste, wobei eine erste Vorlagenverzerrung zwischen einem Referenzbildblock, der den ersten Bewegungsinformationen entspricht, und dem aktuellen Bildblock kleiner oder gleich einer Vorlagenverzerrung zwischen einem Referenzbildblock, der jeden Bewegungsinformationen in der ersten Bewegungsinformationenliste entspricht, und dem aktuellen Bildblock ist;

Bestimmen von zweiten Bewegungsinformationen, basierend auf der zweiten Bewegungsinformationenliste, wobei eine zweite Vorlagenverzerrung zwischen einem Referenzbildblock, der den zweiten Bewegungsinformationen entspricht, und dem aktuellen Bildblock kleiner oder gleich einer Vorlagenverzerrung zwischen einem Referenzbildblock, der jeden Bewegungsinformationen in der zweiten Bewegungsinformationenliste entspricht, und dem aktuellen Bildblock ist; und,

wenn die erste Vorlagenverzerrung kleiner oder gleich der zweiten Vorlagenverzerrung ist, Erhalten eines rekonstruierten Bildblocks des aktuellen Bildblocks, basierend auf den ersten Bewegungsinformationen und den codierten Daten des aktuellen Bildblocks; oder, wenn die erste Vorlagenverzerrung größer als die zweite Vorlagenverzerrung ist, Erhalten eines rekonstruierten Bildblocks des aktuellen Bildblocks, basierend auf den zweiten Bewegungsinformationen und den codierten Daten des aktuellen Bildblocks.

4. Codiereinrichtung (1500), basierend auf Vorlagenabgleich, wobei die Einrichtung Folgendes umfasst:

eine Abgleicheinheit (1501), ausgelegt zum Bestimmen von ersten Bewegungsinformationen, basierend auf einer ersten Bewegungsinformationenliste eines aktuellen Bildblocks, wobei eine erste Vorlagenverzerrung zwischen einem Referenzbildblock, der den ersten Bewegungsinformationen entspricht, und dem aktuellen Bildblock kleiner oder gleich einer Vorlagenverzerrung zwischen einem Referenzbildblock, der jeden Bewegungsinformationen in der ersten Bewegungsinformationenliste entspricht, und dem aktuellen Bildblock ist; und Bestimmen von zweiten Bewegungsinformationen, basierend auf einer zweiten Bewegungsinformationenliste des aktuellen Bildblocks, wobei eine zweite Vorlagenverzerrung zwischen einem Referenzbildblock, der den zweiten Bewegungsinformationen entspricht, und dem aktuellen Bildblock kleiner oder gleich einer Vorlagenverzerrung zwischen einem Referenzbildblock, der jeden Bewegungsinformationen in der zweiten Bewegungsinformationenliste entspricht, und dem aktuellen Bildblock ist;

eine Bestimmungseinheit (1502), ausgelegt zum Bestimmen, basierend auf den ersten Bewegungsinformationen und den zweiten Bewegungsinformationen, eines bidirektionalen Rate-Verzerrungs-Aufwands von bidirektionaler Prädiktion, entsprechend bidirektionalen Bewegungsinformationen, eines ersten Rate-Verzerrungs-Aufwands von unidirektionaler Prädiktion, entsprechend den ersten Bewegungsinformationen, und eines zweiten Rate-Verzerrungs-Aufwands von unidirektionaler Prädiktion, entsprechend den zweiten Bewegungsinformationen, wobei die bidirektionalen Bewegungsinformationen die ersten Bewegungsinformationen und die zweiten Bewegungsinformationen umfassen; und

eine Prädiktionseinheit (1503), ausgelegt zum: wenn der bidirektionale Rate-Verzerrungs-Aufwand kleiner oder gleich dem kleineren des ersten Rate-Verzerrungs-Aufwands und des zweiten Rate-Verzerrungs-Aufwands ist, Durchführen von bidirektionaler Prädiktion an dem aktuellen Bildblock, basierend auf den ersten Bewegungsinformationen und den zweiten Bewegungsinformationen, um bidirektionale Bitstromdaten des aktuellen Bildblocks zu erhalten, wobei die bidirektionalen Bitstromdaten Bitstromdaten, die eine Prädiktionsrichtungskennung führen, umfassen, und ein Wert der Prädiktionsrichtungskennung angibt, dass codierte Daten des aktuellen Bildblocks durch Durchführen von bidirektionaler Prädiktion an dem aktuellen Bildblock, basierend auf der ersten Bewegungsinformationenliste und der zweiten Bewegungsinformationenliste, erhalten werden;

wobei die Bestimmungseinheit ausgelegt ist zum: Bestimmen des bidirektionalen Rate-Verzerrungs-Aufwands, des ersten Rate-Verzerrungs-Aufwands und des zweiten Rate-Verzerrungs-Aufwands, basierend auf den ersten Bewegungsinformationen und den zweiten Bewegungsinformationen, nur dann wenn eine Referenzstruktur eines Frames, in dem sich der aktuelle Bildblock befindet, eine Nicht-Niederverzögerung-Referenzstruktur ist; wobei die Prädiktionseinheit (1503) ferner ausgelegt ist zum: wenn der bidirektionale Rate-Verzerrungs-Aufwand größer als der kleinere des ersten Rate-Verzerrungs-Aufwands und des zweiten Rate-Verzerrungs-Aufwands ist und die erste Vorlagenverzerrung kleiner oder gleich der zweiten Vorlagenverzerrung ist, Durchführen von unidirektionaler Prädiktion an dem aktuellen Bildblock, basierend auf den ersten Bewegungsinformationen, um erste unidirektionale Bitstromdaten des aktuellen Bildblocks zu erhalten, wobei die ersten unidirektionalen Bitstromdaten Bitstromdaten, die eine Prädiktionsrichtungskennung führen, beinhalten, und ein Wert der Prädiktionsrichtungskennung angibt, dass die codierten Daten des aktuellen Bildblocks durch Durchführen von unidirektionaler Prädiktion an dem aktuellen Bildblock, basierend auf der ersten Bewegungsinformationenliste oder der zweiten Bewegungsinformationenliste, erhalten werden; oder

wenn der bidirektionale Rate-Verzerrungs-Aufwand größer als der kleinere des ersten Rate-Verzerrungs-Aufwands und des zweiten Rate-Verzerrungs-Aufwands ist und die erste Vorlagenverzerrung größer als die zweite Vorlagenverzerrung ist, Durchführen von unidirektionaler Prädiktion an dem aktuellen Bildblock, basierend auf den zweiten Bewegungsinformationen, um zweite unidirektionale Bitstromdaten des aktuellen Bildblocks zu erhalten, wobei die zweiten unidirektionalen Bitstromdaten Bitstromdaten, die eine Prädiktionsrichtungskennung führen, beinhalten, und ein Wert der Prädiktionsrichtungskennung angibt, dass die codierten Daten des aktuellen Bildblocks durch Durchführen von unidirektionaler Prädiktion an dem aktuellen Bildblock, basierend auf der ersten Bewegungsinformationenliste oder der zweiten Bewegungsinformationenliste, erhalten werden.

## Revendications

1. Procédé de décodage sur la base d'appariement de modèles, comprenant :

l'obtention (S601) d'un identifiant de direction de prédiction et de données encodées d'un bloc d'image actuel ; lorsqu'une valeur de l'identifiant de direction de prédiction indique que les données encodées du bloc d'image actuel sont obtenues en réalisant une prédiction bidirectionnelle sur le bloc d'image actuel sur la base d'une première liste d'informations de mouvement du bloc d'image actuel et d'une seconde liste d'informations de mouvement du bloc d'image actuel, la détermination (S602) de premières informations de mouvement sur la base de la première liste d'informations de mouvement, dans lequel une première distorsion de modèle entre un bloc d'image de référence correspondant aux premières informations de mouvement et le bloc d'image actuel est inférieure ou égale à une distorsion de modèle entre un bloc d'image de référence correspondant à chaque information de mouvement dans la première liste d'informations de mouvement et le bloc d'image actuel ; et la détermination (S603) de secondes informations de mouvement sur la base de la seconde liste d'informations de mouvement, dans lequel une seconde distorsion de modèle entre un bloc d'image de référence correspondant aux secondes informations de mouvement et le bloc d'image actuel est inférieure ou égale à une distorsion de modèle entre un bloc d'image de référence correspondant à chaque information de mouvement dans la seconde liste d'informations de mouvement et le bloc d'image actuel ; et l'obtention (S604) d'un bloc d'image reconstruit du bloc d'image actuel sur la base des premières informations de mouvement, des secondes informations de mouvement, et des données encodées du bloc d'image actuel ; dans lequel l'identifiant de direction de prédiction est obtenu seulement lorsqu'une structure de référence d'une vue dans laquelle le bloc d'image actuel est situé est une structure de référence non à faible retard ; dans lequel le procédé comprend en outre :

lorsqu'une valeur de l'identifiant de direction de prédiction indique que les données encodées du bloc d'image actuel sont obtenues en réalisant une prédiction unidirectionnelle sur le bloc d'image actuel sur la base de la première liste d'informations de mouvement du bloc d'image actuel ou de la seconde liste d'informations de mouvement du bloc d'image actuel, la détermination de premières informations de mouvement sur la base de la première liste d'informations de mouvement, dans lequel une première distorsion de modèle entre un bloc d'image de référence correspondant aux premières informations de mouvement et le bloc d'image actuel est inférieure ou égale à une distorsion de modèle entre un bloc d'image de référence correspondant à chaque information de mouvement dans la première liste d'informations de mouvement et le bloc d'image actuel ; la détermination de secondes informations de mouvement sur la base de la seconde liste d'informations de mouvement, dans lequel une seconde distorsion de modèle entre un bloc d'image de référence correspondant aux secondes informations de mouvement et le bloc d'image actuel est inférieure ou égale à une distorsion de modèle entre un bloc d'image de référence correspondant à chaque information de mouvement dans la seconde liste d'informations de mouvement et le bloc d'image actuel ; et

lorsque la première distorsion de modèle est inférieure ou égale à la seconde distorsion de modèle, l'obtention d'un bloc d'image reconstruit du bloc d'image actuel sur la base des premières informations de mouvement et des données encodées du bloc d'image actuel ; ou

lorsque la première distorsion de modèle est supérieure à la seconde distorsion de modèle, l'obtention d'un bloc d'image reconstruit du bloc d'image actuel sur la base des secondes informations de mouvement et des données encodées du bloc d'image actuel.

**2.** Procédé d'encodage sur la base d'appariement de modèles, comprenant :

la détermination (S401) de premières informations de mouvement sur la base d'une première liste d'informations de mouvement d'un bloc d'image actuel, dans lequel une première distorsion de modèle entre un bloc d'image de référence correspondant aux premières informations de mouvement et le bloc d'image actuel est inférieure ou égale à une distorsion de modèle entre un bloc d'image de référence correspondant à chaque information de mouvement dans la première liste d'informations de mouvement et le bloc d'image actuel ;

la détermination (S402) de secondes informations de mouvement sur la base d'une seconde liste d'informations de mouvement du bloc d'image actuel, dans lequel une seconde distorsion de modèle entre un bloc d'image de référence correspondant aux secondes informations de mouvement et le bloc d'image actuel est inférieure ou égale à une distorsion de modèle entre un bloc d'image de référence correspondant à chaque information de mouvement dans la seconde liste d'informations de mouvement et le bloc d'image actuel ;

la détermination (S403), sur la base des premières informations de mouvement et des secondes informations de mouvement, d'un coût de distorsion de taux bidirectionnel d'une prédiction bidirectionnelle correspondant à des informations de mouvement bidirectionnelles, d'un premier coût de distorsion de taux de prédiction unidirectionnelle correspondant aux premières informations de mouvement, et d'un second coût de distorsion de taux de prédiction unidirectionnelle correspondant aux secondes informations de mouvement, dans lequel les informations de mouvement bidirectionnelles comprennent les premières informations de mouvement et les secondes informations de mouvement ; et

lorsque le coût de distorsion de taux bidirectionnel est inférieur ou égal au plus petit du premier coût de distorsion de taux et du second coût de distorsion de taux, la réalisation (S404) d'une prédiction bidirectionnelle sur le bloc d'image actuel sur la base des premières informations de mouvement et des secondes informations de mouvement, pour obtenir des données de flux bidirectionnelles du bloc d'image actuel, dans lequel les données de flux bidirectionnelles comprennent des données de flux portant un identifiant de direction de prédiction, et une valeur de l'identifiant de direction de prédiction indique que des données encodées du bloc d'image actuel sont obtenues en réalisant une prédiction bidirectionnelle sur le bloc d'image actuel sur la base de la première liste d'informations de mouvement et de la seconde liste d'informations de mouvement ;

dans lequel le coût de distorsion de taux bidirectionnel de prédiction bidirectionnelle correspondant aux informations de mouvement bidirectionnelles, le premier coût de distorsion de taux de prédiction unidirectionnelle correspondant aux premières informations de mouvement, et le second coût de distorsion de taux de prédiction unidirectionnelle correspondant aux secondes informations de mouvement sont déterminés sur la base des premières informations de mouvement et des secondes informations de mouvement seulement lorsqu'une structure de référence d'une vue dans laquelle le bloc d'image actuel est situé est une structure de référence non à faible retard ;

dans lequel le procédé comprend en outre :

lorsque le coût de distorsion de taux bidirectionnel est supérieur au plus petit du premier coût de distorsion de taux et du second coût de distorsion de taux et que la première distorsion de modèle est inférieure ou égale à la seconde distorsion de modèle, la réalisation d'une prédiction unidirectionnelle sur le bloc d'image actuel sur la base des premières informations de mouvement, pour obtenir des premières données de flux unidirectionnelles du bloc d'image actuel, dans lequel les premières données de flux unidirectionnelles comprennent des données de flux portant un identifiant de direction de prédiction, et une valeur de l'identifiant de direction de prédiction indique que les données encodées du bloc d'image actuel sont obtenues en réalisant une prédiction unidirectionnelle sur le bloc d'image actuel sur la base de la première liste d'informations de mouvement ou de la seconde liste d'informations de mouvement ; ou

lorsque le coût de distorsion de taux bidirectionnel est supérieur au plus petit du premier coût de distorsion de taux et du second coût de distorsion de taux et que la première distorsion de modèle est supérieure à la seconde distorsion de modèle, la réalisation d'une prédiction unidirectionnelle sur le bloc d'image actuel sur la base des secondes informations de mouvement, pour obtenir des secondes données de flux unidirectionnelles du bloc d'image actuel, dans lequel les secondes données de flux unidirectionnelles comprennent des données de flux portant un identifiant de direction de prédiction, et une valeur de l'identifiant de direction de prédiction indique que les données encodées du bloc d'image actuel sont obtenues en réalisant une prédiction unidirectionnelle sur le bloc d'image actuel sur la base de la première liste d'informations de mouvement ou de la seconde liste d'informations de mouvement.

3. Appareil de décodage (1600) sur la base d'appariement de modèles, dans lequel l'appareil comprend :

une unité d'obtention (1601), configurée pour obtenir un identifiant de direction de prédiction et des données encodées d'un bloc d'image actuel ; et

une unité de reconstruction (1602), configurée pour : lorsqu'une valeur de l'identifiant de direction de prédiction indique que les données encodées du bloc d'image actuel sont obtenues en réalisant une prédiction bidirectionnelle sur le bloc d'image actuel sur la base d'une première liste d'informations de mouvement du bloc d'image actuel et d'une seconde liste d'informations de mouvement du bloc d'image actuel, déterminer des premières informations de mouvement sur la base de la première liste d'informations de mouvement, dans lequel une première distorsion de modèle entre un bloc d'image de référence correspondant aux premières informations de mouvement et le bloc d'image actuel est inférieure ou égale à une distorsion de modèle entre un bloc d'image de référence correspondant à chaque information de mouvement dans la première liste d'informations de mouvement et le bloc d'image actuel ; déterminer des secondes informations de mouvement sur la base de la seconde liste d'informations de mouvement, dans lequel une seconde distorsion de modèle entre un bloc d'image de référence correspondant aux secondes informations de mouvement et le bloc d'image actuel est inférieure ou égale à une distorsion de modèle entre un bloc d'image de référence correspondant à chaque information de mouvement dans la seconde liste d'informations de mouvement et le bloc d'image actuel ; et obtenir un bloc d'image reconstruit du bloc d'image actuel sur la base des premières informations de mouvement, des secondes informations de mouvement, et des données encodées du bloc d'image actuel ;

dans lequel l'identifiant de direction de prédiction est obtenu seulement lorsqu'une structure de référence d'une vue dans laquelle le bloc d'image actuel est situé est une structure de référence non à faible retard ;

dans lequel l'unité de reconstruction (1602) est en outre configurée pour :

lorsqu'une valeur de l'identifiant de direction de prédiction indique que les données encodées du bloc d'image actuel sont obtenues en réalisant une prédiction unidirectionnelle sur le bloc d'image actuel sur la base de la première liste d'informations de mouvement du bloc d'image actuel ou de la seconde liste d'informations de mouvement du bloc d'image actuel, déterminer des premières informations de mouvement sur la base de la première liste d'informations de mouvement, dans lequel une première distorsion de modèle entre un bloc d'image de référence correspondant aux premières informations de mouvement et le bloc d'image actuel est inférieure ou égale à une distorsion de modèle entre un bloc d'image de référence correspondant à chaque information de mouvement dans la première liste d'informations de mouvement et le bloc d'image actuel ;

déterminer des secondes informations de mouvement sur la base de la seconde liste d'informations de mouvement, dans lequel une seconde distorsion de modèle entre un bloc d'image de référence correspondant aux secondes informations de mouvement et le bloc d'image actuel est inférieure ou égale à une distorsion de modèle entre un bloc d'image de référence correspondant à chaque information de mouvement dans la seconde liste d'informations de mouvement et le bloc d'image actuel ; et

lorsque la première distorsion de modèle est inférieure ou égale à la seconde distorsion de modèle, obtenir un bloc d'image reconstruit du bloc d'image actuel sur la base des premières informations de mouvement et des données encodées du bloc d'image actuel ; ou

lorsque la première distorsion de modèle est supérieure à la seconde distorsion de modèle, obtenir un bloc d'image reconstruit du bloc d'image actuel sur la base des secondes informations de mouvement et des données encodées du bloc d'image actuel.

4. Appareil d'encodage (1500) sur la base d'appariement de modèles, dans lequel l'appareil comprend :

une unité d'appariement (1501), configurée pour déterminer des premières informations de mouvement sur la base d'une première liste d'informations de mouvement d'un bloc d'image actuel, dans lequel une première distorsion de modèle entre un bloc d'image de référence correspondant aux premières informations de mouvement et le bloc d'image actuel est inférieure ou égale à une distorsion de modèle entre un bloc d'image de référence correspondant à chaque information de mouvement dans la première liste d'informations de mouvement et le bloc d'image actuel ; et

déterminer des secondes informations de mouvement sur la base d'une seconde liste d'informations de mouvement du bloc d'image actuel, dans lequel une seconde distorsion de modèle entre un bloc d'image de référence correspondant aux secondes informations de mouvement et le bloc d'image actuel est inférieure ou égale à une distorsion de modèle entre un bloc d'image de référence correspondant à chaque information de mouvement dans la seconde liste d'informations de mouvement et le bloc d'image actuel ;

une unité de détermination (1502), configurée pour déterminer, sur la base des premières informations de mouvement et des secondes informations de mouvement, un coût de distorsion de taux bidirectionnel de prédiction bidirectionnelle correspondant à des informations de mouvement bidirectionnelles, un premier coût de distorsion de taux de prédiction unidirectionnelle correspondant aux premières informations de mouvement, et un second coût de distorsion de taux de prédiction unidirectionnelle correspondant aux secondes informations de mouvement, dans lequel les informations de mouvement bidirectionnelles comprennent les premières informations de mouvement et les secondes informations de mouvement ; et

une unité de prédiction (1503), configurée pour : lorsque le coût de distorsion de taux bidirectionnel est inférieur ou égal au plus petit du premier coût de distorsion de taux et du second coût de distorsion de taux, réaliser une prédiction bidirectionnelle sur le bloc d'image actuel sur la base des premières informations de mouvement et des secondes informations de mouvement, pour obtenir des données de flux bidirectionnelles du bloc d'image actuel, dans lequel les données de flux bidirectionnelles comprennent des données de flux portant un identifiant de direction de prédiction, et une valeur de l'identifiant de direction de prédiction indique que des données encodées du bloc d'image actuel sont obtenues en réalisant une prédiction bidirectionnelle sur le bloc d'image actuel sur la base de la première liste d'informations de mouvement et de la seconde liste d'informations de mouvement ;

dans lequel l'unité de détermination est configurée pour : déterminer le coût de distorsion de taux bidirectionnel, le premier coût de distorsion de taux, et le second coût de distorsion de taux sur la base des premières informations de mouvement et des secondes informations de mouvement seulement lorsqu'une structure de référence d'une vue dans laquelle le bloc d'image actuel est situé est une structure de référence non à faible retard,

dans lequel l'unité de prédiction (1503) est en outre configurée pour : lorsque le coût de distorsion de taux bidirectionnel est supérieur au plus petit du premier coût de distorsion de taux et du second coût de distorsion de taux et que la première distorsion de modèle est inférieure ou égale à la seconde distorsion de modèle, réaliser une prédiction unidirectionnelle sur le bloc d'image actuel sur la base des premières informations de mouvement, pour obtenir des premières données de flux unidirectionnelles du bloc d'image actuel, où les premières données de flux unidirectionnelles incluent des données de flux portant un identifiant de direction de prédiction, et une valeur de l'identifiant de direction de prédiction indique que les données encodées du bloc d'image actuel sont obtenues en réalisant une prédiction unidirectionnelle sur le bloc d'image actuel sur la base de la première liste d'informations de mouvement ou de la seconde liste d'informations de mouvement ; ou

lorsque le coût de distorsion de taux bidirectionnel est supérieur au plus petit du premier coût de distorsion de taux et du second coût de distorsion de taux et que la première distorsion de modèle est supérieure à la seconde distorsion de modèle, réaliser une prédiction unidirectionnelle sur le bloc d'image actuel sur la base des secondes informations de mouvement, pour obtenir des secondes données de flux unidirectionnelles du bloc d'image actuel, où les secondes données de flux unidirectionnelles incluent des données de flux portant un identifiant de direction de prédiction, et une valeur de l'identifiant de direction de prédiction indique que les données encodées du bloc d'image actuel sont obtenues en réalisant une prédiction unidirectionnelle sur le bloc d'image actuel sur la base de la première liste d'informations de mouvement ou de la seconde liste d'informations de mouvement.

10

Source apparatus
12

Video source
18

↓

Video encoder
20

↓

Output
interface 22

Destination
apparatus 14

Display
apparatus 32

↑

Video decoder
30

↑

Input interface
28

16

FIG. 1

FIG. 2

Video decoder 30

Encoded video bitstream → Entropy decoding unit 80

Syntactic element

Prediction unit 81
- Motion compensation unit 82
- Intra-frame prediction unit 84

Reference picture memory 92 → Decoded video

Quantization coefficient

Inverse quantization unit 86

Inverse transform unit 88

Residual block

90

**FIG. 3**

Determine first motion information based on a first motion information list, where a first template distortion between a reference picture block corresponding to the first motion information and a current picture block is less than or equal to a template distortion between a reference picture block corresponding to each motion information in the first motion information list and the current picture block $\quad$ S401

Determine second motion information based on a second motion information list, where a second template distortion between a reference picture block corresponding to the second motion information and the current picture block is less than or equal to a template distortion between a reference picture block corresponding to each motion information in the second motion information list and the current picture block $\quad$ S402

Determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information $\quad$ S403

When the bidirectional rate distortion cost is less than or equal to the smaller one of the first rate distortion cost and the second rate distortion cost, perform bidirectional prediction on the current picture block based on the first motion information and the second motion information, to obtain bidirectional bitstream data of the current picture block, where the bidirectional bitstream data includes bitstream data carrying a prediction direction identifier $\quad$ S404

FIG. 4

Template of a reference picture block

Template of a current picture block

Current picture block

Reference picture

Current picture

FIG. 5

Obtain a prediction direction identifier and encoded data of a current picture block　S601

When a value of the prediction direction identifier indicates that the encoded data of the current picture block is obtained by performing bidirectional prediction on the current picture block based on a first motion information list of the current picture block and a second motion information list of the current picture block, determine first motion information based on the first motion information list, where a first template distortion between a reference picture block corresponding to the first motion information and the current picture block is less than or equal to a template distortion between a reference picture block corresponding to each motion information in the first motion information list and the current picture block　S602

Determine second motion information based on the second motion information list, where a second template distortion between a reference picture block corresponding to the second motion information and the current picture block is less than or equal to a template distortion between a reference picture block corresponding to each motion information in the second motion information list and the current picture block　S603

Obtain a reconstructed picture block of the current picture block based on the first motion information, the second motion information, and the encoded data of the current picture block　S604

FIG. 6

Perform template matching on a current picture block in reference pictures in a first reference picture list, to obtain first motion information, and perform template matching on the current picture block in reference pictures in a second reference picture list, to obtain second motion information $\diagup$ S701

Determine, based on the first motion information and the second motion information, a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information, where the bidirectional motion information includes the first motion information and the second motion information $\diagup$ S702

When the bidirectional rate distortion cost, the first rate distortion cost, and the second rate distortion cost satisfy a bidirectional rate distortion condition, perform bidirectional prediction on the current picture block based on the first motion information and the second motion information, to obtain bidirectional bitstream data of the current picture block, where the bidirectional bitstream data includes bitstream data carrying a prediction direction identifier, and a value of the prediction direction identifier indicates that encoded data of the current picture block is obtained by performing bidirectional prediction based on the first reference picture list and the second reference picture list $\diagup$ S703

FIG. 7

Obtain first motion information and second motion information — S801

Determine a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information — S802

S803 — Determine whether the bidirectional rate distortion cost, the first rate distortion cost, and the second rate distortion cost satisfy a bidirectional rate distortion condition

Yes — Perform bidirectional prediction on a current picture block based on the first motion information and the second motion information, to obtain bidirectional encoded data of the current picture block — S804

No

S805 — Determine whether the first rate distortion cost and the second rate distortion cost satisfy a first unidirectional rate distortion condition

No — S807 — Perform unidirectional prediction on the current picture block based on the second motion information, to obtain second bitstream data of the current picture block

Yes — S806 — Perform unidirectional prediction on the current picture block based on the first motion information, to obtain first bitstream data of the current picture block

FIG. 8

Obtain first motion information and second motion information — S901

Determine whether a reference structure of a frame in which a current picture block is located is a non-low-delay reference structure or a low-delay reference structure — S902

Low-delay → Determine a bidirectional template distortion caused when bidirectional prediction is performed on the current picture block — S909

Non-low-delay ↓

Determine a bidirectional rate distortion cost of bidirectional prediction corresponding to bidirectional motion information, a first rate distortion cost of unidirectional prediction corresponding to the first motion information, and a second rate distortion cost of unidirectional prediction corresponding to the second motion information — S903

Determine whether the bidirectional template distortion, the first template distortion, and the second template distortion satisfy a bidirectional template distortion condition — S910

Yes → Perform bidirectional prediction on the current picture block based on the first motion information and the second motion information, to obtain encoded data of the current picture block — S911

No ↓ S912

Determine whether the first template distortion and the second template distortion satisfy a first unidirectional template distortion condition

No → TO FIG. 9B

Yes ↓

TO FIG. 9B

TO FIG. 9B

FIG. 9A

CONT. FROM
FIG. 9A

CONT. FROM
FIG. 9A

CONT. FROM
FIG. 9A

S914

Perform
unidirectional
prediction on the
current picture
block based on the
second motion
information, to
obtain the encoded
data of the current
picture block

S905

Perform bidirectional
prediction on the
current picture block
based on the first
motion information
and the second motion
information, to obtain
bidirectional encoded
data of the current
picture block

S913

Perform
unidirectional
prediction on the
current picture
block based on the
first motion
information, to
obtain the encoded
data of the current
picture block

S904

Determine
whether the
bidirectional
rate distortion cost, the first rate
distortion cost, and the second
rate distortion cost satisfy a
bidirectional rate
distortion
condition

Yes

No

S906

Determine whether
the first rate distortion cost
and the second rate distortion
cost satisfy a first
unidirectional rate
distortion condition

No

S908

Perform unidirectional
prediction on the current
picture block based on the
second motion
information, to obtain
second bitstream data of
the current picture block

Yes

S907

Perform unidirectional prediction on the
current picture block based on the first
motion information, to obtain first
bitstream data of the current picture
block

FIG. 9B

Obtain first motion information and
second motion information
S1001

Perform bidirectional prediction on the
current picture block based on the first
motion information and the second motion
information, to obtain encoded data of the
current picture block
S1011

S1002

Determine
whether a reference
structure of a frame in
whicha current picture block is
located is a non-low-delay
reference structure or a
low-delay reference
structure

Low-
delay

S1009

Determine a
bidirectional
template distortion
caused when
bidirectional
prediction is
performed on the
current picture
block

Yes ↑

S1010

Determine
whether the
bidirectional template
distortion, the first template
distortion, and the second template
distortion satisfy a bidirectional
template distortion
condition

Non-low-delay

No ↓

S1012

Determine a bidirectional rate distortion
cost of bidirectional prediction
corresponding to bidirectional motion
information, a first rate distortion cost
of unidirectional prediction
corresponding to the first motion
information, and a second rate
distortion cost of unidirectional
prediction corresponding to the second
motion information
S1003

Determine
whether the first template
distortion and the second template
distortion satisfy a first
unidirectional template
distortion condition

No

Yes

TO FIG. 10B

TO FIG. 10B

TO FIG. 10B

FIG. 10A

EP 3 644 608 B1

CONT. FROM FIG. 10A

S1014
Perform unidirectional prediction on the current picture block based on the second motion information, to obtain the encoded data of the current picture block

CONT. FROM FIG. 10A

S1013
Perform unidirectional prediction on the current picture block based on the first motion information, to obtain the encoded data of the current picture block

CONT. FROM FIG. 10A

S1004
Determine whether the bidirectional rate distortion cost, the first rate distortion cost, and the second rate distortion cost satisfy a bidirectional rate distortion condition

Yes → S1005
Perform bidirectional prediction on the current picture block based on the first motion information and the second motion information, to obtain bidirectional encoded data of the current picture block

No ↓

S1006
Determine whether the first template distortion and the second template distortion satisfy a first unidirectional template distortion condition

No → S1008
Perform unidirectional prediction on the current picture block based on the second motion information, to obtain second bitstream data of the current picture block

Yes → S1007
Perform unidirectional prediction on the current picture block based on the first motion information, to obtain first bitstream data of the current picture block

FIG. 10B

Obtain a prediction direction identifier of a current picture block and encoded data of the current picture block
S1101

When a value of the prediction direction identifier indicates that the encoded data of the current picture block is obtained by performing bidirectional prediction on the current picture block based on reference pictures in a first reference picture list and reference pictures in a second reference picture list, obtain a reconstructed picture block of the current picture block based on the first motion information, the second motion information, and the encoded data of the current picture block
S1102

FIG. 11

Obtain a prediction direction identifier of a current picture block and encoded data of the current picture block
S1201

When a value of the prediction direction identifier indicates that the encoded data of the current picture block is obtained by performing bidirectional prediction on the current picture block based on reference pictures in a first reference picture list and reference pictures in a second reference picture list, obtain a reconstructed picture block of the current picture block based on first motion information, second motion information, and the encoded data of the current picture block
S1202

When a value of the prediction direction identifier indicates that the encoded data of the current picture block is obtained by performing unidirectional prediction on the current picture block based on the reference pictures in the second reference picture list, obtain a reconstructed picture block of the current picture block based on the second motion information and the encoded data of the current picture block
S1204

When a value of the prediction direction identifier indicates that the encoded data of the current picture block is obtained by performing unidirectional prediction on the current picture block based on the reference pictures in the first reference picture list, obtain a reconstructed picture block of the current picture block based on the first motion information and the encoded data of the current picture block
S1203

FIG. 12

Obtain encoded data of a current picture block — S1301

S1302

Determine whether a reference structure of a frame in which the current picture block is located is a non-low-delay reference structure or a low-delay reference structure

Low-delay →

S1307

Determine a bidirectional template distortion caused when bidirectional prediction is performed on the current picture block

Non-low-delay — S1303

Obtain the encoded data of the current picture block

S1304

When a value of the prediction direction identifier indicates that the encoded data of the current picture block is obtained by performing bidirectional prediction on the current picture block based on reference pictures in a first reference picture list and reference pictures in a second reference picture list, obtain a reconstructed picture block of the current picture block based on first motion information, second motion information, and the encoded data of the current picture block

TO FIG. 13B

S1308

Determine whether the bidirectional template distortion, the first template distortion, and the second template distortion satisfy a bidirectional template distortion condition

Yes →

S1309

Obtain a reconstructed picture block of the current picture block based on the first motion information, the second motion information, and the encoded data of the current picture block

↓ No

Determine whether the first template distortion and the second template distortion satisfy a first unidirectional template distortion condition — S1310

No →

TO FIG. 13B

TO FIG. 13B

FIG. 13A

CONT FROM
FIG. 13A

CONT FROM
FIG. 13A

CONT FROM
FIG. 13A

S1312

S1305

When a value of the prediction direction identifier indicates that the encoded data of the current picture block is obtained by performing unidirectional prediction on the current picture block based on the reference pictures in the first reference picture list, obtain a reconstructed picture block of the current picture block based on the first motion information and the encoded data of the current picture block

Yes    S1311

Obtain a reconstructed picture block of the current picture block based on the first motion information and the encoded data of the current picture block

Obtain a reconstructed picture block of the current picture block based on the second motion information and the encoded data of the current picture block

S1306

When a value of the prediction direction identifier indicates that the encoded data of the current picture block is obtained by performing unidirectional prediction on the current picture block based on the reference pictures in the second reference picture list, obtain a reconstructed picture block of the current picture block based on the second motion information and the encoded data of the current picture block

FIG. 13B

EP 3 644 608 B1

| Obtain encoded data of a current picture block | S1401 |

Determine whether a reference structure of a frame in which the current picture block is located is a non-low-delay reference structure or a low-delay reference structure — S1402

**Low-delay** → Determine a bidirectional template distortion caused when bidirectional prediction is performed on the current picture block — S1409

**Non-low-delay** → S1403 Obtain the encoded data of the current picture block

S1404 — When a value of the prediction direction identifier indicates that the encoded data of the current picture block is obtained by performing bidirectional prediction on the current picture block based on reference pictures in a first reference picture list and reference pictures in a second reference picture list, obtain a reconstructed picture block of the current picture block based on first motion information, second motion information, and the encoded data of the current picture block

Determine whether the bidirectional template distortion, the first template distortion, and the second template distortion satisfy a bidirectional template distortion condition — S1410

**Yes** → Obtain a reconstructed picture block of the current picture block based on the first motion information, the second motion information, and the encoded data of the current picture block — S1411

**No** ↓

Determine whether the first template distortion and the second template distortion satisfy a first unidirectional template distortion condition — S1412

**No** →

TO FIG. 14B       TO FIG. 14B       TO FIG. 14B

FIG. 14A

CONT FROM
FIG. 14A

CONT FROM
FIG. 14A

CONT FROM
FIG. 14A

S1405

When a value of the prediction
direction identifier indicates that the
encoded data of the current picture
block is obtained by performing
unidirectional prediction on the current
picture block based on the reference
pictures in the first reference picture
list or the reference pictures in the
second reference picture list, obtain
first motion information and second
motion information

Yes     S1413

Obtain a reconstructed picture block of
the current picture block based on the
first motion information and the encoded
data of the current picture block

S1414

Obtain a reconstructed
picture block of the current
picture block based on the
second motion information
and the encoded data of the
current picture block

S1406

Determine whether
the first template distortion
and the second template distortion
satisfy a first unidirectional
template distortion
condition

No

S1408

Obtain a reconstructed
picture block of the current
picture block based on the
second motion information
and the encoded data of the
current picture block

Yes     S1407

Obtain a reconstructed picture block of
the current picture block based on the
first motion information and the encoded
data of the current picture block

FIG. 14B

*1500*

Matching unit
1501

Determining unit
1502

Prediction unit
1503

FIG. 15

*1600*

Obtaining unit
1601

Reconstruction unit
1602

FIG. 16

*1700*

Matching unit
1701

Determining unit
1702

Prediction unit
1703

FIG. 17

*1800*

Obtaining unit
1801

Reconstruction unit
1803

FIG. 18

1900

Processor
1902

Memory
1904

Bus 1910

Input/output
interface
1906

Communications
interface
1908

FIG. 19

2000

Processor
2002

Memory
2004

Bus 2010

Input/output
interface
2006

Communications
interface
2008

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017036414 A1

- US 8995527 B2

**Non-patent literature cited in the description**

- **CHEN X et al.** EE3: Decoder-Side Motion Vector Refinement Based on Bilateral Template Matching. *5. JVET MEETING; 12-1-2017 - 20-1-2017; GENEVA; (THE JOINT VIDEO EXPLORATION TEAM OF ISO/IEC JTC1/SC29/WG11 AND ITU-T SG. 16,* 03 January 2017, (JVET-E0052, HTTP://PHENIX.INT-EVRY.FR/JVET